(19) Europäisches Patentamt / European Patent Office / Office européen des brevets

(11) **EP 2 054 836 B1**

(12) **FASCICULE DE BREVET EUROPEEN**

(45) Date de publication et mention
de la délivrance du brevet:
**29.05.2019 Bulletin 2019/22**

(21) Numéro de dépôt: **07823308.7**

(22) Date de dépôt: **19.07.2007**

(51) Int Cl.:
**G06K 9/00** *(2006.01)*  **G06K 9/03** *(2006.01)*
**G06K 9/72** *(2006.01)*  **G03G 21/04** *(2006.01)*

(86) Numéro de dépôt international:
**PCT/FR2007/001246**

(87) Numéro de publication internationale:
**WO 2008/009826 (24.01.2008 Gazette 2008/04)**

(54) **PROCEDES ET DISPOSITIFS DE SECURISATION ET D'AUTHENTIFICATION DE DOCUMENTS**

VERFAHREN UND VORRICHTUNG ZUR SICHERUNG UND AUTHENTIFIZIERUNG VON DOKUMENTEN

METHODS AND DEVICES FOR SECURING AND AUTHENTICATING DOCUMENTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.07.2006 FR 0606588**
**26.12.2006 FR 0611402**
**01.06.2007 FR 0703922**

(43) Date de publication de la demande:
**06.05.2009 Bulletin 2009/19**

(73) Titulaire: **Advanced Track And Trace
92504 Rueil-Malmaison (FR)**

(72) Inventeurs:
• **MASSICOT, Jean-Pierre**
  **92504 Rueil Malmaison (FR)**
• **FOUCOU, Alain**
  **92504 Rueil Malmaison (FR)**
• **SAGAN, Zbigniew**
  **92504 Rueil Malmaison (FR)**

(74) Mandataire: **Cornuejols, Georges et al
Cassiopi
230 Avenue de l'Aube Rouge
34170 Castelnau-le-Lez (FR)**

(56) Documents cités:
**EP-A- 1 672 593      WO-A-02/065385
US-A1- 2003 156 733   US-A1- 2004 079 800**

**Description**

La présente invention concerne des procédés et des dispositifs de sécurisation et d'authentification de documents. Elle s'applique, notamment, à la détection de copie de documents, emballages, pièces manufacturées, pièces moulées et cartes, par exemple d'identification ou bancaires, le terme de « document » concernant tout support matériel d'une information.

Un code à barres est une représentation d'information visuelle sur une surface, lisible par une machine. A l'origine, les codes à barres représentaient l'information dans la largeur de lignes parallèles et la largeur d'espaces entre les lignes, ce qui limitait la quantité d'information par unité de surface. Ces codes à barres sont, en conséquence, appelés codes à barres à une dimension ou « 1 D ». Pour augmenter cette quantité d'information, les codes à barres ont évolué vers des motifs de points ou de cercles concentriques.

Les codes à barres sont largement utilisés pour réaliser une capture d'identification automatique rapide et fiable en vue d'un traitement automatique.

Les codes à barres peuvent être lus par des lecteurs optiques portables ou des scanners munis de logiciels adaptés.

Les codes à barres matriciels en deux dimensions, appelés codes à barres 2D (en anglais "2D barcode") sont des supports d'information qui sont généralement constitués d'éléments carrés arrangés dans un périmètre défini, chaque élément ou cellule étant prenant l'une de deux couleurs prédéfinies (par exemple noir et blanc), selon la valeur du symbole binaire à décrire dans cette cellule. Aussi, un code à barre 2D permet de représenter, à surface égale, une bien plus grande quantité d'information qu'un code à barres en une dimension.

Le code à barres 2D est donc souvent préféré au code à barres en une dimension, bien que ses systèmes de lecture soient plus complexes et plus onéreux et permettent une lecture généralement moins souple, en ce qui concerne le positionnement respectif du lecteur et du code à barres.

Ces codes à barres 2D sont largement utilisés pour stocker ou transmettre de l'information sur des objets passifs, par exemple du papier, une carte d'identité, des autocollants, du métal, du verre ou du plastique.

Un système de création de code à barres en 2D reçoit, en entrée, de l'information, généralement une séquence de symboles d'un alphabet prédéfini, par exemple l'alphabet ascii à 128 symboles ou le l'alphabet alphanumérique à 36 symboles ou un alphabet binaire.

En sortie, ce système fournit une image numérique, qui est ensuite imprimée sur un objet que l'on appelle, au sens de la présente invention, un « document ». Un système d'acquisition d'image connecté à une unité de traitement est généralement utilisée pour lire le code à barres et restituer l'information contenue dans le code à barres 2D.

Un code à barre, qu'il soit 1D ou 2D, sert à transmettre de l'information d'un émetteur vers un récepteur. Pour de nombreuses applications, ce processus de transmission de l'information doit se faire de façon sécuritaire, ce qui implique notamment que (1) le message reste confidentiel (on ne veut pas qu'il soit lu par des tiers), (2) que le message puisse être authentifié (on veut s'assurer de sa provenance), (3) que l'intégrité du message puisse être vérifiée (on veut s'assurer que le message n'a pas été modifié ou falsifié), (4) et que le message ne puisse être répudié par l'émetteur (on désire éviter la situation ou l'auteur d'un message nierait l'avoir envoyé). Ces différents niveaux de sécurité peuvent être atteints en encryptant, ou chiffrant, le message, avec une clé de chiffrement connue seulement des personnes ou entités autorisées à lire ou à écrire les messages. Des méthodes de cryptographie symétrique et asymétrique sont généralement combinées, si l'on désire atteindre plusieurs des propriétés de sécurité citées plus haut.

Avec le chiffrement du message, un code à barres 2D permet de conférer à un document physique des propriétés de sécurité qui à l'origine, ont été conçues pour les messages et documents de nature digitale. Ainsi, un code à barres 2D peuvent aider à éviter ou à détecter la falsification de documents. Par exemple, si de l'information textuelle imprimée en clair sur le document est manipulée, par exemple la date d'expiration ou de péremption du document, ou encore les données personnelles d'une carte d'identité, la même information chiffrée dans le code à barres 2D ne peut pas être manipulée aisément en correspondance avec la manipulation de l'information textuelle et le code à barres 2D permet donc de détecter la manipulation de l'information textuelle.

Un code à barres 2D peut aussi être utilisé pour la traçabilité et le suivi de documents. L'origine, la destination et/ou le chemin de distribution du document peuvent être chiffrées dans le code à barres 2D imprimé sur ce document et permettre de vérifier si le document est dans une localisation légitime du chemin de distribution. Le chiffrement de ces informations est dans ce cas essentiel, car sinon elles pourraient être falsifiées ou même sans aucun rapport avec les informations originales.

Grâce à l'utilisation de codes à barres, les méthodes digitales de cryptographie peuvent être appliquées à des documents analogiques (du monde réel) et passifs (ne pouvant réagir à un signal), conférant ainsi à ces documents des propriétés de sécurité qui équivalent aux propriétés de sécurité des documents ou informations digitales.

Cependant, les codes à barres 2D n'offrent aucune protection contre la copie à l'identique, dite copie « servile ». Chaque cellule du code à barres 2D peut normalement être identifiée et lue avec une grande précision et une copie à l'identique de chaque code à barres peut, par conséquent être parfaitement réalisée sans difficulté. Ainsi, la question essentielle de l'authentification de la source (l'origine) du document ne peut être traitée intégralement : un code à barre 2D chiffré ne permet pas de dire si le document qui le contient est un original ou une reproduction du document original.

Aussi, les propriétaires de droits de propriété intellectuelle, notamment des marques, et les organismes qui génèrent des documents officiels et qui ont adopté les codes à barres 2D chiffrés ou d'autres supports d'information, tels que les étiquettes électroniques RFID (acronyme de « radiofréquence identification » pour identification radiofréquence), pour les aider à résoudre leurs problèmes de falsification, doivent cependant utiliser des moyens d'authentification (des « authentifiants ») radicalement différents, tels que des hologrammes, des encres de sécurité, des micro-textes, ou des motifs dits « de guilloche » (lignes fines et courbes interférant avec les systèmes de reproduction numérique, par exemple par effet de moiré), pour éviter ou détecter la contrefaçon servile.

Ces moyens ont cependant leurs limites, qui deviennent de plus en plus flagrantes avec la diffusion chaque jour plus rapide de la technologie, permettant aux contrefacteurs de copier ces authentifiants de mieux en mieux et avec un délai de plus en plus court. Ainsi, les hologrammes sont de mieux en mieux copiés par les contrefacteurs et les utilisateurs terminaux (en anglais « end-users ») n'ont pas les capacités ni la motivation de vérifier ces hologrammes. Les encres de sécurité, les motifs dits "de guilloche » et les micro-textes ne sont pas rentables, sont difficiles à insérer dans les chaînes de production ou d'information des entreprises et n'offrent pas le niveau de sécurité généralement requis. De plus, ils peuvent être difficiles à identifier et n'offrent pas de réelles garanties de sécurité contre les contrefacteurs déterminés.

Lorsque c'est possible, l'information lue est utilisée en combinaison avec une base de données pour déterminer l'authenticité d'un document. Ainsi, on peut, par exemple, indirectement détecter une contrefaçon, si un autre document comportant la même information a été détectée auparavant, ou dans un lieu différent. Notons qu'on suppose ici que chaque document comporte une information unique, ce qui n'est pas possible avec tous les moyens de production de document, notamment l'impression offset. Cependant, l'implémentation de ce type de solution est onéreuse et un accès rapide à la base de données peut ne pas être possible, notamment lorsque le système de lecture est portable. Enfin, même un accès à une base de données ne résout pas le problème de savoir lequel de deux documents apparemment identiques est une contrefaçon.

Les motifs de détection de copies (en anglais « copy détection patterns ») sont un type de motifs d'authentification visibles, qui ont généralement l'apparence du bruit et sont générés à partir d'une clé, de manière pseudo-aléatoire. Ces motifs de détection de copie sont essentiellement utilisés pour distinguer des documents imprimés originaux et des documents imprimés copies des premiers, par exemple par photocopie ou utilisation d'un scanner et d'une imprimante. Cette technique fonctionne en comparant une image captée d'un motif de détection de copie analogique, c'est-à-dire du monde réel, avec une représentation numérique originale de ce motif pour mesurer le degré de différence entre les deux. Le principe sous-jacent est que le degré de différence est plus élevé pour l'image captée d'un motif qui n'a pas été produit à partir d'un motif analogique original, du fait de la dégradation lors de la copie.

Pour véhiculer de l'information, on découpe une image pseudo-aléatoire en bloc et on inverse les couleurs des pixels de chaque bloc qui représente l'une des valeurs binaires en laissant inchangés les pixels de chaque bloc qui représente l'autre des valeurs binaires. D'autres codages de valeurs binaires par des blocs peuvent aussi être utilisés. En pratique, les blocs doivent être assez grands pour que la lecture de la valeur binaire qu'ils portent soit fiable et, en conséquence, la quantité d'information véhiculée par l'image est limitée.

Cette technique possède, néanmoins, des inconvénients. En particulier, elle est optimisée pour la détection de copie mais ne permet pas de véhiculer une grande quantité d'information pour une surface donnée ; or de nombreuses applications impliquent que les documents transportent une information sécurisée importante, alors que des contraintes sévères (esthétique, espace disponible, image de marque, etc.) limitent la surface disponible pour la détection de copie. La mise en oeuvre de cette technique nécessitant une comparaison entre deux images, une mise a l'échelle, coûteuse en nombre de calculs, s'avère nécessaire pour le motif capté. Cette mise à l'échelle peut également entraîner une dégradation de l'image modifiée, ce qui peut dans certaines circonstances avoir pour effet de limiter la détectabilité des copies. De plus, le lecteur doit régénérer et stocker en mémoire le motif de détection de copie durant la phase de comparaison d'image, ce qui est une opération à la fois coûteuse et potentiellement dangereuse, puisqu'un malfaiteur pourrait être en mesure de « lire » la mémoire, ce qui lui permettrait de reproduire à l'identique le motif de détection de copie.

On connaît également le document US2003/0156733 intitulé « *Authenticating printed objects using digital watermarks associated with multidimensionnal quality metrics* » qui enseigne d'imprimer un watermark invisible à l'oeil nu. Une métrique basée sur l'information représentée par le watermark permet de mesurer des erreurs dans les symboles de message d'un code lisible optiquement. Un entraînement basé sur des originaux et des copies est nécessaire pour les distinguer.

La présente invention vise à remédier à la fois aux inconvénients des codes à barres 2D et à ceux des motifs de détection de copies. En particulier, un objectif de la présente invention est de fournir les moyens et les étapes de réalisation d'une matrice d'information qui permet la détection de copies ou de documents contrefaits.

A cet effet, selon un premier aspect, la présente invention vise un procédé de sécurisation selon la revendication 1.

On appelle ici « erreur d'impression » une modification de l'apparence d'une cellule qui modifie l'interprétation de l'information portée par cette cellule, lors d'une analyse affranchie des erreurs de lecture ou capture, par exemple microscopique. On note que si les cellules ont souvent à l'origine des valeurs binaires, les images capturées sont fréquemment en niveau de gris, et on a donc une valeur non-binaire associée à une cellule ; cette dernière peut par exemple être interprétée en tant que probabilité sur la valeur binaire d'origine de la cellule.

En effet, les inventeurs ont découvert que, lorsque la proportion d'erreur d'impression est supérieure à une valeur prédéterminée, la copie de la forme effectuée en mettant en oeuvre les mêmes moyens d'impression que l'impression originale, ou des moyens analogues, provoque nécessairement une proportion supplémentaire d'erreurs rendant détectable cette copie.

Les inventeurs ont aussi découvert qu'en fonction de contraintes données (telle qu'une contrainte de taille physique ou de nombre de cellules de la MIS), il existe une proportion d'erreurs d'impression optimale en terme de capacité de détection de copie. Cette proportion d'erreur d'impression optimale correspond à une taille de cellule ou une résolution d'impression donnée fonction du moyen d'impression.

Ainsi, contrairement à un préjugé, la plus haute résolution d'impression n'est pas nécessairement, et est même rarement, une résolution donnant le meilleur résultat en terme de capacité de détection de copie.

Il convient, ici de différencier la résolution d'impression native des moyens d'impression et la résolution d'impression des cellules qui sont constituées, chacune, en général, d'une pluralité de points d'encre, chaque point d'encre correspondant à la résolution d'impression native. Formellement, on ne peut pas faire varier la résolution d'impression d'une MIS. En effet, la majorité des moyens d'impressions impriment en binaire (présence ou absence d'un point d'encre) à une résolution fixée, et les niveaux de gris ou de couleur sont simulés par les différentes techniques du tramage. Dans le cas de l'impression offset, cette résolution « native » est déterminée par la résolution de la plaque, qui est par exemple de 2.400 points/pouce (2.400 dpi). Ainsi, une image à niveau de gris à imprimer à 300 pixels/pouce (300 dpi) serait en réalité imprimée en binaire à 2.400 dpi, chaque pixel correspondant approximativement à 8 x 8 points de la trame.

Si on ne peut, généralement, pas varier la résolution d'impression, on peut par contre faire varier la taille en pixels des cellules de la MIS, de façon à ce qu'une cellule soit représentée par plusieurs points d'impression. Ainsi, on peut par exemple représenter une cellule par un bloc carré de 1 x 1, 2 x 2, 3 x 3, 4 x 4 ou 5 x 5 pixels (des blocs non-carrés sont également possibles), correspondant à des résolutions de respectivement 2.400, 1.200, 800, 600 et 480 cellules/pouce.

Selon des caractéristiques particulières, au cours de l'étape de détermination des caractéristiques physiques de cellules, on détermine la dimension des cellules à imprimer.

Selon des caractéristiques particulières, au cours de l'étape de détermination des caractéristiques physiques de cellules, on détermine une sous-partie des cellules, sous-partie qui est d'une couleur uniforme et variable pour représenter différentes valeurs d'une information, ladite sous-partie étant strictement inférieure à ladite cellule

Selon des caractéristiques particulières, au cours de l'étape d'impression, on met en oeuvre la résolution native des moyens d'impression effectuant ladite impression.

Selon des caractéristiques particulières, le procédé de sécurisation de document tel que succinctement exposé ci-dessus comporte, en outre, une étape de génération de la forme en une matrice d'informations numérique représentative d'un message comportant des redondances.

En effet, l'inventeur a découvert que toute copie ou impression d'une information matricielle imprimée suffisamment petit présente une quantité d'erreur qui croît avec la finesse de l'impression et que l'insertion de redondances, par exemple de codes de correction d'erreurs dans l'information matricielle permet de déterminer s'il s'agit d'une copie ou d'un original : l'insertion de redondances permet de lire le message sur un canal bruité et/ou de mesurer la quantité d'erreur du message encodé, permettant par la même de déterminer s'il s'agit d'une copie ou d'un original.

On observe que les dégradations dues à l'impression ou à la copie dépendent de nombreux facteurs, tels que la qualité de l'impression, du support et de la résolution d'image mise en oeuvre lors de l'étape de marquage ou de la capture d'image effectuée pour réaliser une copie.

Selon des caractéristiques particulières, au cours de l'étape de génération, lesdites redondances comportent des codes de correction d'erreurs.

Grâce à ces dispositions, le contenu de la marque permet de corriger les erreurs dues à l'étape de marquage et de récupérer le message d'origine.

Selon des caractéristiques particulières, au cours de l'étape de génération, lesdites redondances comportent des codes de détection d'erreurs.

Grâce à chacune de ces dispositions, le nombre d'erreurs affectant la marque peut être déterminé et servir de base à la détection d'une copie de ladite marque.

Selon des caractéristiques particulières, au cours de l'étape de génération d'une matrice d'informations, ladite matrice d'information est représentative, au niveau de chaque cellule élémentaire et indépendamment des cellules élémentaires voisines, du message comportant les redondances.

On augmente ainsi la quantité d'information véhiculée par la marque, par rapport à la représentation de valeurs par des blocs de points.

Selon des caractéristiques particulières, au cours de l'étape de marquage, on génère au moins cinq pour cent d'erreurs ponctuelles et la mise en oeuvre des redondances permet de compter lesdites erreurs ponctuelles.

En effet, l'inventeur a découvert qu'un taux élevé d'erreur dès l'étape de marquage était plus facile à mettre en oeuvre pour discriminer une copie de la marque, copie dont le taux d'erreur est une fonction du taux d'erreur de la marque initiale.

Selon des caractéristiques particulières, au cours de l'étape de génération de la matrice d'informations, les redondances sont adaptées à permettre la détection d'erreurs de marquage ponctuelles dans la marque réalisée au cours de l'étape de marquage.

Selon des caractéristiques particulières, au cours de l'étape de marquage, on ajoute à la marque de la matrice d'informations, une marque complémentaire robuste portant un message.

Grâce à ces dispositions, le message porté par la marque complémentaire est plus robuste aux dégradations provoquées par une copie et peut donc être lu même lorsque ces dégradations sont importantes, par exemple après plusieurs copies successives.

Selon des caractéristiques particulières, au cours de l'étape de génération de la matrice d'informations, on chiffre une représentation dudit message avec une clé de chiffrement.

Selon des caractéristiques particulières, au cours de l'étape de génération de la matrice d'informations, on encode une représentation dudit message pour générer lesdites redondances.

Selon des caractéristiques particulières, au cours de l'étape de génération de la matrice d'informations, on réplique une représentation dudit message pour former plusieurs exemplaires identiques.

On crée ainsi, très simplement, des redondances permettant la détection d'erreurs lors de la lecture de la marque.

Selon des caractéristiques particulières, au cours de l'étape de génération de la matrice d'informations, on permute des positions d'éléments de représentation dudit message en fonction d'une clé secrète.

Selon des caractéristiques particulières, au cours de l'étape de génération de la matrice d'informations, on permute partiellement des positions d'éléments de représentation dudit message en fonction d'une clé secrète différente de la clé secrète de la première permutation.

Selon des caractéristiques particulières, au cours de l'étape de génération de la matrice d'informations, on applique, à au moins une partie des éléments d'une représentation dudit message, une fonction de substitution de valeur dépendant, d'une part, de la valeur de l'élément et, d'autre part, de la valeur d'un élément d'une clé secrète.

Selon des caractéristiques particulières, au cours de l'étape de génération de la matrice d'informations, on applique, à au moins une partie des éléments d'une représentation dudit message, une fonction de substitution partielle de valeur dépendant, d'une part, de la valeur de l'élément et, d'autre part, de la valeur d'un élément d'une clé secrète différente de la clé secrète de la première fonction de substitution.

Selon des caractéristiques particulières, ladite fonction de substitution substitue les valeurs par couples associés à des cellules voisines dans ladite forme.

Grâce à chacune de ces dispositions, le message est doté de sécurités contre une lecture par un tiers non autorisé.

Selon des caractéristiques particulières, au cours de l'étape de génération de la matrice d'informations, on met en oeuvre au moins une clé telle que la clé associée nécessaire pour récupérer le message soit différente.

Ainsi, la clé utilisée pour déterminer l'authenticité du document ou produit possédant une marque représentative de ladite matrice d'informations ne peut pas être utilisée pour générer une autre matrice d'informations contenant un message différent.

Selon des caractéristiques particulières, au cours de l'étape de génération de la matrice d'informations, on génère une matrice d'information numérique représentative d'au moins deux messages dotés de moyens de sécurité différents.

Grâce à ces dispositions, des personnes ou systèmes informatiques différents peuvent disposer d'autorisation et de moyens de lecture différents, par exemple pour séparer les fonctions d'authentification et les fonctions de détermination de l'origine de produits contrefaits.

Selon des caractéristiques particulières, l'un desdits messages représente des informations nécessaires pour, à la lecture de la matrice d'informations, déterminer l'autre message et/ou détecter les erreurs de l'autre message.

Selon des caractéristiques particulières, l'un desdits messages représente au moins une clé nécessaire à la lecture de l'autre message.

Selon des caractéristiques particulières, au cours de l'étape de génération de la matrice d'informations, on ajoute à une représentation du message, un hachage dudit message.

Selon un deuxième aspect, la présente invention vise un dispositif selon la revendication 15.

Les avantages, buts et caractéristiques particulières de ce dispositif objet du deuxième aspect de la présente invention étant similaires à ceux du procédé objet du premier aspect de la présente invention, ils ne sont pas rappelés ici.

Selon un troisième aspect, la présente invention vise un programme d'ordinateur comportant des instructions lisibles par un ordinateur et implémentant le procédé tel que succinctement exposé ci-dessus.

Selon un quatrième aspect, la présente invention vise un support d'information lisible par un ordinateur et comportant des instructions lisibles par un ordinateur et implémentant le procédé tel que succinctement exposé ci-dessus.

La présente invention concerne aussi un procédé et un dispositif de sécurisation de documents et de produits basés sur des matrices d'information sécurisées améliorées. Elle s'applique, en particulier à l'identification et à l'authentification de documents et de produits. L'invention s'applique, notamment, à l'identification unique, à l'authentification d'originaux et à la détection de copies de documents, emballages, pièces manufacturées, pièces moulées et cartes, par exemple d'identification ou bancaires.

Il existe de nombreuses façons de protéger un document, soit par des moyens coûteux (hologramme, encre de sécurité, etc.) car ils nécessitent des consommables, soit par des moyens numériques qui sont, en général, plus économiques. Les moyens numériques offrent l'avantage supplémentaire qu'ils sont particulièrement bien adaptés au traitement numérique des données, et on peut ainsi utiliser des détecteurs peu coûteux, généralement composés d'un processeur attaché à un outil de capture d'image ou de signal (scanner,etc.), et d'une interface avec un opérateur.

Pour sécuriser un document par des moyens numériques, on peut recourir à l'utilisation des codes numériques authentifiants (« CNA »). Par exemple on peut y imprimer une matrice d'information sécurisée (« MIS »), ou un motif de détection de copie (« MDC »). Les codes numériques authentifiants permettent également de contenir de l'information chiffrée et ainsi de tracer les documents ou produit.

Un CNA est une image numérique qui, une fois imprimée sur un document, permet à la fois de le tracer et de détecter toute copie de ce dernier. A la différence d'un code barre 2D qui est un simple conteneur d'information copiable à l'identique, toute copie d'un CNA entraîne une dégradation de ce dernier. Cette dégradation est mesurable par des moyens informatiques à partir d'une image capturée et permet au lecteur de déterminer si le CNA est un original ou une copie. En outre, l'information contenue dans un CNA est en général chiffrée et/ou brouillée.

Les CNA peuvent être invisibles ou du moins difficiles à percevoir, par exemple un filigrane numérique fragile à la copie intégré à l'image, ou encore un motif de points pseudo-aléatoirement dispersés, également appelé « MSMA ». Ce type de CNA est typiquement étalé sur une grande surface et est peu dense en information. Ils peuvent aussi être denses en information et concentrés sur une petite surface, par exemple les MIS et MDC. Souvent, les MIS et MDC sont intégrés dans le fichier numérique du document ou produit, et imprimés en même temps que ce dernier.

Les MDC sont des motifs bruités générés pseudo-aléatoirement à partir d'une clé cryptographique, et la détermination des copies se fait par comparaison et mesure de similitude entre l'image numérique d'origine, et l'image capturée. Un MDC peut également contenir une petite quantité d'information.

Les MIS sont des matrices d'informations conçues pour contenir une grande quantité d'information de manière chiffrée, cette information étant robuste à des taux d'erreur élevés lors de la lecture. La détermination des copies se fait par une mesure du taux d'erreur du message.

Les MIS et MDC sont souvent constituées de la moitié de pixels « noirs » (ou de couleurs) et de la moitié de pixels « blancs » ou non imprimés. Or, il arrive que, pour certains types d'impression, ou certains types de papiers, ou encore pour certains réglages de la machine d'impression, la MIS imprimée soit trop chargée en encre. Or une charge d'encre excessive de la MIS peut diminuer significativement sa lisibilité, voire même sa capacité à être distinguée d'une de ses copies. Il est donc fortement souhaitable d'éviter cette charge d'encre excessive, mais ceci n'est pas toujours aisé en pratique, car la charge d'encre est rarement une donnée complètement maîtrisée par l'imprimeur; dans certains cas c'est même une donnée qui lui est imposée par le client. Il serait ainsi très avantageux d'avoir des MIS dont les propriétés sont moins sensibles à la charge d'encre appliquée au papier.

Il s'avère que les MIS sont en général plus sensibles à une charge d'encre élevée qu'à une charge d'encre faible. En effet, lorsque la charge d'encre est faible, les cellules noires (ou contenant de la couleur) sont en général toujours imprimées, et ainsi la lecture de la matrice s'en trouve peu affectée. Lorsque la charge d'encre est trop élevée, l'encre tend à saturer le substrat, et les zones blanches se trouvent en quelque sorte « inondées » par l'encre des zones noires environnantes. Un effet similaire est observable pour des marques par percussion, gravure laser, etc.

Les MIS sont, en principe, conçus en fonction d'une impression à une résolution donnée, par exemple 600 ppi (points par pouce). Or il s'avère que, selon le contexte d'impression, la résolution d'impression optimale, soit celle permettant de distinguer au mieux les originaux des copies, varie : plus la qualité d'impression est élevée, plus la résolution d'impression des MIS, doit augmenter, ou de manière équivalente la taille des cellules des MIS doit diminuer.

Les cinquième et sixième aspects de la présente invention visent à remédier à ces inconvénients.

A cet effet, selon un cinquième aspect, la présente invention vise un procédé de sécurisation d'un document comportant une étape d'impression d'une forme composée de cellules représentatives d'une information, l'apparence de chaque cellule étant variable en fonction de l'information représentée par ladite cellule, ladite forme étant adaptée à permettre la détection d'une copie modifiant l'apparence d'une pluralité desdites cellules, caractérisé en ce qu'il comporte :

- une étape de détermination d'une sous-partie des cellules, sous-partie qui est d'une couleur uniforme et variable pour représenter différentes valeurs d'une information, ladite sous-partie étant strictement inférieure à ladite cellule et
- une étape de représentation, dans ladite forme, d'une information en faisant varier l'apparence de sous-parties de cellules.

Grâce à ces dispositions, même si, au cours de l'impression, la quantité d'encre est élevée, dans la mesure seulement une partie limitée de la cellule est encrée, le risque que l'encre de cellules se répande sur une autre cellule et en change l'apparence est réduit et la capacité à détecter une copie est améliorée.

Ainsi, afin de s'assurer que les MIS puissent détecter les copies quelles que soient les conditions d'impression, on met en oeuvre une MIS dont au moins une partie est conçue de pour les conditions d'impression avec excès de charge d'encre. Ainsi les propriétés anti-copie de la MIS sont peu sensibles à la charge d'encre utilisée lors de l'impression.

On observe que le choix de la sous-partie à imprimer dans chaque cellule est préférentiellement couplé au choix de la dimension des cellules, exposé par ailleurs, pour obtenir une proportion d'erreur favorable à la détection de copies.

Selon des caractéristiques particulières, le procédé tel que succinctement exposé ci-dessus comporte une étape de définition de plusieurs formes non superposées, les dimensions des cellules étant différentes entre au moins deux formes différentes.

Grâce à ces dispositions, la même MIS peut être imprimée sur différents types de support ou avec différents moyens d'impression n'ayant pas la même résolution et, néanmoins, conserver ses propriétés de détection de copies.

Selon des caractéristiques particulières, le procédé tel que succinctement exposé ci-dessus comporte une étape de détermination de plusieurs formes non superposées, et, au cours de l'étape de détermination d'une sous-partie, ladite sous-partie est différente pour au moins deux formes différentes.

Grâce à ces dispositions, on obtient des MIS robustes à une gamme étendue de charges d'encre puisque plusieurs morceaux de cette MIS, morceaux correspondants aux formes exposées ci-dessus, sont adaptées à différentes charges d'encre. Une MIS peut ainsi contenir plusieurs zones où les densités, c'est-à-dire les ratios de surface de la sous-partie sur la surface de la cellule, des cellules varient, de façon à ce qu'au moins une des densités soit adéquate par rapport à la charge d'encre utilisée à l'impression. Dans ce cas, la lecture peut se faire en privilégiant les zones ayant la charge d'encre la plus adéquate.

Selon des caractéristiques particulières, chaque cellule est carrée et ladite sous-partie de la cellule est, elle-aussi, carrée.

Par exemple, si la cellule fait 4 x 4 pixels, on peut choisir d'en imprimer qu'une sous-partie carrée de 3 x 3 pixels, ou de 2 x 2 pixels. On diminue alors la densité d'encre par un rapport de 9/16 resp. ¼ (on note que les cellules blanches ne sont pas affectées). Selon un autre exemple, si la cellule fait 3 x 3 pixels, on imprime une sous-partie carrée de 2 x 2 ou 1 x 1 pixels.

Selon des caractéristiques particulières, ladite sous-partie présente une forme en croix. Par exemple, cette croix est constituée de cinq pixels imprimés sur neuf.

Selon des caractéristiques particulières, le procédé objet de la présente invention, tel que succinctement exposé ci-dessus comporte une étape de détermination de dimensions des cellules à imprimer d'au moins une forme, en fonction des conditions d'impression, de telle manière que la proportion de cellules imprimées avec une erreur d'impression provenant exclusivement des aléas d'impression soit supérieure à une première valeur prédéterminée et inférieure à une deuxième valeur prédéterminée.

Les caractéristiques particulières du procédé objet du premier aspect de la présente invention étant aussi des caractéristiques particulières du procédé objet du cinquième aspect de la présente invention, ils ne sont pas rappelés ici.

Selon un sixième aspect, la présente invention vise une forme imprimée composée de cellules représentatives d'une information, l'apparence de chaque cellule étant variable en fonction de l'information représentée par ladite cellule, ladite forme étant adaptée à permettre la détection d'une copie modifiant l'apparence d'une pluralité desdites cellules, caractérisé en ce que les cellules comportent une sous-partie qui est d'une couleur uniforme et variable pour représenter différentes valeurs d'une information, ladite sous-partie étant strictement inférieure à ladite cellule, l'apparence des sous-parties de cellules représentant ladite information.

Selon un septième aspect, la présente invention vise un dispositif de sécurisation d'un document comportant un moyen d'impression d'une forme composée de cellules représentatives d'une information, l'apparence de chaque cellule étant variable en fonction de l'information représentée par ladite cellule, ladite forme étant adaptée à permettre la détection d'une copie modifiant l'apparence d'une pluralité desdites cellules, caractérisé en ce qu'il comporte :

- un moyen de détermination d'une sous-partie des cellules, sous-partie qui est d'une couleur uniforme et variable pour représenter différentes valeurs d'une information, ladite sous-partie étant strictement inférieure à ladite cellule et
- un moyen de représentation d'une information en faisant varier l'apparence de sous-parties de cellules.

Les avantages, buts et caractéristiques particulières de cette forme imprimée objet du sixième aspect de la présente invention et du dispositif objet du septième aspect de la présente invention étant similaires à ceux du procédé objet du cinquième aspect de la présente invention, ils ne sont pas rappelés ici.

Pour prendre une décision sur l'authenticité d'un document en fonction d'erreurs portées par des cellules d'une forme, il est connu de décoder le message porté par la forme ou de reconstituer l'image de ladite forme. Cependant, dans le deuxième cas, il est nécessaire de prévoir, dans le dispositif de détection de copie, un moyen de restaurer la forme numérique originale, ce qui représente une faiblesse de sécurité grave puisqu'un contrefacteur qui se serait procuré ce dispositif peut ainsi générer des formes originales sans erreur. Dans le premier cas, si le marquage a fortement dégradé le message (ce qui est notamment le cas des copies), ou si la quantité d'information véhiculée est élevée, il est possible que le message ne soit pas lisible, auquel cas on ne peut mesurer un taux d'erreur. De plus, la lecture du message porté par la forme, par le dispositif de détection de copie, représente, de nouveau une faiblesse de sécurité puisqu'un contrefacteur qui se serait procuré ce dispositif pourrait utiliser ce message.

De plus, la détermination de l'authenticité de la forme impose une forte consommation de ressources de mémoire, de traitement et/ou de communication avec un serveur d'authentification lointain.

Le huitième aspect de la présente invention vise à remédier à ces inconvénients.

A cet effet, selon son huitième aspect, la présente invention vise un procédé de détermination de l'authenticité d'une forme imprimée sur un document, caractérisé en ce qu'il comporte :

- une étape de détermination de pluralités de cellules de ladite forme imprimée, les cellules de chaque pluralité de cellules correspondant à la même information,
- une étape de capture d'une image de ladite forme,
- pour chaque pluralité de cellules de ladite forme, une étape de détermination d'une proportion des cellules de ladite pluralité de cellules qui ne représentent pas la même valeur d'information que les autres cellules de ladite pluralité de cellules et
- une étape de détermination d'authenticité de ladite forme en fonction de ladite proportion pour au moins une dite pluralité de cellules.

Ainsi, grâce à la mise en oeuvre du huitième aspect de la présente invention, il n'est pas nécessaire de reconstituer le message répliqué d'origine, ni même de décoder le message et il n'est pas nécessaire qu'il y ait un message signifiant, l'information pouvant être aléatoire. On mesure, en effet, la quantité d'erreur d'un message en exploitant certaines propriétés du message lui-même, au moment de l'estimation du message encodé.

On note qu'il est, cependant, nécessaire de connaître les groupements de cellules qui représentent la valeur d'information, en générale binaire.

Selon des caractéristiques particulières, au cours de l'étape de détermination de proportion, on détermine une valeur moyenne des informations portées par les différentes cellules d'une même pluralité de cellules.

Selon des caractéristiques particulières, au cours de l'étape de détermination de proportion, on détermine ladite moyenne en pondérant la valeur d'information portée par chaque cellule en fonction de l'apparence de ladite cellule.

Ainsi, on associe un poids, ou coefficient, indiquant la probabilité que chaque bit estimé du message encodé soit correctement estimé. Ce poids est utilisé pour pondérer les contributions de chaque cellule en fonction de la probabilité que le bit associé soit correctement estimé. Une façon simple d'implémenter cette approche consiste à ne pas binariser les valeurs lues en chaque cellule d'une pluralité de cellules.

Selon des caractéristiques particulières, le procédé tel que succinctement exposé ci-dessus comporte une étape de détermination de la valeur moyenne, pour toute la forme, des valeurs représentées par les cellules et une étape de compensation de la différence entre ladite valeur moyenne et une valeur moyenne attendue.

On note que plus le message est bruité, plus il y a de risque que le bit estimé du message encodé soit erroné. Ceci entraîne un biais tel que la mesure de la quantité d'erreurs sous-estime la quantité d'erreurs réelle. Ce biais est estimé statistiquement et corrigé lors de la mesure de la quantité d'erreur.

Selon des caractéristiques particulières, au cours de l'étape de détermination d'une proportion des cellules de ladite pluralité de cellules qui ne représentent pas la même valeur d'information que les autres cellules de ladite pluralité de cellules, on met en oeuvre une clé cryptographique modifiant la valeur d'information représentée par au moins une cellule de l'image de la forme pour fournir la valeur d'information de ladite cellule.

Selon des caractéristiques particulières, au cours de l'étape de détermination d'une proportion des cellules de ladite pluralité de cellules qui ne représentent pas la même valeur d'information que les autres cellules de ladite pluralité de cellules, on met en oeuvre une probabilité de présence d'une valeur de point d'image pour au moins un point de l'image de la forme.

La lecture d'un CNA nécessite un positionnement précis de ce dernier dans l'image captée, afin que la valeur de chacune des cellules qui le composent soit restituée avec la plus grande fidélité possible compte tenu des dégradations de signal causées par l'impression et éventuellement par la capture. Or, les images captées contiennent souvent des symboles qui peuvent interférer avec l'étape de positionnement.

La localisation d'une MIS peut être rendue plus difficile par les conditions de capture (mauvais éclairage, flou, etc.), ainsi que par l'orientation arbitraire de positionnement, sur 360 degrés.

Contrairement à d'autres symboles de type code à barres 2D qui varient relativement peu sur différents types d'impression, les caractéristiques (par exemple de texture) des CNA sont extrêmement variables. Ainsi, les méthodes de l'art antérieur, telles que celle présentée dans US 6,775,409 ne sont pas applicables. En effet, cette dernière méthode est basée sur la directionnalité du gradient de luminance, c'est-à-dire sa variation en fonction de la direction de sa détermination, pour la détection des codes. Or, pour les MIS, le gradient ne possède pas de direction particulière.

Certaines méthodes de localisation des CNA peuvent bénéficier du fait que ces derniers apparaissent sous forme carrée ou rectangulaire, ce qui engendre un contraste marqué sur des segments continus, qui peuvent être détectés et utilisés par des méthodes standard de traitement d'image. Or, dans certains cas, ces méthodes échouent et, d'autre part, on souhaite pouvoir utiliser des CNA qui ne soient pas forcément (ou ne s'inscrivent pas forcément dans) un carré ou un rectangle.

D'une manière générale, la surface imprimée d'un CNA contient une densité d'encre élevée. Or, si l'exploitation de la mesure de densité d'encre est utile, elle ne peut être le seul critère : en effet, les Datamatrix (marque déposée) ou autres codes à barres qui peuvent être adjacents aux CNA ont une densité d'encre encore plus élevée. Ce seul critère n'est donc pas suffisant.

Il a été suggéré, dans le brevet EP 1 801 692, d'exploiter l'entropie élevée des MDC afin de déterminer les portions d'images appartenant aux MDC. Or, si les MDC, avant impression, ont une entropie effectivement élevée, cette entropie peut être fortement altérée par l'impression, la capture, et par la méthode de calcul utilisée. Par exemple, une simple mesure d'entropie basée sur l'étalement d'histogramme des valeurs de pixels de chaque zone peut parfois mener à des indices plus élevés sur des régions peu riches en contenu, qui, à priori, devraient avoir une faible entropie : cela peut être dû, par exemple, à des artefacts de compression JPEG, ou encore à la texture du papier qui est représentée dans l'image capturée, ou encore à des effets de réflexion sur le substrat. On voit donc que le critère d'entropie est également insuffisant.

Plus généralement, les méthodes de mesure ou de caractérisation de textures paraissent plus appropriées, afin de caractériser, à la fois, les propriétés d'intensité ou les relations spatiales spécifiques aux textures des CNA. Par exemple, dans « Statistical and structural approaches to texture », Haralick décrit de nombreuses mesures de caractérisation de textures, qui peuvent être combinées de façon à décrire de manière unique un grand nombre de textures.

Cependant, les CNA peuvent avoir des textures qui varient grandement selon le type d'impression ou de capture, et il n'est, en général, pas possible ou, du moins, peu pratique, de fournir les caractéristiques de texture au module de localisation des CNA, d'autant plus que celles-ci devront être ajustées en fonction des effets spécifiques à l'outil de capture sur les mesures de texture.

Le neuvième aspect de la présente invention vise à remédier à ces inconvénients.

A cet effet, selon son neuvième aspect, la présente invention vise un procédé de détermination de position d'une forme, caractérisé en ce qu'il comporte :

- une étape de division d'une image de la forme en zones de telle manière que la surface de la forme corresponde à un nombre de zones supérieur à une valeur prédéterminée ;
- une étape de mesure, pour chaque zone, d'un indice de texture ;
- une étape de détermination d'un seuil de détection d'une partie de la forme ;
- une étape de détermination de zones appartenant à ladite forme par comparaison de l'indice de texture d'une zone et du seuil de détection correspondant ;
- une étape de détermination d'amas continus de zones appartenant à ladite forme ;
- une étape de détermination de contour d'au moins un amas et
- une étape de mise en correspondance du contour d'au moins un amas avec le contour de ladite forme.

Ainsi, pour localiser une forme de manière fiable, la présente invention met en oeuvre une multiplicité de critères.

Selon des caractéristiques particulières, l'indice de texture est représentatif de la charge d'encre d'impression de la forme.

Selon des caractéristiques particulières, l'indice de texture est représentatif de la dynamique locale. On note que la dynamique locale peut recouvrir différentes grandeurs physiques telles que la fréquence ou le taux de variation locale, ou la somme des gradients, par exemple.

Selon des caractéristiques particulières, au cours de l'étape de détermination d'un seuil de détection, ledit seuil est variable en fonction de la position de la zone dans l'image.

Selon des caractéristiques particulières, au cours de l'étape de détection de zones appartenant à ladite forme, on met en oeuvre au moins une dilatation et/ou une érosion.

Selon des caractéristiques particulières, ladite forme est rectangulaire et, au cours de l'étape de mise en correspondance, on détermine deux couples de points formés de points les plus éloignés et on détermine si les segments de droites formés par ces couples présentent un ratio de longueurs inclus dans un intervalle de valeurs prédéterminé.

Selon des caractéristiques particulières, ladite forme est rectangulaire et, au cours de l'étape de mise en correspondance, on détermine deux couples de points formés de points les plus éloignés et on détermine si les segments de droites formés par ces couples présentent un angle inclus dans un intervalle prédéterminé.

Selon des caractéristiques particulières, ladite forme est rectangulaire et, au cours de l'étape de mise en correspondance, on applique une transformée de Hough.

Selon son dixième aspect, la présente invention vise un dispositif de détermination de position d'une forme, caractérisé en ce qu'il comporte :

- un moyen de division d'une image de la forme en zones de telle manière que la surface de la forme corresponde à un nombre de zones supérieur à une valeur prédéterminée ;
- un moyen de mesure, pour chaque zone, d'un indice de texture ;
- un moyen de détermination d'un seuil de détection d'une partie de la forme ;
- un moyen de détermination de zones appartenant à ladite forme par comparaison de l'indice de texture d'une zone et du seuil de détection correspondant ;
- un moyen de détermination d'amas continus de zones appartenant à ladite forme ;
- un moyen de détermination de contour d'au moins un amas et
- un moyen de mise en correspondance du contour d'au moins un amas avec le contour de ladite forme.

Les avantages, buts et caractéristiques particulières de ce dispositif objet du dixième aspect de la présente invention étant similaires à ceux du procédé objet du neuvième aspect de la présente invention, ils ne sont pas rappelés ici.

Selon un onzième aspect, la présente invention vise un procédé de génération d'une forme anti-copie, caractérisé en ce qu'il comporte :

- une étape de détermination d'au moins une caractéristique d'impression de ladite forme,
- une étape d'incorporation, dans ladite forme, d'un message représentatif de ladite caractéristique d'impression et
- une étape d'impression de ladite forme, en mettant en oeuvre ladite caractéristique d'impression.

En effet, les inventeurs ont découvert que, si elles sont connues, les caractéristiques d'impression telles que le moyen d'impression, le substrat utilisé, et d'autres paramètres d'impression (tels que la taille de la trame en offset) peuvent être utiles à la mise en oeuvre de la forme anti-copie, notamment pour l'authentifier.

Selon des caractéristiques particulières, au moins une dite caractéristique d'impression est représentative d'un type de substrat sur lequel ladite forme est imprimée.

Par exemple, on spécifie si le substrat est du papier, du carton, de l'aluminium, du PVC, du verre, etc.

Selon des caractéristiques particulières, au moins une dite caractéristique d'impression est représentative du moyen d'impression mise en oeuvre.

Par exemple, on spécifie si le moyen d'impression fonctionne en offset, en typographie, sérigraphie, héliographie, etc.

Selon des caractéristiques particulières, au moins une dite caractéristique d'impression est représentative d'une densité de charge d'encre mise en oeuvre au cours de l'impression.

Selon des caractéristiques particulières, au cours de l'étape de détermination d'au moins une caractéristique d'impression, on capture une image d'un motif imprimé avec des moyens d'impression mis en oeuvre au cours de l'étape d'impression et on détermine automatiquement, par traitement de ladite image, la valeur de ladite caractéristique.

Selon un douzième aspect, la présente invention vise un procédé de détermination d'authenticité d'une forme anti-copie imprimée, caractérisé en ce qu'il comporte :

- une étape de capture d'une image de ladite forme anti-copie imprimée,
- une étape de lecture, dans ladite image, d'une information représentative d'au moins une caractéristique d'impression de ladite forme et
- une étape de détermination d'authenticité de ladite forme anti-copie imprimée en mettant en oeuvre ladite information représentative d'au moins une caractéristique d'impression de ladite forme.

Selon un treizième aspect, la présente invention vise un dispositif de génération d'une forme anti-copie, caractérisé en ce qu'il comporte :

- un moyen de détermination d'au moins une caractéristique d'impression de ladite forme,
- un moyen d'incorporation, dans ladite forme, d'un message représentatif de ladite caractéristique d'impression et

- un moyen d'impression de ladite forme, en mettant en oeuvre ladite caractéristique d'impression.

Selon un quatorzième aspect, la présente invention vise un dispositif de détermination d'authenticité d'une forme anti-copie imprimée, caractérisé en ce qu'il comporte :

- un moyen de capture d'une image de ladite forme anti-copie imprimée,
- un moyen de lecture, dans ladite image, d'une information représentative d'au moins une caractéristique d'impression de ladite forme et
- un moyen de détermination d'authenticité de ladite forme anti-copie imprimée mettant en oeuvre ladite information représentative d'au moins une caractéristique d'impression de ladite forme.

Les avantages, buts et caractéristiques particulières de ce procédé objet du douzième aspect de la présente invention et de ces dispositifs objets du treizième et du quatorzième aspects de la présente invention étant similaires à ceux du procédé objet du onzième aspect de la présente invention, ils ne sont pas rappelés ici.

Les caractéristiques principales ou particulières de chacun des aspects de la présente invention forme des caractéristiques particulières des autres aspects de la présente invention dans le but de forme un système de sécurisation de document présentant les avantages de tous les aspects de la présente invention.

D'autres avantages, buts et caractéristiques de la présente invention ressortiront de la description qui va suivre, faite, dans un but explicatif et nullement limitatif, en regard des dessins annexés, dans lesquels :

- la figure 1 représente, schématiquement, sous forme de logigramme, des étapes de détection d'impression et d'acquisition d'informations pour un original et pour une copie dudit original ;
- la figure 2 représente, schématiquement, sous forme d'un logigramme, des étapes mises en oeuvre pour le marquage d'un document ou produits en vue de pouvoir l'authentifier ultérieurement,
- la figure 3 représente, schématiquement, sous forme d'un logigramme, des étapes mises en oeuvre pour l'authentification d'un document ou produits doté d'un marquage réalisé par la mise en oeuvre des étapes illustrées en figure 2,
- les figures 4A et 4B représentent des matrices d'informations pour marquer un objet,
- les figures 5A et 5B représentent, respectivement, une image captée d'une marque authentique d'une matrice d'informations et d'une marque recopiée de ladite matrice d'informations,
- la figure 6 représente une matrice d'information imprimée avec une charge d'encre est trop élevée,
- la figure 7 représente une matrice d'information comportant, dans sa partie centrale, une matrice de points à caractéristiques variables,
- la figure 8 représente une matrice d'information entourée d'une matrice de points à caractéristiques variables,
- la figure 9 représente une matrice d'information comportant une zone d'encre pleine,
- la figure 10 représente une matrice d'information comportant une zone d'encre adjacente,
- la figure 11 représente, d'une part, en haut, une matrice d'information et, d'autre part, en bas, la même matrice d'information modulée, cellule par cellule, par un message répliqué,
- la figure 12 représente différentes matrices d'information dans lesquelles seules des parties réduites des cellules présentent une apparence variable, noire ou blanche,
- la figure 13 représente, des matrices d'information mettant en oeuvre différentes parties de cellules à apparence variable et, pour la dernière, un tuilage de la deuxième,
- la figure 14 représente une matrice d'information capturée avec un angle d'environ 30 degrés et une résolution d'environ 2.000 dpi,
- la figure 15 représente une mesure d'un indice combiné de texture (106x85) réalisée sur l'image de la figure 14,
- la figure 16 représente l'image de la figure 15, après seuillage, c'est-à-dire comparaison avec une valeur seuil,
- la figure 17 représente l'image de la figure 16 après application d'au moins une dilatation et une érosion,
- la figure 18 représente un contour de matrice d'information, contour déterminé par traitement de l'image de la figure 17,
- la figure 19 représente des coins du contour illustré en figure 18, déterminés par traitement de l'image de la figure 18 et
- la figure 20 représente des courbes représentatives de proportions d'erreur en fonction de dimensions de cellules d'une matrice d'information.

Dans toute la description, on utilisera indifféremment les termes de « chiffrement » et d' « encryption ».

Avant de donner le détail de différents modes de réalisation particuliers de certains aspects de la présente invention, on donne, ci-après, des définitions qui seront utilisées dans la description.

- « matrice d'informations » : il s'agit d'une représentation physique d'un message, généralement apposée sur une surface unie (à la différence des watermarks ou stéganographies qui modifient les valeurs de pixels d'un décor à imprimer), lisible par une machine (en anglais « machine-readable représentation of information »). La définition de la matrice d'informations englobe, par exemple, les codes à barres 2D, les codes à barres à une dimension et d'autres moyens de représentation de l'information qui sont moins intrusifs, tel que les « Dataglyphs » (marquage de données);

- « cellule » : il s'agit d'un élément de la matrice d'information qui représente une unité d'information ;
- « document » : il s'agit de n'importe quel objet (physique) portant une matrice d'information ;
- « marquage » ou « impression » : tout processus par laquelle on passe d'une image digitale (incluant une matrice d'information, un document..) à sa représentation dans le monde réel, cette représentation étant généralement faite sur une surface : ceci inclut, de manière non-exclusive, l'impression à jet d'encre, laser, offset, thermique, ainsi que l'embossage, la gravure laser, la génération d'hologrammes. Des processus plus complexes, tel que le moulage, dans lequel la matrice d'information est d'abord gravée dans le moule, puis moulée sur chaque objet, sont également inclus (notons qu'une matrice d'information « moulée » pet être vue comme ayant trois dimensions dans le monde physique même si sa représentation digitale en comporte deux. Notons encore que plusieurs des procédés mentionnés incluent plusieurs transformation, par exemple l'impression offset classique (contrairement à l'offset « computer-to-plate »), inclut la création d'un film, ledit film sevrant à créer une plaque, ladite plaque étant utilisée dans l'impression. D'autres procédés permettent également d'imprimer une information dans le domaine non-visible, soit en utilisant des fréquences à l'extérieur du spectre visible, ou encore à inscrivant l'information à l'intérieur de la surface, etc, et
- « capture » : tout processus par lequel on obtient une représentation digitale du monde réel, incluant la représentation digitale d'un document physique contenant une matrice d'information.

Dans toute la description qui va suivre, on met en oeuvre des formes globalement carrées. Cependant, la présente invention ne se limite pas à ce type de forme mais s'étend, bien au contraire, à toutes les formes pouvant être imprimées. Par exemple, des formes constituées de MIS avec différentes résolutions et différentes charges d'encre, comme exposées ci-dessous peuvent être mises en oeuvre, ce qui aurait pour avantage, notamment, qu'au moins une MIS corresponde à un optimum de résolution et un optimum de densité d'encrage.

Dans toute la description, on met en oeuvre un remplissage de la forme imprimée qui peut être représenté par une matrice de cellules. Cependant, la présente invention ne se limite pas à ce type de forme, mais s'étend, bien au contraire, à tout remplissage par des cellules, de formes et de tailles identiques ou différentes.

En guise d'introduction à la description de modes de réalisation particuliers du procédé et du dispositif objets de la présente invention, on rappelle que la dégradation d'une matrice d'information a pour conséquence que les contenus de certaines cellules peuvent ne pas être correctement décodés.

Chaque étape de la création de la matrice d'information est effectuée dans le but que le message d'origine soit lisible sans erreur, même si, et c'est un effet désiré, la lecture initiale de la matrice d'informations est entachée d'erreurs. En particulier, un des buts de cette création de matrice d'information est d'utiliser le nombre ou le taux d'erreurs des messages encodés, répliqués, permutés ou brouillés pour déterminer l'authenticité d'une marque de la matrice d'informations et donc du document qui la porte.

En effet, le taux de cette dégradation peut être ajusté en fonction des caractéristiques de l'impression, de telle sorte que la production d'une copie entraîne des erreurs supplémentaires, résultant en un taux d'erreur en moyenne plus élevé lors de la lecture d'une copie, que lors de la lecture d'un original.

Pour comprendre pourquoi une mesure du taux d'erreurs du message peut suffire à déterminer si un document est un original ou une copie, une analogie avec les systèmes de communication s'avère utile. En effet, le passage du message codé, brouillé à la matrice d'information qui le représente n'est autre qu'une modulation du message, cette modulation étant définie comme le processus par lequel le message est transformé de sa forme originale en une forme adaptée à la transmission sur un canal. Ce canal de communication, soit le média de transmission d'information qui relie la source au destinataire et permet l'acheminement du message, diffère selon que la matrice d'information captée est une matrice d'information originale captée ou une matrice d'information copiée captée. Le canal de communication peut varier : on distingue ainsi le « canal de communication d'un original » et le « canal de communication d'une copie ». Cette différence peut se mesurer en terme de rapport signal/bruit, ce rapport étant plus faible pour une matrice d'information copiée captée.

Le message codé extrait d'une matrice d'information copiée captée aura plus d'erreurs que le message codé extrait d'une matrice d'information originale captée. Le nombre ou le taux d'erreurs détectés sont, conformément à certains aspects de la présente invention, utilisés pour différencier une copie d'un original.

Le canal de communication d'un original et le canal de communication d'une copie sont avantageusement décrit en termes des sous-canaux qui les composent, ceux-ci étant en partie différents dans les deux cas. Dans l'exposé ci-dessous, chaque sous-canal du canal de transmission du signal, c'est-à-dire de la matrice d'information, est une transformation analogique à numérique ou numérique à analogique.

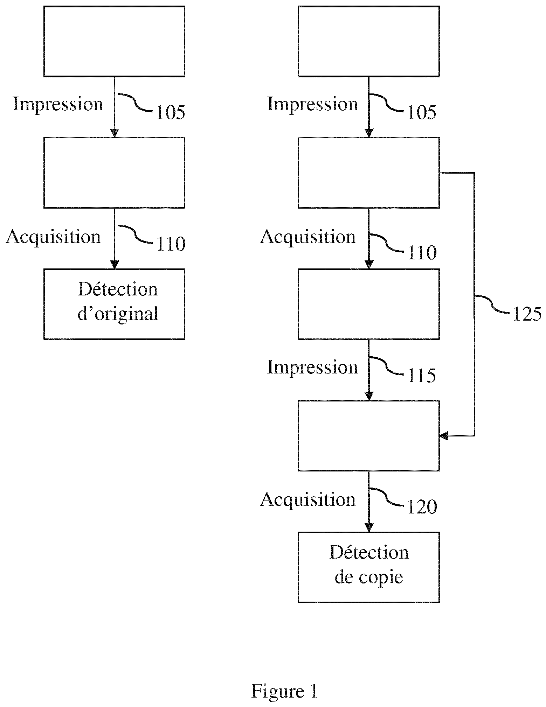

La figure 1 montre les canaux de communication pour une matrice d'information originale captée et pour une matrice d'information copiée captée. Le premier canal comporte un sous-canal 105 de transformation de la matrice d'information générée numériquement en sa marque dans le monde réel, donc analogique, sur le document à sécuriser, c'est-à-dire sur le document original et un second sous-canal 110 correspondant à la lecture de cette marque. Dans le cas d'une copie, s'ajoutent à ces deux premiers canaux, un troisième sous-canal 115 de création est utilisé pour reproduire une marque de la marque lue, dans le monde réel et un quatrième sous-canal 120 est utilisé pour lire cette trace pour en déterminer l'authenticité.

On observe qu'en variante, il est possible de réaliser la deuxième trace en fonction de la première, de manière purement analogique (par exemple par photocopie analogique ou photographie analogique) mais ce cinquième sous-canal analogique-analogique 125, représente, en général, une dégradation du signal supérieure à la dégradation due au passage par une lecture avec un capteur d'image de haute résolution.

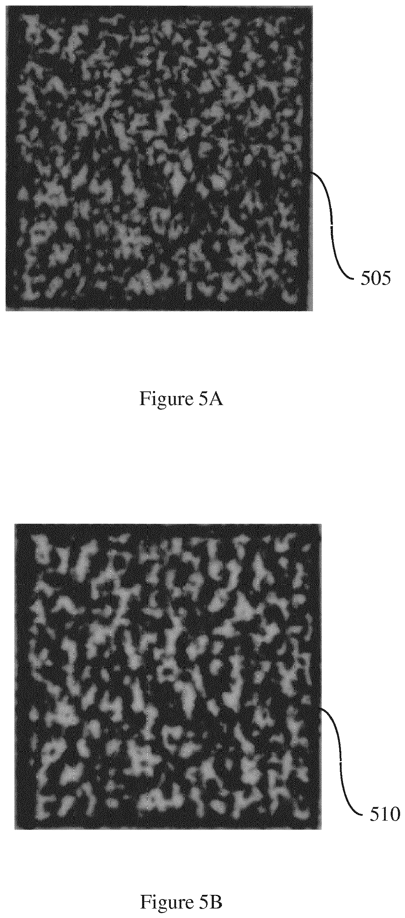

Les troisième, quatrième et/ou cinquième sous-canaux imposent une dégradation additionnelle du message qui permet le discernement d'un original, dont un exemple d'image 505 est représenté en figure 5A, et d'une copie dont un exemple d'image 510 correspondant à la même matrice d'informations que l'image 505, est représenté en figure 5B. Comme on le voit en comparant les images 505 et 510, la copie comporte une plus faible finesse de détail, la dégradation entre ces images correspondant à des erreurs de reproduction de la marque de la matrice d'informations originale.

Les contrefacteurs cherchant à minimiser leurs coûts de revient, les sous-canaux utilisés pour réaliser la copie, et, en particulier les sous-canaux menant à la trace analogique, ici les troisième ou cinquième canaux, sont parfois réalisés avec de faibles qualités de marquage ou d'impression. Les messages contenus dans les copies ainsi produites ont alors un rapport signal/bruit significativement plus faible, ce qui permet de détecter les dites copies encore plus aisément. Cependant, il est à noter que les cas ou le contrefacteur utilise des moyens d'impression de qualité égale, voire supérieure à ceux utilisés pour la production des document originaux, ne posent en général pas de problème particuliers. En effet, le contrefacteur ne peut éviter complètement l'ajout de bruit, résultant en des erreurs additionnelles lors de la démodulation de la matrice d'information, lors de l'impression de la copie. Le rapport signal/bruit sera donc réduit par cette opération. Cette différence de rapport signal/bruit sera, dans la plupart des cas, suffisantes pour discerner les matrice d'information originale captées des matrice d'information copiée captées.

Préférentiellement, on conçoit la matrice d'information et, en particulier, la finesse de ses détails pour que l'impression, dont les caractéristiques sont à priori connues, soit de telle sorte que la matrice d'information imprimée sera dégradée. Aussi, le message encodé contient des erreurs, à la lecture, dans une proportion appréciable, sans être excessive. Ainsi, une dégradation additionnelle ne pourra être évitée par le contrefacteur lors de l'impression de la copie. On précise que la dégradation durant l'impression de l'original doit être naturelle et aléatoire, c'est-à-dire causée par des phénomènes physique de nature localement imprévisible, dispersion de l'encre dans le papier, instabilité naturelle de la machine d'impression, etc., et non pas provoquée. Cette dégradation est telle que le contrefacteur ne pourra corriger les erreurs, la perte d'information étant par nature irréversible, ni éviter les erreurs additionnelles, l'impression de la copie étant elle-même soumise aux mêmes phénomènes physiques.

Pour augmenter la sécurité contre la contrefaçon, on fait dépendre la création de la matrice d'information d'un ou plusieurs paramètres tenu secrets, appelé(s) clé(s) secrète(s) . Il suffit alors de changer de clé secrète pour renouveler le niveau de sécurité initiale, au cas où la clé précédente aurait été découverte par un tiers. Pour simplifier la description, on parle, en général, d'une clé secrète, étant entendu que cette clé peut elle-même être composée de plusieurs clés secrètes.

La clé secrète est utilisée pour chiffrer ou encrypter le message initial, préalablement à son encodage. Ce type de chiffrement pouvant bénéficier d'un effet d'avalanche, les erreurs lors de la démodulation, ou lecture de la matrice, étant, dans la plupart des cas, éliminées par le code correcteur d'erreur, deux matrices d'information générées à partir de la même clé, et dont les messages ne différeraient que par un bit, distance minimale entre deux messages différents, apparaîtront comme étant radicalement différentes. De même, pour deux matrices d'information comportant des messages identiques, mais générées à partir de clés différentes. La première propriété est particulièrement avantageuse, car le contrefacteur ne pourra ainsi détecter aucun motif récurrent qui serait éventuellement exploitable pour la création d'une contrefaçon, par l'analyse de matrices d'informations provenant de la même clé mais comportant des messages différents. Notons qu'il est également possible d'ajouter un nombre aléatoire au message, de telle sorte que deux matrices d'information générées avec la même clé et le même message, mais ayant des nombres aléatoires différents ajoutés au message, apparaîtront également comme étant radicalement différentes.

Une matrice d'informations peut être vue comme le résultat d'une modulation d'un message représenté par des symboles d'un alphabet, par exemple binaire. Dans des modes de réalisation particuliers, des symboles de synchronisation, d'alignement ou de positionnement, sont ajoutés au niveau du message ou des motifs d'aide à la localisation sont insérés au niveau de la matrice d'information.

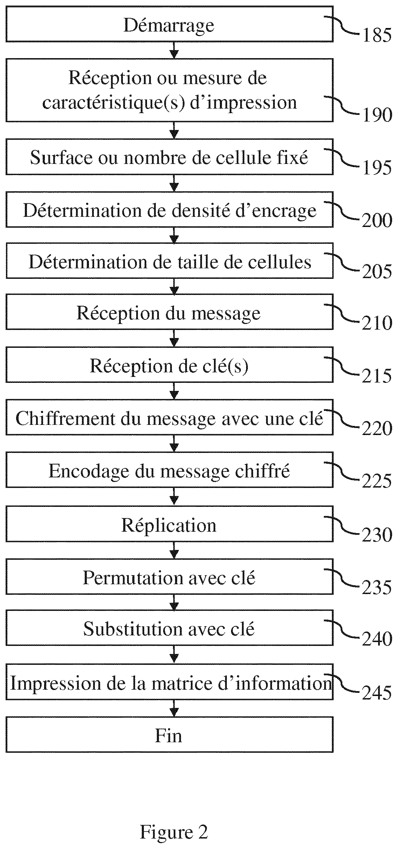

Le logigramme illustré en figure 2 expose différentes étapes de génération d'une matrice d'information et de marquage d'un document, selon un mode particulier de réalisation de certains aspects du procédé objet de la présente invention.

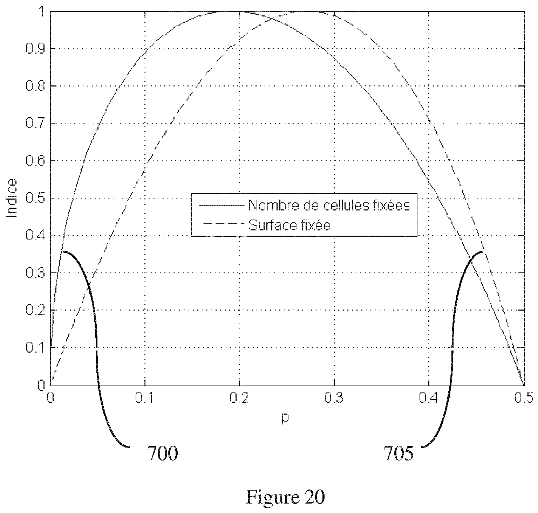

Après le démarrage, au cours d'une étape 185, on reçoit ou on mesure, au cours d'une étape 190, au moins une caractéristique de marquage ou impression, par exemple le type d'impression, le type de support, le type d'encre utilisée. Puis, au cours d'une étape 195, on détermine si la surface de la MIS ou son nombre de cellule est fixé pour l'application considérée ou le client considéré. Au cours d'une étape 200, on détermine la densité d'encrage correspondant aux caractéristiques de marquage/impression, par exemple, en lisant, dans une base de données ou une table de correspondance (en anglais « look-up table »), la densité correspondant aux caractéristiques d'impression. Au cours d'une étape 205, on détermine la taille des cellules de la MIS, par exemple, en lisant, dans une base de données ou une table de correspondance, la taille de cellules correspondant aux caractéristiques d'impression. On note que les correspondances conservées en bases de données ou dans les tables de correspondance sont déterminées comme exposé plus bas, notamment en regard de la figure 20. Ces correspondances visent à obtenir une bonne qualité d'impression et une proportion d'erreurs d'impression entre une première valeur prédéterminée et une deuxième valeur prédéterminée, par exemple 5%, 10%, 15 % ou 20 % pour la première valeur prédéterminée et 25% ou 30 % pour la deuxième valeur prédéterminée.

Puis, on reçoit, au cours d'une étape 210, un message à faire porter par un document, ce message étant généralement fonction d'un identifiant du document, et, au cours d'une étape 215, au moins une clé secrète de chiffrement et/ou de brouillage.

Le message d'origine représente, par exemple, une désignation du document, le ou les propriétaires des droits de propriété intellectuelle attachés, un ordre de fabrication, une date de fabrication, une destination du document, un prestataire de fabrication. Il est constitué selon des techniques connues en soi. Le message d'origine est représenté dans un alphabet prédéfini, par exemple en caractères alphanumériques.

Au cours d'une étape 215, on chiffre le message, avec un clé symétrique ou, préférentiellement, avec une clé asymétrique, par exemple de type bi-clé de l'infrastructure à clés publiques PKI (acronyme de « public key infrastructure ») pour fournir un message chiffré. Ainsi, pour accroître le niveau de sécurité du message, on chiffre, ou encrypte, le message de telle manière qu'une variation d'une seule information binaire du message, en entrée de chiffrement, fait varier une grande quantité d'informations binaires en sortie de chiffrement.

Le chiffrement opère en général sur des blocs de bits, de taille fixée, par exemple 64 bits ou 128 bits. L'algorithme de chiffrement DES (acronyme de « data encryption standard » pour standard de chiffrement de données) avec une clé de 56 bits et une taille de bloc de message de 64 bits, le triple-DES, avec une clé de 168 bits et une taille de bloc de message de 64 bits, et l'AES (acronyme de « advanced encryption standard » pour standard de chiffrement avancé), avec une clé de 128, 192 ou 256 bits et une taille de bloc de message de 128 bits, peuvent être utilisés car ils sont très utilisés, et reconnus comme étant résistant aux attaques. Cependant, de nombreux autres algorithmes de chiffrement, par bloc ou séquentiels, peuvent également être utilisés. Notons que les algorithmes de chiffrement par bloc fournissent, en principe, des messages chiffrés de taille égale au message initial, pour autant que celui-ci soit un multiple de la taille de bloc.

L'AES est reconnu comme offrant le niveau de sécurité le plus élevé, mais notons qu'il opère sur des blocs de message de taille minimale de 128 bits. Si le message à transmettre est de taille multiple de 64 bits, on utilisera plutôt un algorithme comme Triple-DES. Finalement, il est possible de créer un nouvel algorithme de chiffrement, notamment si l'on est limité à de très petite taille de message, par exemple 32 bits. Notons toutefois que ces algorithmes auront une sécurité limitée du fait du faible nombre de messages chiffrés différents.

Notons toutefois que les attaques cryptographiques de recherche de clé ne peuvent en principe pas être appliquée, du moins dans leur forme classique, en cryptographie. En effet, le contrefacteur n'a accès, en principe, qu'à une image capturée de la matrice d'information originale imprimé, et il faudrait qu'il ait au moins accès au message décrypté pour lancer une attaque cryptographique. Or le message ne peut être décrypté que s'il a été débrouillé, ce qui nécessite de chercher la clé de brouillage.

Les méthodes de chiffrement précédemment décrites sont dites « symétriques » c'est-à-dire que la même clé sera utilisée pour le déchiffrement. L'acheminement et le stockage des clés au module de détection doivent se faire de façon très sécuritaire, car un adversaire entrant en possession de cette clé serait en mesure de créer des messages chiffrés qui apparaîtraient comme légitimes. Ces risques peuvent être cependant limités par l'usage de méthode de chiffrement asymétriques, dans lesquelles la clé de déchiffrement est différente de la clé de chiffrement. En effet, la clé de déchiffrement ne permettant pas de chiffrer des messages, un adversaire en possession de cette clé ne pourra générer de nouveaux messages valides, ni donc de matrices d'information comportant un message différent.

Au cours d'une étape 220, on encode le message chiffré pour générer un message chiffré encodé. Préférentiellement l'encodage met en oeuvre un codage convolutionnel, qui est très rapide à générer, le décodage étant luimême rapide en utilisant, par exemple, la méthode très connue élaborée par Viterbi. Si le codage convolutionnel utilisé met en oeuvre un polynôme générateur de degré neuf, et le taux du code est de deux bits en sortie pour un bit en entrée, on obtiendra un gain de codage de sept dB par rapport au même message qui serait simplement répliqué. Ceci se traduit par un risque d'erreur au décodage beaucoup plus bas. Pour un message à encoder contenant 128 bits, avec le code convolutionnel précédemment décrit, on aura un message encodé de 272 bits (il y a deux bits en sortie pour chacun des 128 bits du code et des huit bits appartenant à la mémoire de l'encodeur pour un polynôme générateur de degré neuf). Notons toutefois que de nombreux autres types d'encodage peuvent être réalisés (codage arithmétique, turbo-code,..) selon le même principe.

Préférentiellement, ce message chiffré encodé se trouve alors écrit en alphabet binaire, c'est-à-dire qu'il est composé de « 0 » et de « 1 ».

Au cours d'une étape 225, on insert et on réplique le message chiffré encodé dans une liste des cellules disponibles une matrice d'informations dont les zones indisponibles supportent des symboles de synchronisation, d'alignement ou de positionnement, ou des motifs d'aide à la localisation qui, dans des modes de réalisation, sont déterminés à partir d'une clé secrète. Les motifs d'alignement, sont, par exemple, des matrices de 9 x 9 pixels distribuées de manière périodique dans la matrice d'informations. Le message chiffré encodé est ainsi répliqué, ou répété, pour que chaque information binaire soit représentée plusieurs fois, pour correspondre au nombre de cellules disponibles dans la matrice d'informations. Cette réplication, qui s'apparente à un codage par répétition ou redondance, permet de significativement réduire le taux d'erreur du message encodé qui sera fourni en entrée à l'algorithme de décodage du code convolutionnel. Les erreurs non corrigées par les répétitions seront corrigées par le code convolutionnel dans la plupart des cas.

Au cours d'étapes 235 et 240, on brouille le message chiffré encodé répliqué, selon des techniques dites de « scrambling », ou brouillage, pour fournir un message chiffré encodé brouillé.

La fonction de brouillage, ou scrambling, du message chiffré encodé répliqué consiste préférentiellement, à appliquer successivement une permutation, étape 235, et une substitution, étape 240, chacune dépendant d'une deuxième clé secrète, éventuellement identique à la première clé secrète, des valeurs binaires du message. La substitution est préférentiellement faite à partir d'une fonction « ou exclusif » et d'une séquence pseudo-aléatoire.

Ainsi, le brouillage du message chiffré codé est effectué de manière non triviale, en mettant en oeuvre une clé secrète, qui peut être une clé identique à celle utilisée pour le chiffrement du message ou une clé différente. Notons que si la clé est différente, dans des modes de réalisation particuliers, elle peut être calculée à partir d'une fonction de la clé utilisée pour le chiffrement.

L'utilisation d'une clé secrète, à la fois pour le chiffrement du message et pour le brouillage du message encodé, permet d'atteindre un niveau de sécurité élevé contre les contrefaçons. Par comparaison, les méthodes existantes de création de code à barres 2D ne brouillant pas le message encodé, le contrefacteur peut facilement recréer une matrice d'information originale après avoir décodé le message de la matrice d'information captée ; même si le message décodé est chiffré, il ne lui est pas nécessaire de décrypter le dit message pour recréer la matrice d'information à l'identique.

Le brouillage consiste ici préférentiellement, en une combinaison de permutation, étape 235, et, étape 240, de l'utilisation d'une fonction « XOR » ou « ou exclusif » dont la table est

| A | B | S=A XOR B |
|---|---|---|
| 0 | 0 | 0 |
| 0 | 1 | 1 |
| 1 | 0 | 1 |
| 1 | 1 | 0 |

En effet, ce type de brouillage évite qu'une erreur se propage (il n'y a pas d'effet dit « d'avalanche » : une erreur sur un élément du message brouillé entraîne une erreur et une seule sur le message débrouillé). L'effet d'avalanche n'est pas désirable car il rendrait difficile la lecture de la matrice d'informations à partir du moment où on aurait une seule erreur dans le message brouillé. Or, comme on l'a vu, les erreurs jouent un rôle important dans la mise en oeuvre de la présente invention.

La permutation, étape 235, est déterminée à partir d'un algorithme de permutation auquel on fournit une clé, ladite clé permettant de générer pseudo aléatoirement l'ensemble des permutations effectuées. L'application de la fonction « ou exclusif », étape 240, se fait entre la séquence permutée (dont la taille correspond au nombre de cellules disponibles) et une séquence binaire de même taille générée également à partir d'une clé. On note que si le message n'est en mode binaire (les cellules permettant de représenter plus de deux valeurs possibles), la permutation peut s'effectuer de la même façon, et la fonction « ou exclusif » peut être remplacée par une fonction qui fait une addition modulo le nombre de valeurs possibles du message avec une séquence générée pseudo aléatoirement comportant le même nombre de valeurs possibles que le message brouillé.

De nombreuses permutations dépendant d'une clé secrète existent. Un algorithme simple consiste à faire tourner une boucle munie d'un indice i croissant entre 0 et la dimension du message, N-1, et, pour chaque indice I, générer un nombre entier pseudo-aléatoire j entre 0 et N-1, et ensuite permuter les valeurs du message aux positions d'indices i et j.

Les nombre pseudo-aléatoires peuvent être générés en utilisant en mode chaîné un algorithme de chiffrement (tels que ceux mentionnés plus haut) ou un algorithme de hachage, tel que SHA-1 (deuxième version du « Secure Hash Algorithm », qui fait partie d'un standard du gouvernement américain). La clé sert à initialiser l'algorithme, ce dernier étant à chaque nouvelle étape réinitialisé à partir des nombres produits durant l'étape précédente.

Une fois que les données binaires du message ont été permutées, étape 235, les valeurs de bits sont passées à travers un filtre "ou exclusif (en anglais « xor ») avec une séquence de valeurs binaires pseudo-aléatoires de même longueur que le message, étape 240. En variante, cette étape 240 est effectuée avant l'étape de permutation 235.

Chacune des données binaires du message chiffré encodé répliqué brouillé est ainsi modulée dans une cellule de la matrice d'informations en attribuant l'une de deux couleurs (par exemple noir et blanc) aux données binaires « 0 » et l'autre de ces couleurs à une donnée binaire « 1 », la correspondance pouvant varier sur la surface de l'image.

Selon la méthode d'impression, étape 245, une seule des deux couleurs peut être imprimée, l'autre correspondant à la couleur d'origine du substrat, ou ayant été pré-imprimée en « toile de fond ». Pour les méthodes d'impression qui impriment un relief physique (par exemple l'embossage ou la gravure laser), une des deux couleurs associée à une certaine valeur binaire sera choisie, par exemple de manière arbitraire.

En général, la taille de l'image, en pixels, est déterminée par la surface disponible sur le document, et par la résolution d'impression. Si, par exemple, la surface disponible est de 5 mm x 5 mm, et que la résolution d'impression de la matrice est de 600 pixels/pouce (cette donnée étant souvent exprimée dans le système impérial de mesure), l'homme du métier calculera que la surface disponible en pixel est de 118x118 pixels. En supposant que l'on ajoute une bordure noire de 4 pixels de chaque côté de la matrice, la taille de la matrice en pixels est donc de 110 x 110 pixels, pour un total de 12.100 pixels. Si on fait l'hypothèse que la taille de chaque cellule est de un pixel, la matrice d'informations comportera 12.100 pixels.

Des blocs d'alignements, de valeur connue ou déterminable par le détecteur, peuvent être insérés dans la matrice. Ces blocs peuvent être insérés à intervalle régulier depuis le coin supérieur gauche de la matrice, par exemple tous les 25 pixels, avec une taille de 10x10 pixels. On observe alors que la matrice comptera 5x5=25 blocs d'alignement, comptant chacun 100 pixels, pour un total de 25x100=2050 pixels d'alignement, ou 2050 cellules du message. Le nombre de cellules disponibles pour la réplication du message encodé. sera alors de 12.100-2.500=9.600. Sachant que, tel que décrit plus haut, le message encodé compte 272 bits, ledit message pourra être répliqué complètement 35 fois, et partiellement une 36$^{\text{ème}}$ fois (les 80 premiers bits du message encodé). On note que ces 35 réplications permettent d'améliorer le rapport signal /bruit du signal encodé par plus de 15 dB, ce qui permet un risque d'erreur très bas à la lecture du message.

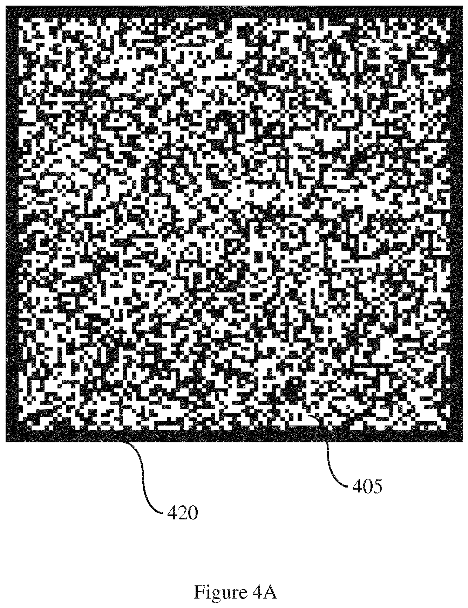

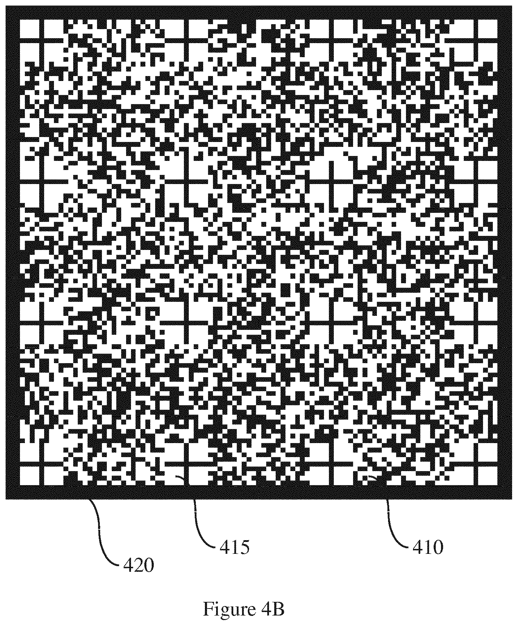

Deux exemples de représentations de la matrice d'informations résultant du procédé de sécurisation de document illustré en regard de la figure 2 sont donnés en figure 4A, matrice 405 sans bloc d'alignement apparent et en figure 4B, matrice 410 avec blocs d'alignement apparents 415. Dans cette dernières figure, les blocs d'alignement 415, formés de croix noires sur fond blanc, sont bien visibles du fait de leur régularité. Dans d'autres modes de réalisation, comme représenté en figure 4A, ces blocs présentent sensiblement la même apparence que le reste de l'image. Enfin, comme dans les figures 4A et 4B, une bordure noire 420 peut être ajoutée tout autour du message et des blocs d'alignement éventuels.

On observe que, en dehors de la bordure et des blocs d'alignement, qui peuvent être pseudo-aléatoires, les valeurs binaires « 0 » et « 1 » sont préférentiellement équiprobables.

Dans une variante, on constitue la bordure de la matrice d'informations avec des cellules de plus grande dimension que les cellules du reste de la zone de marquage afin d'y représenter un message robuste. Par exemple, pour constituer une cellule carrée de la bordure, on associe quatre cellules périphériques de la matrice d'information et on représente, dans cette bordure, le message chiffré encodé brouillé. Ainsi, le contenu de la bordure sera très robuste aux dégradations ultérieures de la marque, en particulier l'acquisition de son image ou sa copie sur un autre document.

Dans d'autres variantes, un message complémentaire au message portée par la matrice d'information est porté par le document, par exemple sur une étiquette électronique ou sur un code à barres en deux dimensions. Comme exposé plus loin, ce message complémentaire peut représenter le message initial ou un message mis en oeuvre au cours de l'authentification du document, par exemple représentative de clés mises en oeuvre au cours de la génération de la matrice d'informations, de données associées à ces clés dans une mémoire distante, de seuil de quantité d'erreur à utiliser pour décider si le document est authentique ou non.

Dans des variantes, on réalise, après les étapes 235 et 240, une étape additionnelle de brouillage partiel du message chiffré encodé répliqué brouillé en fonction d'une troisième clé secrète. Le message chiffré encodé répliqué brouillé peut ainsi lui-même être brouillé partiellement, avec une clé différente de celle(s) utilisée(s) dans les étapes précédentes. Par exemple, ce brouillage partiel supplémentaire concerne de l'ordre de 10 à 20% des cellules (le nombre est généralement fixé). Les cellules qui subissent ce brouillage supplémentaires sont choisies pseudo-aléatoirement à l'aide de la clé de brouillage supplémentaire. Les valeurs des cellules choisies peuvent être systématiquement modifiés, par exemple passant de « 1 » à « 0 » et de « 0 » à « 1 », pour des valeurs binaires. En variante, les cellules choisies peuvent être passées à travers un filtre « ou-exclusif », généré à partir de la clé de brouillage supplémentaire, et auront donc 50% de chances d'être modifiées.

Le but de ce brouillage supplémentaire est de faire en sorte qu'un détecteur qui n'est pas muni de la clé de brouillage supplémentaire peut malgré tout extraire le message correctement, et détecter les copies. Cependant, un tel détecteur tombant dans les mains non autorisées ne contient pas toutes les informations ou clés nécessaire pour reproduire un original. En effet, n'ayant pas la clé de brouillage supplémentaire, l'adversaire pourra générer et imprimer une matrice d'information qui sera reconnue comme une copie par un détecteur équipé de la clé de brouillage supplémentaire. En général, les détecteurs considérés comme moins sécurisés ne seront pas équipés de la clé de brouillage supplémentaire.

D'autres variantes sur ce principe consistant à ne pas fournir tous les clés ou paramètres ayant servi à la création de la matrice d'informations sont discutées plus loin.

Au cours de l'étape 245, on marque un document avec la matrice d'informations, par exemple par impression ou gravure, avec une résolution de marquage telle que la représentation de la matrice d'information comporte des erreurs dues à ladite étape de marquage de telle manière que toute lecture de ladite matrice d'informations analogique révèle un taux d'erreur non nul. Au cours de cette étape de marquage, on forme ainsi une marque comportant, du fait des conditions physiques de marquage, des erreurs locales, c'est-à-dire affectant individuellement des représentations de cellules de la matrice d'informations, au moins partiellement aléatoires ou imprévisibles.

Les conditions physiques de marquages comportent, notamment, les tolérances physique des moyens de marquage, support, et, en particulier, sont état de surface et matériau, par exemple encre, éventuellement déposé. Le terme d'imprévisible signifie que l'on ne peut déterminer, avant le marquage physique du document, quelles cellules de la matrice d'informations seront correctement représentées par le marquage et quelles cellules de la matrice seront erronées.

Pour chacune des clés secrètes utilisées, il suffit de changer de clé secrète pour renouveler le niveau de sécurité initiale, au cas où la clé précédente aurait été découverte par un tiers.

On note que l'encodage et l'éventuelle réplication permettent, d'une part, d'augmenter significativement la robustesse du message face aux dégradations et, d'autre part, d'authentifier le document, en estimant ou en mesure le nombre ou le taux d'erreurs affectant une lecture de la marque de la matrice d'informations.

On observe que les étapes de codage, de chiffrement, de brouillage, de brouillage additionnel et de réplication sont réversibles, sous réserve de connaître la ou les clé(s) secrète(s).

Lorsque l'on examine des matrices d'informations originales captées imprimées avec une résolution de 1.200 points par pouce, avec des cellules de 8 x 8, 4 x 4, 2 x 2 et 1 x 1 pixel(s), on observe que la lecture, en haute résolution, de la valeur binaire représentée par chaque cellule :

- ne présente pratiquement pas d'erreur avec des cellules de 8 x 8 pixels,
- présente quelques erreurs avec des cellules de 4 x 4 pixels,
- présente de nombreuses erreurs avec des cellules de 2 x 2 pixels et
- présente, pour les cellules de 1 x 1 pixels, un taux d'erreurs qui avoisine le maximum de 50 % si bien que les corrections d'erreurs serait probablement insuffisantes et que la dégradation due à une copie serait imperceptible puisque le taux d'erreur ne pourrait évoluer.

Entre les dimensions extrêmes des cellules, on passe par un optimum et, dans le choix limité représenté ici, l'un des cas où les cellules possèdent 4 x 4 ou 2 x 2 pixels est optimal. Une méthode de détermination de cet optimum est donnée plus loin.

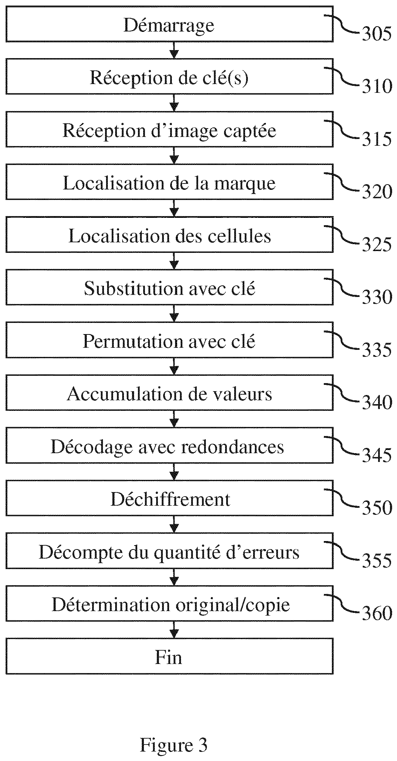

Comme illustré en figure 3, dans un mode de réalisation particulier, le procédé d'authentification d'un document comporte, après le démarrage 305 :

- une étape 310 de réception d'au moins une clé secrète,
- une étape 315 d'acquisition d'une image d'une marque d'une matrice d'information sur ledit document, préférentiellement avec un capteur d'image matriciel, par exemple une caméra vidéo,
- une étape 320 de localisation de la marque de la matrice d'information,
- une étape 325 de recherche de motifs d'alignement et de localisation des cellules de la matrice d'information, dans ladite marque,
- des étapes 330 et 335 de débrouillage (en anglais « descrambling ») d'éléments de message en mettant en oeuvre une clé secrète, pour obtenir un message chiffré encodé répliqué, pour effectuer une substitution, étape 330 et une permutation, étape 335,
- une étape 340 d'accumulation des réplications du message chiffré encodé répliqué pour obtenir un message chiffré encodé,
- une étape 345 de décodage du message chiffré encodé pour fournir un message chiffré,
- une étape optionnelle 350 de déchiffrement du message chiffré, en mettant en oeuvre une clé secrète,
- une étape 355 de détermination de quantité d'erreurs affectant le message chiffré en mettant en oeuvre les redondances associées au message par l'étape d'encodage et

- une étape 360 de décision si le document qui portait la marque de la matrice d'informations est une copie ou un document original.

Préférentiellement, chaque clé secrète est aléatoire ou pseudo-aléatoire.

Ainsi, optionnellement, le procédé d'authentification comporte une étape de déchiffrement du message original, en mettant en oeuvre une clé de chiffrement, symétrique ou asymétrique. Selon le type de chiffrement, à clés symétriques ou à clés asymétriques, la clé de déchiffrement est identique à ou différente de la clé de chiffrement. Des clés identiques sont utilisées pour du chiffrement symétrique, alors que des clés différentes sont du chiffrement asymétrique. Un avantage important du chiffrement asymétrique est que la clé de déchiffrement ne permet pas de générer des messages chiffrés valides. Ainsi, un tiers ayant accès à un détecteur, et parvenant à extraire la clé de déchiffrement, ne pourra l'utiliser pour générer un nouveau message valide.

Pour traiter une marque formée sur un document, celle-ci est, d'abord, captée par un capteur d'image, typiquement un capteur d'image matriciel d'une caméra, par exemple monochrome. Le format de l'image captée numérisée est, par exemple une matrice de points (connue sous le nom de « bitmap » pour carte de données binaires).

La figure 5 montre un exemple d'image captée numérisée de dimensions 640 x 480 pixels avec huit données binaires par pixel (soit une échelle de 256 niveaux de gris). Les fonctions de lecture successives mises en oeuvre sont détaillées ci-dessous.

D'abord, on effectue une fonction de recherche de chacun des 25 motifs d'alignement dans l'image reçue. La sortie de cette fonction contient 50 valeurs entières représentant les positions verticales et horizontales des 25 motifs d'alignement. Cette fonction est effectuée en deux étapes :

- une étape pour trouver la position globale de la matrice d'information dans l'image captée numérisée et
- une étape au cours de laquelle on effectue une recherche locale (sur une sous-partie de l'image) de chacun des motifs d'alignement pour déterminer leurs positions.

Pour effectuer la première étape, l'homme du métier peut s'inspirer de l'art antérieur, par exemple, le document US 5,296,690. Alternativement, un algorithme simple et rapide consiste à délimiter la région de l'image captée numérisée qui contient la matrice d'information en recherchant des transitions de niveau de gris abruptes, ligne par ligne et colonne par colonne ou après avoir effectué la somme de toutes les lignes, d'une part et la somme de toutes les colonnes, d'autre part, pour constituer une seule ligne et une seule colonne sur lesquelles on effectue cette recherche. Par exemple, les dérivées de niveaux de gris possédant les plus hautes valeurs absolues correspondent aux bords de la matrice d'information et une estimation grossière des positions des quatre coins peut être effectuée.

Pour effectuer la deuxième étape, les positions estimées des quatre coins de la matrice d'information sont utilisées pour estimer la position des motifs d'alignement, selon des techniques géométriques connues.

Des techniques géométriques standards peuvent être utilisées pour déterminer la translation, la mise à l'échelle et l'angle de rotation de la matrice d'information dans l'image captée par le capteur d'image. Réciproquement, ces translations, mise à l'échelle et angle de rotation peuvent être utilisés pour déterminer la position des coins de la matrice d'information. Une approximation successive peut ainsi être effectuée par itération de ces deux étapes.

En général, on a une estimation de la position de chaque motif d'alignement, avec une précision de plus ou moins X pixels en coordonnées verticales et horizontales. Cette valeur X dépend des conditions de l'application, notamment du rapport entre la résolution de capture et d'impression, de l'angle de lecture maximal toléré, et de la précision des estimations des positions des quatre coins de la matrice d'information. Une valeur X de 10 pixels est raisonnable, auquel cas on a un espace de recherche de 21 x 21 pixels. On effectue une convolution entre le motif d'alignement et le bloc d'alignement, ce dernier étant possiblement mis à l'échelle si le rapport entre la résolution de capture et la résolution d'impression est différent de un. La position de la matrice de convolution résultante dont la valeur est maximale correspond à la position de départ du bloc d'alignement.

Les positions des 25 motifs d'alignement sont mises en mémoire. Cette ensemble de données est utilisé dans l'étape de démodulation, afin déterminer avec un maximum de précision la position dans l'image captée de chacune des cellules de la matrice d'information.

Pour chaque valeur binaire, le motif d'alignement qui est le plus proche de la cellule correspondante est utilisé comme point de départ pour estimer la position de la cellule en terme de pixel de l'image captée. En utilisant la rotation et l'échelle estimées et la position relative connue de la cellule dans la matrice d'information numérique, la position centrale de la cellule est estimée dans la matrice d'information captée, selon des techniques géométriques connues.

L'application d'une fonction de débrouillage, fonction inverse de la fonction de brouillage appliquée lors de la réalisation de la matrice d'information originale, permet de retrouver le message répliqué original affecté d'erreurs. Si les indicateurs sont conservés, on à alors des valeurs réelles ou entières, qui peuvent être positives ou négatives, auquel cas la fonction « ou exclusif » n'est pas applicable directement. Pour obtenir un estimé du message débrouillé à partir des indicateurs, il suffit alors de multiplier par -1 l'indicateur lorsque la valeur du filtre « ou exclusif » est 0, et par +1 lorsque sa valeur est 1. Notons que la permutation s'effectue de la même façon pour les différents types d'indicateur (binaire, entier, réel).

Ensuite, une étape sert à estimer la valeur de chaque bit du message encodé, en fonction de l'observation des valeurs captées des cellules de la matrice d'informations débrouillées. A cet effet, l'étape suivante consiste à déterminer un indicateur de la valeur binaire qui a été assignée à la cellule, en considérant que le noir a pour valeur binaire « 0 » et le blanc « 1 » (on inversement). Cet indicateur peut, par exemple, être la luminance moyenne (ou le niveau de gris moyen) d'un petit voisinage entourant le centre de la cellule (et correspondant au plus à la surface de la cellule) ou la valeur la plus élevée dans ce petit voisinage, ou encore la plus faible valeur de luminance dans ce voisinage. Une approche avantageuse peut être de définir deux voisinages, un petit voisinage entourant le centre de la cellule et un plus grand voisinage entourant et excluant le plus petit voisinage. L'indicateur peut alors être basé sur une comparaison des valeurs de luminance dans le voisinage externe et dans le plus petit voisinage, dit interne. Une mesure de comparaison peut être la différence entre la luminance moyenne dans le voisinage interne et la luminance moyenne dans le plus grand voisinage.

Une fois que l'indicateur de valeur binaire a été déterminé pour chacune des cellules de la matrice d'information, il est avantageux d'effectuer un traitement supplémentaire de ces indicateurs. En effet, en fonction des transformations qu'a subi la matrice d'informations, depuis la matrice d'informations numérique jusqu'à la matrice d'informations captée, les indicateurs peuvent présenter une dérive. Un simple traitement supplémentaire pour réduire cette dérive consiste à soustraire la valeur d'indicateur moyenne ou médiane et, éventuellement, à normaliser ces indicateurs sur une plage allant de -1 à +1. Ces indicateurs normalisés peuvent être utilisés pour déterminer les valeurs binaires les plus probables, en les comparant à une valeur de seuil, par exemple la valeur « 0 », les valeurs supérieures étant affectées d'un « 1 » et les valeurs inférieures d'un « 0 », ce qui entraînera un même nombre de valeurs binaires « 0 » et « 1 ».

En variante préférentielle, pour chaque valeur binaire recherchée, la somme des valeurs d'indicateurs est effectuée sur toutes ses représentations, puis comparée à une valeur servant de seuil. Ce traitement, plus lourd en consommation de ressources, donne, en effet, une plus grande fiabilité de cette étape.

On rappelle que, pour l'exemple décrit précédemment, la matrice d'informations comporte 35 fois le message encodé de 272 valeurs binaires, 80 d'entre eux étant dupliqués une 36$^{ème}$ fois. Pour chaque valeur du message encodé, on a donc 35 ou 36 indicateurs. La concentration, ou accumulation, revient à ne retenir qu'une valeur (binaire, réelle ou entière) finale en fonction de ces nombreuses représentations de la même valeur binaire initiale. Par exemple, on effectue une moyenne des 35 ou 36 indicateurs, une moyenne positive étant interprétée comme un « 1 », et une valeur négative comme un « 0 ». On peut aussi comparer les moyennes des indicateurs à la valeur seuil « 0 ».

Selon des variantes, des traitements statistiques plus complexes sont appliqués sur les indicateurs, dans certains cas nécessitant une phase d'apprentissage. Par exemple, des opérations non linéaires peuvent être effectuées sur les moyennes des indicateurs afin d'estimer la probabilité que la valeur binaire initiale correspondante soit « 1 », respectivement « 0 ». L'estimation d'une probabilité peut en effet permettre d'affiner le résultat du décodeur.

A la fin de l'étape d'accumulation, on dispose d'un message encodé comportant des redondances destinées à permettre la correction, ou, au moins, la détection, d'erreurs.

Le décodeur qui, dans le cas d'un code convolutionnel est préférentiellement basé sur la méthode de Viterbi, fournit en sortie le message chiffré, dont la taille est, dans l'exemple décrit jusqu'ici, de 128 bits.

Puis le message chiffré décodé est décrypté en utilisant l'algorithme de chiffrement utilisé au chiffrement, préférentiellement l'AES pour des blocs de 128 bits, en mode inversé.

On rappelle qu'une partie du message peut avoir été réservée pour contenir une fonction mathématique, par exemple un hachage, du reste du message. Dans l'exemple cité précédemment, 16 bits sont réservés pour contenir une fonction mathématique des 112 bits restants du message. Des bits de « padding » (que l'on peut approximativement traduire, en français, par remplissage) sont ajoutés aux 112 bits restants du message, et un hachage ou condensât (en anglais « hash ») de type SHA-1 est calculé à partir du message auquel sont ajoutés les bits de padding et de la même clé secrète utilisée à la création. Si les 16 premiers bits du résultat du hachage correspondent aux 16 bits réservés, la validité du message est confirmée, et la procédure de lecture peut passer à l'étape suivante. Dans le cas contraire, le message de 112 bits est considéré non valide. Cette invalidité peut avoir différentes raisons : lecture incorrecte, message généré de façon non légitime, etc. Une analyse plus poussée, éventuellement avec intervention humaine, permettra de déterminer la cause exacte du problème.

Le message décrypté de 112 bits est interprété de façon à fournir en sortie les informations significatives à l'utilisateur. Ces informations peuvent, en elle-même, fournir à l'utilisateur des indications importantes sur la nature du document ou support qui contient la matrice d'information : date de péremption d'un produit, traçage de la chaîne de distribution, corrélation avec autres informations issues du même document, etc. Ces informations peuvent également servir à interroger une base de données, qui pourra ajouter de nouvelles informations, confirmer la validité ou vérifier l'origine du document, détection de doublon, etc.

Cependant, comme expliqué précédemment, la lecture et l'analyse du message transmis ne permettent pas une réponse définitive à la question suivante : « le document en question est-il un original ou une copie ? » En effet, une copie de bonne qualité d'un document original contiendra un message lisible, avec des informations en principe valide. Même si les informations extraites d'une copie sont jugées non valides (par exemple, si la copie du document est écoulée sur un réseau de distribution qui ne correspond pas aux informations extraites de la matrice d'information), il est important de savoir la cause exacte de la fraude : produit légitime écoulé sur un canal illégitime, ou contrefaçon ? Différentes méthodes pour déterminer l'origine du document (original ou copie) sont maintenant présentées.

De nombreux décodeurs fournissent une mesure du taux d'erreur sur le message encodé. Par exemple, pour un code convolutionnel, le détecteur de Viterbi calcule le plus court chemin, en se basant sur une métrique donnée, dans l'espace des états du décodeur qui mène au message encodé observé. La métrique choisie dépend de la représentation des données encodées fournies au décodeur. Si les données fournies sont binaires, la métrique sera basée sur la distance de Hamming, soit le nombre de positions ou les valeurs de bits diffèrent, entre le code fourni en entrée du décodeur, et le code correspondant au plus court chemin dans l'espace des états. Si les données ne sont pas binaires mais quantifiées de manière plus fine, ou si elles sont entières ou réelles, une métrique appropriée sera utilisée.

Peu importe la métrique utilisée pour la mesure du taux d'erreur du message, ce dernier sera en principe plus élevé pour une matrice d'information captée copiée, que pour une matrice d'information captée originale. Pour déterminer le type de la matrice d'information (original ou copie), un seuil de décision est nécessaire. Pour calculer ce seuil de décision, on peut par exemple prendre l'approche suivante :

- générer un échantillon représentatif de l'application, par exemple 100 matrices d'information originales différentes, captées chacune trois fois dans les conditions de l'application, pour un total de 300 images captées ;
- mesurer le taux d'erreur pour chacune des 300 images captées ;
- calculer une mesure de la valeur moyenne et de la dispersion de l'échantillon des taux d'erreurs, par exemple la moyenne arithmétique et l'écart-type de l'échantillon ;
- en fonction des mesures de valeur moyenne et de dispersion, déterminer le seuil de décision du taux d'erreur au dessus duquel la matrice d'information sera considérée comme une copie. Ce seuil de décision peut, par exemple, être égal à la moyenne+ 4*écart-type ;
- afin de détecter des anomalies possible dans l'impression des matrices d'information originales, on peut également fixer un seuil de décision inférieur, par exemple moyenne - 3*écart-type, en bas duquel l'utilisateur serait informé du taux erreur particulièrement bas de l'échantillon ;
- si les conditions de capture de la matrice d'information sont inégales, de sorte que le taux d'erreur est trop élevé du fait des mauvaises conditions de capture, on peut également considérer une zone ou il n'est pas possible de déterminer avec une certitude l'origine de la matrice d'information ; on demande alors une re-capture de l'image. Cette zone peut par exemple, être située entre la moyenne + 2* écart-type, et le seuil de décision (situé dans l'exemple actuel à moyenne + 4* écart-type).

La mesure du taux d'erreur obtenue lors de l'étape de décodage est en principe calculée directement lors de l'étape de décodage, son usage est donc très pratique. Comme on l'a vu, ce taux d'erreur sur le message encodé est basé sur l'accumulation, dans notre exemple, des 35 ou 36 indicateurs pour chaque bit du message encodé. Cependant, dans certain cas il est souhaitable de faire une analyse plus fine du taux d'erreur, basée directement sur les indicateurs et non sur des valeurs accumulées de ces indicateurs. En effet, une analyse plus fine du taux d'erreur peut permettre une meilleure détection matrices d'information copiées.

Pour cela, il est nécessaire de déterminer les positions des erreurs sur chacun des indicateurs. Dans ce but, on commence par déterminer le message encodé d'origine. Ce message encodé d'origine peut être fourni par le décodeur. Dans le cas contraire, on peut le calculer en encodant le message décodé. On note que cette étape d'encodage est particulièrement peu coûteuse lorsqu'un code convolutionnel est utilisé. Le message encodé est ensuite répliqué de façon à obtenir le message répliqué d'origine. Ce message répliqué d'origine peut être comparé au message répliqué d'origine affecté d'erreurs obtenu précédemment, et une mesure du taux d'erreur dans une métrique appropriée peut être calculée. Si le message répliqué affecté d'erreurs est représenté en valeurs binaires, on peut directement compter le nombre d'erreur (équivalent à la distance de Hamming), et le normaliser en le divisant par la taille du message répliqué. Si l'on conserve les valeurs des indicateurs, le message répliqué affecté d'erreurs est représenté en valeurs entières, ou réelles. Dans ce cas, on peut assimiler les messages répliqués à des vecteurs, et on choisira une métrique permettant de calculer une distance entre ces vecteurs. Par exemple, l'indice de corrélation linéaire entre deux vecteurs, compris entre -1 et 1, est une mesure très utilisée de similarité entre vecteurs. Notons qu'une mesure de distance entre vecteurs peut simplement être calculée en prenant la négation d'une mesure de similarité, en l'occurrence la négation de cette indice de corrélation linéaire.

Evidemment, de nombreuses autres mesures de distance peuvent être utilisées en conservant l'esprit du procédé. La mesure de distance sur le message répliqué permet une analyse plus fine, au niveau des unités élémentaires du message représentées par les cellules de la matrice. Il peut être souhaitable de pousser encore l'analyse à un niveau supplémentaire de précision, en considérant séparément les différentes zones géographiques de la matrice. Par exemple, on peut souhaiter analyser et déterminer le taux d'erreur dans une région précise, tel que le coin supérieur gauche de la matrice. Cette possibilité est particulièrement intéressante lorsque, par exemple, la matrice d'information a été localement dégradée (rayure, pliure, usure, tache, etc.), ou encore lorsque sa capture a été faite de manière inégale (parties excessivement sombres ou claire, ou « out of focus » (en français hors plan de focalisation).

En effet, on souhaite éviter que ces dégradations, qui peuvent affecter des matrices d'information originales, résultent en un taux d'erreur élevé pour ces dernières. Une analyse à composantes locales peut alors permettre d'ignorer, ou de pondérer plus faiblement, les zones dégradées qui comportent un taux d'erreur plus élevé.

Ceci peut être accompli en considérant le message permuté ou brouillé, au lieu du message répliqué. En effet, la matrice d'information étant générée de manière fixe (indépendante d'une clé) à partir du message brouillé et des blocs d'alignement, il est par conséquent aisé d'extraire des portions du message permuté ou brouillé correspondant à des zones géographiques précises. On note que si l'on se base sur le message permuté, au lieu du message brouillé, on évite l'étape d'application d'un filtre «ou exclusif » afin d'obtenir le message original brouillé.

Pour une zone géographique arbitraire, on peut appliquer les mesures de distance décrite précédemment entre le message d'origine permuté ou brouillé, et le message affecté d'erreurs permuté ou brouillé. En tous les cas, il est possible d'inclure les blocs d'alignement dans l'analyse.

De nombreux algorithmes contrôlant l'utilisation des différentes zones géographiques sont possibles. Dans certains cas, il est également possible de faire à appel à un opérateur humain, qui serait par exemple capable de déterminer l'origine des dégradations (accidentelle, volontaire, systématique, etc.). Cependant, l'analyse doit souvent se faire de manière automatique, et produire un résultat déterminé : original, copie, erreur de lecture, etc. Une approche générique consiste alors à séparer la matrice d'information en zones exclusives de même taille, par exemple 25 carrés de 22 x 22 pixels pour la matrice de 110 x 110 pixels décrite dans l'exemple ci-dessus. On calcule alors 25 valeurs de distance, entre les messages d'origine et les messages affectés d'erreurs correspondant à ces zone géographiques distinctes. Puis, on extrait les huit valeurs de distance les plus élevées, correspondant aux huit zones ayant subi les dégradation les plus faibles. On calcule finalement un taux d'erreur moyen sur ces huit zones géographiques. On favorise alors les zones de la matrice d'information qui ont eu le plus de chance d'être lues correctement.

On note que, comme plusieurs indices du taux d'erreur peuvent être calculés, en fonction du message encodé, répliqué, permuté ou brouillé, et en fonction également des différentes zones géographiques, on peut regrouper les différents taux d'erreur mesurés, de façon à produire une mesure globale du taux d'erreur.

Partant des valeurs binaires du message de 255 valeurs binaires, le décodeur détermine le message décodé et le nombre, ou taux, d'erreurs. Dans le cas des décodeurs ne fournissant pas le nombre ou le taux d'erreurs, on ré-encode le message décodé et on compare ce message ré-encodé au message issu de la matrice d'information captée.

A partir des valeurs binaires, on détermine si la matrice d'informations analogique captées est un original ou une copie, en fonction du nombre d'erreurs détectées.

Dans le cas où le message peut être décodé et la position des erreurs déterminée, de cette étape de décodage sort une liste de 255 valeurs binaires qui valent « 1 » pour les erreurs et « 0 » lorsqu'il n'y a pas d'erreur pour la valeur binaire correspondante dans le message décodé.

On observe que le nombre d'erreurs qui peuvent être décodées étant limité, si le message décodé ne peut être déterminé, on sait que le nombre d'erreurs est supérieur à la limite de détection en question.

Lorsque le message est décodé, en utilisant la clé secrète, on le déchiffre. On observe que l'utilisation de clés asymétriques permet d'augmenter la sécurité de cette étape.

D'après l'expérience de l'inventeurs, des paramètres d'impression générant, du fait des tolérances physiques du moyen de marquage utilisé, de l'état de surface du document et du dépôt éventuellement effectué, au moins 5 pour cent et, préférentiellement, 10 à 35 pour cent et, encore plus préférentiellement, entre 15 et 30 pour cent et, encore plus préférentiellement, entre 20 et 25 pour cent de symboles incorrectement imprimés fournit une bonne performance en termes de détection de copie. Pour atteindre ce taux d'erreurs, on fait varier les paramètres d'impression qui influencent la dégradation du message imprimé.

On expose ci-dessous, plus en détail, comment est effectuée l'optimisation de la conception de la MIS en fonction des conditions d'impression.

On rappelle, d'abord, que la MIS en format numérique, avant impression, ne contient aucune erreur. En effet, il n'y a pas de génération aléatoire, volontaire, ni « artificielle », d'erreurs. Ces cas ne seraient, d'ailleurs, pas des erreurs d'impression au sens de la présente invention : on appelle « erreur d'impression » une modification de l'apparence d'une cellule qui modifie l'interprétation de l'information portée par cette cellule, lors d'une analyse affranchie des erreurs de lecture ou capture, par exemple microscopique. On note que si les cellules ont souvent à l'origine des valeurs binaires, les images capturées sont fréquemment en niveau de gris, et on a donc une valeur non-binaire associée à une cellule ; cette dernière peut, par exemple, être interprétée en tant que probabilité sur la valeur binaire d'origine de la cellule.

Ainsi, c'est la version imprimée de cette MIS qui contient des erreurs. Les erreurs en question, mises en oeuvre dans la présente invention ne sont pas provoquées artificiellement, mais causées de manière naturelle. En effet, les erreurs considérées sont provoquées, de façon aléatoire et naturelle, durant l'étape de marquage, en imprimant la MIS à une résolution suffisamment élevée.

Ces erreurs sont nécessaires, bien que leur dosage soit délicat. En effet, si la MIS est marquée sans erreur (ou avec un très faible taux d'erreur), une copie de cette MIS réalisée dans des conditions comparables d'impression ne comportera pas davantage d'erreur. Ainsi une MIS imprimée « quasi-parfaitement » peut à l'évidence être copiée à l'identique avec un moyen de marquage analogue. A l'opposé, si la MIS est marquée avec un nombre trop élevé d'erreurs, seule une minorité de cellules seront susceptibles d'être copiées avec des erreurs additionnelles. Il faut donc éviter une résolution de marquage trop élevée, car la possibilité de différencier les originaux des copies s'en trouve réduite.

Formellement, on ne peut pas faire varier la résolution d'impression d'une MIS. En effet, la majorité des moyens d'impressions impriment en binaire (présence ou absence d'un point d'encre) à une résolution fixée, et les niveaux de gris ou de couleur sont simulés par les différentes techniques du tramage. Dans le cas de l'impression offset, cette résolution « native » est déterminée par la résolution de la plaque, qui est, par exemple, de 2.400 points/pouce (2.400 dpi). Ainsi, une image à niveau de gris à imprimer à 300 pixels/pouce (300 ppi) serait en réalité imprimée en binaire à 2.400 dpi, chaque pixel correspondant approximativement à 8 x 8 points de la trame.

Si on ne peut généralement pas faire varier la résolution d'impression, on peut, en revanche, faire varier la taille en pixels des cellules de la MIS, de façon à ce qu'une cellule soit représentée par plusieurs points d'impression et, dans des modes de réalisation particulier, la partie de chaque cellule dont l'apparence est variable, c'est-à-dire imprimée en noir ou blanc, dans les matrices d'information binaires. Ainsi, on peut, par exemple, représenter une cellule par un bloc carré de 1 x 1, 2 x 2, 3 x 3, 4 x 4 ou 5 x 5 pixels (des blocs non-carrés sont également possibles), correspondant à des résolutions de, respectivement, 2.400, 1.200, 800, 600 et 480 cellules/pouce.

Selon certains aspects de la présente invention, on détermine le nombre de pixels de la cellule menant à une dégradation naturelle à l'impression permettant de maximiser la différence entre les originaux et les copies.

Le modèle suivant permet d'apporter une réponse à cette détermination, même s'il résulte d'une simplification des processus mis en oeuvre. Supposons qu'une MIS numérique soit constituée de n cellules binaires, et qu'il existe une probabilité p que chaque cellule soit imprimée avec erreur (de sorte qu'un '1' sera lu comme '0' ou inversement).

On fait l'hypothèse que la copie sera faite avec des moyens d'impression équivalents, ce qui se traduit par une même probabilité p d'erreur sur les cellules lors de la copie. Notons qu'un probabilité d'erreur p supérieure à 0,5 n'a pas de sens dans le cadre de ce modèle, valeur pour laquelle la corrélation est nulle entre la MIS imprimée et la MIS numérique (0,5 correspond donc à la dégradation maximale).

Sur la base d'une image capturée. le détecteur compte le nombre d'erreurs (nombre de cellules ne correspondant pas à la valeur binaire d'origine), et prend une décision sur la nature de la MIS (original/copie) sur la base de ce nombre d'erreurs. Précisons qu'en pratique, l'image capturée est en général en niveaux de gris, de sorte qu'il est nécessaire de seuiller les valeurs des cellules pour obtenir des valeurs binaires. Afin de ne pas perdre d'information lors de l'étape de seuillage, les valeurs en niveau de gris peuvent être interprétées comme des probabilités sur les valeurs binaires. Cependant, pour la suite de notre développement, nous considérerons qu'à partir de l'image reçue, on déduit des valeurs binaires pour les cellules de la MIS.

Afin de mesurer la fiabilité de détection des copies en fonction de la probabilité d'erreur p de chaque cellule, on se base sur un indicateur I, qui est égal à la différence entre le nombre d'erreurs moyen pour les copies et pour les originaux, normalisé par l'écart-type du nombre d'erreur des originaux. On a donc I = (Ec-Eo) / So, où :

Eo est le nombre moyen d'erreur pour les originaux,
Ec est le nombre moyen d'erreur pour les copies et
So est l'écart-type du nombre d'erreurs pour les originaux.

On note que, pour des raisons de simplicité du modèle, on néglige l'écart-type des copies. Comme, dans notre modèle, il existe une probabilité p que chaque cellule soit imprimée avec une erreur, on peut appliquer les formules de moyenne et d'écart-type d'une loi binomiale. On trouve alors les valeurs de Eo, Ec et So en fonction de p et n :

$$E_o = n \cdot p$$

$$E_C = 2 \cdot n \cdot p \cdot (1 - p)$$

$$S_o = \sqrt{n \cdot p \cdot (1 - p)}$$

La valeur de l'indice I est donc :

$$I = \sqrt{n} \cdot \frac{p - 2p^2}{\sqrt{p \cdot (1-p)}}$$

La figure 20 montre en trait plein 700 la valeur de l'indice I en fonction de p pour p entre 0 et 0,5, normalisée sur une échelle de 0 à 1. On constate les choses suivantes : pour p = 0 et p = 0,5, soient les taux d'erreurs minimums et maximums, on a un indice égal à 0, et conséquemment aucune séparation entre les originaux et copies. En effet, sans aucune dégradation des cellules à l'impression, il n'y a pas de possibilité de séparation entre originaux et copies ; à l'opposé, si la dégradation est très élevée (c'est-à-dire proche de 0,5), il ne reste pratiquement plus de cellules à dégrader, et par conséquent peu de possibilité de séparation entre originaux et copies. Il est donc normal que l'indice passe par un optimum : celui-ci correspond à la valeur $p = \left(3 - \sqrt{5}\right)/4 \approx 0.191$ ou 19,1% d'erreurs d'impression ponctuelles.

Nous avons trouvé un optimum de dégradation qui ne tient pas compte du nombre n de cellules à disposition. Or on remarque que l'indice I augmente en fonction de n : il faudrait donc que n soit aussi grand que possible. Cependant, il est relativement fréquent que l'on ait une surface fixe à disposition pour l'impression de la MIS, par exemple 0,5 cm x 0,5 cm. Ainsi une matrice de 50 x 50 cellules de taille 8 x 8 pixels occupe la même taille qu'une matrice 100 x 100 cellules de taille 4 x 4 pixels. Dans ce dernier cas on a quatre fois plus de cellules, mais il est fort possible que la probabilité d'erreur p sera plus élevée. La détermination de la valeur p optimale devrait donc tenir compte du fait qu'un plus grand nombre de cellules est utilisé pour une résolution plus élevée. Si on fait l'hypothèse approximative que la probabilité p est inversement proportionnelle à la surface disponible pour une cellule, on a $p = \alpha \cdot n$ où $\alpha$ est une constante, car la surface totale est divisée par le nombre de cellule n. L'indice I s'exprime alors ainsi :

$$I = \alpha \cdot \sqrt{p} \cdot \frac{p - 2p^2}{\sqrt{p \cdot (1-p)}}$$

Comme illustré sur la courbe en traits interrompus 705 de la figure 20, en tenant compte de l'évolution de p en fonction de n, l'indice passe par un maximum pour la valeur $p = \left(9 - \sqrt{33}\right)/12 \approx 0.271$ ou 27,1% d'erreurs ponctuelles.

Ainsi, on préfère utiliser un taux d'erreur entre 20 et 25 %, car on se trouve entre les optimums de 19,1% et 27,1% trouvés ci-dessus. L'optimum de 19,1% correspond au cas où on a un nombre de cellules fixées, par exemple si la procédure de lecture ne peut lire que les MIS avec un nombre de cellules fixées, alors que l'optimum de 27,1% correspond au cas où il n'y a pas de contrainte sur le nombre de cellules, alors qu'il y a une contrainte sur la dimension physique de la MIS.

On décrit, ci-après, des variantes ou des perfectionnements pour la mise en oeuvre de certains aspects de la présente invention.

1) Mise en oeuvre de matrices d'information non-binaires. L'implémentation n'est pas limitée à des matrices d'information de nature binaire. A toutes les étapes, pour passer du message initial à la matrice d'information, les éléments du message peuvent avoir plus de deux valeurs différentes. Prenons le cas où les cellules de la matrice d'information peuvent avoir 256 valeurs différentes, ce qui correspond à l'impression d'une image en niveaux de gris de valeur comprise entre 0 et 255. Les messages brouillés et encodés auront aussi 256 valeurs. Pour déterminer le message encodé brouillé à partir du message encodé, la fonction de permutation peut rester la même, mais la fonction de « ou exclusif » peut être remplacée par une addition modulo 255, et la séquence pseudo-aléatoire servant à cette addition modulo 256 comportant aussi des valeurs comprises entre 0 et 255.

Le message initial et le la partie de l'encodage correspondant à l'application d'un code correcteur d'erreur pourront encore, mais pas obligatoirement, être représentés par des valeurs binaires. Cependant, la sous-étape de réplication devra transformer un message encodé binaire en message répliqué ayant des valeurs, par exemple, entre 0 et 255 (8 bits). Une manière de faire consiste à regrouper le message encodé binaire par unités de 8 bits successifs, puis à représenter ces unités sur un échelle de 0 à 255.

2) Détermination des copies sur la base du résultat du décodage, sans lecture du taux d'erreur. Dans les modes de réalisation décrits en regard des figures, on utilise le taux d'erreur pour déterminer l'origine d'une matrice d'information captée : original ou copie. Il a été également mentionné que le taux d'erreur n'est mesurable que si le message encodé de la matrice d'information capté peut être décodé. On a expliqué les étapes nécessaires pour s'assurer que le message soit décodable, dans la plupart des cas, jusqu'à un taux d'erreur désiré. On peut ainsi s'assurer que, dans la plupart des cas, le taux d'erreur soit mesurable également pour les copies, pour autant qu'elles soient d'une qualité suffisante.

Dans certains cas, on ne se base pas (uniquement) sur le taux d'erreur pour déterminer si la matrice d'information est une copie. C'est le cas notamment lorsque la quantité d'information insérée dans la matrice d'information est très importante par rapport à la surface ou le nombre de pixels disponibles, de sorte que le message encodé ne peut être répliqué un nombre élevé de fois (dans notre exemple, le message encodé est répliqué 35 ou 36 fois). On cherche alors à s'assurer que les matrices d'informations originales soient lues correctement ; par contre les matrices d'informations copiées sont, dans la plupart des cas, incorrectement lues. Une lecture correcte permet de s'assurer que la matrice d'information est originale ; par contre, une lecture incorrecte n'est pas forcément une garantie que la matrice d'information est une copie.

La quantité d'information est élevée si le message est encrypté asymétriquement, par exemple en utilisant l'algorithme de chiffrement à clé publique RSA avec des tailles de message chiffrés de 1024 bits, ou encore si on cherche à chiffrer symétriquement le portrait du détenteur d'une carte d'identité (2000 à 5000 bits). Si la taille de la matrice d'information est restreinte (par exemple moins d'un centimètre carré), on ne sera pas en mesure de répliquer le message encodé un grand nombre de fois ; selon la qualité d'impression, on sera probablement dans le cas ou le message d'une copie n'est pas lisible.

3) Mise en oeuvre de matrices d'informations contenant plusieurs messages. Il est possible de créer des matrices d'information contenant plusieurs messages, chacun utilisant des clés différentes, de manière récursive. Ceci est notamment intéressant pour des applications ou on assigne des niveaux d'autorisation différents à différents outils de vérification, ou utilisateurs. Ceci est également intéressant pour obtenir plusieurs couches de sécurité : si une clé davantage exposée est découverte par un tiers, seule une partie de la matrice d'information peut être contrefaite.

Pour simplifier l'explication de ces modes de réalisation particuliers, prenons le cas de deux messages (message 1 et message 2). Le groupement des messages 1 et 2 peut se faire à plusieurs niveaux. Par exemple :

- les messages 1 et 2 chiffrés séparément avec une clé 1 et une clé 2 sont concaténés. La clé 1 (ou un groupe de clés 1) est utilisée pour les étapes de permutation, brouillage, etc. Le message 2 ne peut être déchiffré que sur certains lecteurs équipés de la clé 2. L'authentification, pour déterminer si on a une matrice originale ou une matrice copiée, peut être faite sur la globalité de la matrice à partir de la clé 1. Cette approche est avantageuse si l'image est captée par un outil portable qui communique avec un serveur à distance équipé de la clé 2, si la communication est coûteuse, longue ou difficile à établir : en effet le volume de données à envoyer est peu important ;
- le message 1 brouillé et le message 2 brouillé sont concaténés, et la matrice d'information est modulée à partir des messages brouillés concaténés. On note que les deux messages ont des positions physiquement séparées dans la matrice d'information ;
- le message 1 répliqué et le message 2 brouillé sont concaténées, et le message concaténé est permuté et brouillé en utilisant la clé 1. On note que les positions du message 2 brouillé dépendent à la fois de la clé 2 et de la clé 1 ; par conséquent, les deux clés sont nécessaires pour lire le message 2.

L'utilisation de plusieurs messages sécurisés avec des clés différentes permet de gérer des niveaux d'autorisation différents pour différents utilisateurs du module de vérification. Par exemple, certaines entités sont autorisées à lire et authentifier le premier message, d'autres ne peuvent qu'authentifier le premier message. Un module de vérification autonome, sans accès au serveur pour la vérification, ne pourrait en général lire et/ou authentifier le deuxième. De nombreuses autres variantes sont évidemment possibles. On note que les considérations qui précèdent peuvent être étendues à des matrices d'information possédant plus de deux messages.

4) Insertion d'un code détecteur d'erreur ou de falsification. Plus le taux d'erreur est élevé, plus le risque est grand que le message ne soit pas décodé correctement. Il est souhaitable d'avoir un mécanisme pour détecter les messages incorrectement décodés. Parfois, cela peut être fait sur le plan applicatif : le message incorrectement décodé n'est pas cohérent. Cependant, on ne peut pas se baser sur la signification du message décodé pour vérifier sa validité. Une autre approche consiste à estimer le risque que le message soit incorrectement décodé, en se basant sur une mesure du rapport signal/bruit du message encodé, en relation avec le type de code et de décodage utilisés. Des graphiques existent, on se réfère notamment à « Error Control Coding », Second Edition, de Lin et Costello. Par exemple, on peut y lire en page 555 que pour un code convolutionnel avec une mémoire de 8 et un taux de ½, avec décodage « mou » (en anglais « soft decoding ») à valeurs d'entrée continues, le taux d'erreur par bit encodé est de $10^{-5}$ pour un rapport signal sur bruit de 6 dB.

Une autre approche, qui peut être complémentaire à la précédente, consiste à ajouter une valeur hachée du message au message chiffré. Par exemple, on peut utiliser la fonction de hachage SHA-1 pour calculer un certain nombre de bits de hachage du message chiffré. Ces bits de hachage sont ajoutés à la fin du message chiffré. A la détection, le hachage du message décodé est comparé aux bits de hachage concaténés; si les deux sont égaux, on peut en conclure avec une grande probabilité que le message est correctement décodé. On note qu'avec un nombre de 16 bits de hachage, il y a une chance sur $2^{16}$ qu'une erreur ne soit pas détectée. Il est possible d'augmenter le nombre des bits de hachage, mais cela se fait au détriment du nombre de cellules disponibles pour la réplication du message encodé.

5) On peut utiliser le hachage dans le but d'ajouter une couche de sécurité. Supposons en effet que l'on utilise un chiffrement symétrique, et qu'un tiers s'empare de la clé de chiffrement. Cet adversaire peut générer à volonté des matrices d'information valides. On observe, toutefois, que si une clé de brouillage supplémentaire a été utilisée initialement et qu'elle n'est pas en possession du tiers, les matrices d'informations générées par le tiers seront détectées comme copies par un détecteur muni de cette clé de chiffrement supplémentaire. On peut cependant concaténer au message chiffré, un hachage du message brut ou chiffré, ce hachage étant dépendant d'une clé qui n'est en principe pas stockée sur les détecteurs auquel peut potentiellement accéder le tiers. La vérification de la valeur du hachage, possible sur les lecteurs sécurisés, permet de s'assurer qu'une valeur de message valide a été générée. Ainsi, un tiers muni de la clé de chiffrement, mais pas de la clé de hachage, n'est pas en mesure de calculer un hachage valide du message. On ajoute que ce hachage valide permet de s'assurer, d'une manière générale, de la cohérence des informations contenu dans le message.

6) Utilisation des matrices d'information dans le système serveur. Le traitement est intégralement effectué dans un serveur distant du moyen de marquage ou du moyen de capture d'image ou, pour l'authentification, dans un lecteur autonome disposant éventuellement d'un ensemble de clés secrètes.

En variante préférentielle, le serveur permet de lire le message et le lecteur portable permet de détecter la copie.

Préférentiellement, une partie des étapes 320 à 350 de reconstitution du message original est effectuée par un lecteur sur le lieu de capture d'image de la matrice d'informations et une autre partie de l'étape de reconstitution est effectuée par un système informatique, par exemple un serveur, distant du lieu de capture d'image de la matrice d'informations. Les données relatives à la création et à la lecture des matrices d'information (clés et paramètres associés) peuvent ainsi être stockées en un seul point ou serveur, hautement sécurisé. Les utilisateurs autorisés peuvent se connecter au serveur (après authentification) afin de commander un certain nombre de matrices d'information qui seront apposées sur les documents à sécuriser et/ou tracer. Ces matrices d'information sont générées par le serveur, et les clés utilisées sont stockées sur ce serveur. Elles sont transmises à l'utilisateur, ou directement à la machine d'impression, de manière sécurisée (en utilisant par exemple des moyens de chiffrement).

Afin d'effectuer un contrôle de qualité directement sur la chaîne de production, des modules de capture (capteur+ logiciel de traitement+ transfert d'information) permettent à l'opérateur de capturer des images de matrices d'information imprimées, ces dernières étant automatiquement transmises au serveur. Le serveur détermine les clés et les paramètres correspondants, fait la lecture et l'authentification des matrices d'information capturées, et retourne un résultat à l'opérateur. On note que ce processus peut également être automatisé à l'aide de caméras de vision industrielle capturant automatiquement une image de chaque matrice d'information imprimée passant sur la chaîne.

Si les outils portables de capture sur le terrain peuvent effectuer une liaison avec le serveur, une procédure similaire peut être établie pour la lecture et/ou l'authentification. Cependant, cette liaison n'est pas toujours souhaitable ou possible à effectuer, auquel cas on doit stocker certaines des clés sur le dispositif d'authentification. L'utilisation d'une clé de brouillage partiel à la création se révèle alors particulièrement avantageuse, car si celle-ci n'est pas stockée sur l'outil de lecture portable, ce dernier ne possède pas les informations suffisantes pour créer une matrice d'information originale. De façon similaire, si le chiffrement est fait de manière asymétrique, la clé de déchiffrement stockée sur l'outil de lecture portable ne permet pas le chiffrement, et donc la génération d'une matrice d'information contenant un message différent qui serait valide.

Dans certaines applications, le serveur de distribution et de vérification des matrices d'information doit gérer un grand nombre de « profils » différents, un profil étant un couple clé-paramètre unique. Ceci est notamment le cas lorsque le système est utilisé par des compagnies ou institutions différentes, qui désirent sécuriser leurs documents, produits, etc. On voit l'intérêt pour ces différents utilisateurs d'avoir des clés différentes : les informations contenues dans matrices d'information sont en général de nature confidentielle. Le système peut ainsi avoir un grand nombre de clés à gérer. De plus, comme il est d'usage en cryptographie, on désire renouveler les clés à intervalle régulier. La multiplication des clés doit bien entendu être considérée du point de vue de la vérification : en effet, si le module de vérification ne connaît pas d'avance laquelle des clés a été utilisée pour générer la matrice, il n'a pas d'autre choix que de tester une à une les clés à sa disposition. L'insertion de deux messages dans la matrice d'information, chacun utilisant des clés différentes, se révèle très avantageux dans ce mode de mise en oeuvre de l'invention. En effet, on peut alors utiliser une clé fixée pour le premier message, de sorte que le module de vérification peut directement lire et/ou authentifier le premier message. Pour lire le deuxième message, le premier message contient, par exemple, un index qui permet au module de vérification d'interroger une base de données sécurisée, qui pourra lui fournir les clés de lecture et/ou d'authentification du deuxième message. En général, le premier message contiendra des informations de nature générique, alors que le deuxième message contiendra des données de nature confidentielle, qui seront éventuellement personnalisables.

7) Seuil de détection/Paramètres d'impression. Afin de faciliter une authentification autonome de la matrice d'information, on peut stocker le ou les seuils de décisions, ou autres paramètres relatifs à l'impression, dans le ou les messages contenus dans la matrice d'information. Ainsi, il n'est pas nécessaire d'interroger la base de données pour ces paramètres, ni de les stocker sur les modules de vérification autonomes. De plus, cela permet de gérer des applications ou des matrices d'information, de même nature du point de vue applicatif, qui sont imprimés par des méthodes différentes. Par exemple, les matrices d'information appliquées au même type de document, mais imprimées sur des machines différentes, pourraient utiliser la ou les mêmes clés. Elles auraient des paramètres d'impressions stockées dans les messages respectifs.

8) La permutation du message répliqué décrite ci-dessus, est une opération qui peut-être coûteuse. En effet, un nombre élevé de nombre pseudo-aléatoires doit être générée pour la permutation. De plus, lors de la détection, dans certaines applications une multitude de messages brouillés peuvent être calculés sur l'image captée, de sorte que le taux d'erreur le plus bas mesuré sur cette multitude de messages brouillés est calculé. Or, chacun de ces messages brouillés doit être dé-permuté, et cette opération est d'autant plus coûteuse qu'il y a un grand nombre de messages brouillés.

On peut diminuer le coût de cette permutation en groupant un certain nombre d'unités adjacentes du message répliqué, et en permutant ces unités groupées. Par exemple, si le message répliqué est de valeur binaire et compte 10.000 éléments, et qu'on groupe les unités par paires, on aura 5.000 groupes, chaque groupe pouvant prendre 4 valeurs différentes(valeurs quaternaires). Les 5.000 groupes sont permutés, puis les valeurs quaternaires sont à représentées par 2 bits, avant l'application de la fonction OU-exclusif et/ou la modulation. En variantes, la fonction OU exclusif est remplacée par une addition modulo (tel que décrit dans le brevet MIS 1), puis les valeurs sont à nouveau représentées par des bits.

Pour des messages encodés de taille multiple de deux, on peut fixer le nombre d'unités groupées à un nombre impair, par exemple 3, afin d'éviter que deux bits adjacents du message encodés soient toujours adjacent dans la MIS. Ceci augmente la sécurité du message.

Lors de la lecture, on effectue la permutation inverse sur des groupes de valeurs, ou encore sur ces valeurs accumulés sur un seul nombre de façon à être séparables par la suite.

On décrit, ci-après, une méthode d'optimisation des paramètres d'impression pour filigrane numérique (« watermarks »). A titre d'exemple nous prendrons les filigranes numériques spatiaux.

Les filigranes numériques utilisent des modèles de masquage pour prédire la quantité de modifications possibles dans une image qui seront imperceptibles, ou du moins qui sont acceptables du point de vue de l'application. Ces modifications sont donc ajustées en fonction du contenu de l'image et seront donc, typiquement, plus forte dans les zones texturées ou claires car l'oeil humain « masque » davantage les différences dans ces zones. On note que les images numériques destinées à être imprimées peuvent être altérées de façon à ce que les modifications soient visibles et dérangeantes sur l'image numérique, alors qu'elles deviendront invisibles ou du moins dérangeantes une fois imprimée. Ainsi, supposons que, pour une image numérique en niveau de gris ou en couleur constituée de N pixels, un modèle de masquage permette de dériver de quelle quantité, en chaque pixel, le niveau de gris ou la couleur peuvent être modifiés de façon acceptable en vue de l'application. On remarque qu'un modèle de masquage fréquentiel peut facilement être adapté par l'homme du métier pour déduire des valeurs de masquage spatial. De plus, supposons que nous avons un modèle de filigrane numérique spatial, dans lequel l'image est divisée en blocs de pixels de taille identique, et que l'on insère un élément de message, par exemple un bit du filigrane dans chaque bloc en accroissant ou en diminuant la valeur en niveau de gris ou en couleur de chaque pixel jusqu'au maximum ou au minimum permis, l'accroissement ou la diminution se faisant en fonction du bit inséré. On note que les bits du filigrane peuvent par exemple être l'équivalent du message brouillé d'une MIS.

On souhaite déterminer si une image capturée représente un original ou une copie, sur la base du taux d'erreur du message, mesurée par le nombre d'éléments de message incorrectement détectés. On note que, pour cela, il faut le message ait été lu correctement, ce qui suppose l'insertion d'un nombre suffisant de redondances du message.

Il existe de nombreuses manières connues de l'art antérieur pour mesurer la valeur d'un bit stockée en un bloc de l'image, utilisant par exemple du filtrage passe-haut ou passe-bande, une normalisation des valeurs sur l'image ou par zone. En règle générale, une valeur non-binaire, voire continue, positive ou négative, est obtenue. On peut seuiller cette valeur afin de déterminer le bit le plus probable, et en comparaison avec le bit inséré on mesure le taux d'erreur. On peut également conserver les valeurs et mesurer un indice de corrélation, duquel on dérive un taux d'erreur comme vu précédemment.

On note également que le taux d'erreur du message peut être indirectement mesuré par la méthode de détermination de copie sans lecture du message décrite ailleurs.

Il est évident pour l'homme du métier que, plus la taille des blocs, en pixels, est grande, plus le taux d'erreur du message est faible. Par contre, la redondance du message sera plus faible. En fonction de la qualité et de la résolution d'impression, l'homme du métier déterminera la taille du bloc offrant le meilleur compromis entre taux d'erreur du message et redondance, afin de maximiser la probabilité que le message soit correctement décodé. Par contre, l'art antérieur n'aborde pas le problème de la taille de cellule dans le but d'optimisation de la détection de copie. Certains aspects de la présente invention visent à remédier à ce problème.

Le modèle théorique appliqué précédemment pour déterminer le taux d'erreur optimal d'un CNA peut s'appliquer ici. En effet, on peut considérer chaque bloc comme une cellule ayant une probabilité p de se dégrader, et on cherche l'optimum sur p dans le cas ou on a une taille physique fixe (en effet, l'image à imprimer a une taille en pixel et une résolution fixes). Ici encore, on fait l'hypothèse approximative que la probabilité p est inversement proportionnelle à la surface disponible pour une cellule. On trouve encore que l'indicateur I est maximisé pour p=27%. D'autres modèles sont possibles pouvant mener à optimas différents.

On peut appliquer les étapes suivantes pour déterminer la taille de bloc optimale pour la détection de copie :

- recevoir au moins une image représentative d'une image utilisée dans l'application,
- en utilisant un modèle de masquage, calculer, pour chaque pixel de chaque image, la différence maximale pouvant être introduite,
- pour les différentes tailles de bloc à tester, par exemple 1 x 1, 2 x 2,...,jusqu'à 16 x 16 pixels par bloc, générer au moins un message de taille correspondant au nombre de blocs de l'image,
- insérer chacun des messages correspondant à chacune des tailles de blocs dans chacune des images, pour obtenir les images marquées,
- imprimer, au moins une fois, chacune des images marquées dans les conditions d'impressions de l'application,
- capturer, au moins une fois, chacune des images marquées,
- lire le filigrane et déterminer le taux d'erreur pour chacune des images capturées,
- regrouper les taux d'erreurs mesurés par taille de bloc, et calculer le taux d'erreur moyen pour chaque taille de bloc et
- déterminer la taille de bloc dont le taux d'erreur moyen est le plus près du taux d'erreur visé, par exemple 27%.

On décrit, ci-après, une méthode d'optimisation des paramètres d'impression pour MSMA.

Le MSMA est composé de points répartis pseudo-aléatoirement avec une certaine densité, suffisamment faible pour être difficile à repérer, par exemple avec une densité de 1%. Un score s'apparentant au pic de corrélation croisée entre le MSMA de référence et le MSMA capturé correspond au niveau d'énergie du signal, et sera à priori plus faible pour les copies. Précisons que si la copie est « servile », par exemple une photocopie, il y a de grandes chances qu'un grand nombre de points déjà affaiblis par la première impression disparaisse complètement lors de l'impression de la copie : il est alors très facile de détecter la copie dont le niveau d'énergie du signal est beaucoup plus faible. Par contre, si avant d'imprimer la copie on applique un traitement d'image intelligent visant à identifier les points et à les restaurer à leur énergie initiale, cette dernière pourra avoir un niveau d'énergie et un score sensiblement supérieur.

Afin de réduire ce risque et maximiser la différence de score entre les copies et les originaux, il faudrait les imprimer à une résolution ou une taille de points maximisant la différence de niveaux d'énergie. Or l'art antérieur n'aborde pas ce problème, et souvent les MSMA sont créés de façon sous-optimale en regard de la détection de copie.

Un raisonnement simple permet de conclure que, idéalement, les points du MSMA devraient avoir une taille telle qu'environ 50 % d'entre eux « disparaîtront » lors de l'impression originale. « Disparaître », au sens où il est entendu ici, signifie qu'un algorithme cherchant à localiser et reconstruire les points ne pourra détecter correctement que 50% des points initiaux.

En effet, supposons qu'un pourcentage p de points disparaît en moyenne lors de l'impression d'un original. Si la copie est réalisée dans les mêmes conditions d'impression, un pourcentage p des points restants disparaîtra également : par conséquent le pourcentage de points disparus sera donc p+p*(1-p) :

En appliquant le critère utilisé précédemment, dans lequel on cherche à maximiser l'écart entre les originaux et les copies, normalisé par l'écart-type des originaux qui est de p*(1-p), on veut alors maximiser le critère C suivant en fonction de p, où N est le nombre fixé de points du MSMA :

$$C = \sqrt{N \cdot p \cdot (1 - p)}$$

On vérifie que C est maximisé pour p=0,5.

Le modèle précédent s'applique au cas où le nombre de points est fixé. Par contre, si on souhaite une densité de pixel fixée (par exemple 1% de pixels marqués), on pourra utiliser un nombre N plus grand de points pour une densité donnée si les points comportent moins de pixels. Si on définit la densité d et le nombre de pixels par point m, on a la relation :

$$N = \frac{1}{d \cdot m}$$

En faisant l'hypothèse que la probabilité qu'un point disparaisse peut être approximée comme étant proportionnelle à l'inverse de la taille en pixel du point, on a :

$$p = \frac{a}{m}$$

où « a » étant une constante.

Ainsi on exprime C en fonction de p, d, a et m ainsi :

$$C = \frac{\sqrt{p^2 \cdot (1 - p)}}{d \cdot a}$$

On vérifie que, d et a étant constants pour une application donnée, C est maximisé pour p=2/3 ou 66,6%.

Pour l'implémentation, on peut mettre en oeuvre les étapes suivantes :

- pour une densité fixée (de pixel noirs), imprimer des MSMA avec des points de différentes tailles (par exemple, 1 x 1, 1 x 2, 2 x 2, etc),
- capturer au moins une image pour chacun des différents MSMA,
- déterminer le nombre de points correctement identifiés pour chaque MSMA, et mesurer le taux d'erreur et
- sélectionner les paramètres correspondant au MSMA ayant le taux d'erreur le plus près du taux d'erreur optimal pour le critère sélectionné, par exemple 50% ou 66%.

On note que, si le MSMA comporte un message, les codes de contrôle d'erreur doivent être ajustés à ce niveau d'erreur élevé. On note aussi que, si le détecteur est basé sur un niveau d'énergie global, le score de la copie pourrait être artificiellement augmenté en imprimant les points correctement repérés de sorte que qu'ils contribuent de façon maximale à la mesure d'énergie du signal. Enfin, d'autres critères de détermination de l'optimal sont possibles, tenant compte, par exemple, de la densité des points, du nombre de pixels de décalages de position, forme ou taille, du nombre de pixels de couleur correcte dans chaque cellule, ...

On note qu'un traitement similaire peut être effectué pour les MPCV, étant entendu que les cellules affectées d'erreurs d'impression ou de copie, ne changent pas nécessairement d'apparence entre présence et absence, mais leurs positions, tailles ou formes, variables en fonction de l'information représentée, peuvent aussi être modifiées par ces erreurs.

Un MPCV (acronyme de « Matrice de Points à Caractéristiques variables ») est réalisée par génération d'une distribution de points pour que :

- au moins la moitié des points de ladite distribution ne soit pas juxtaposés latéralement à quatre autres points de ladite distribution de points, et
- au moins une dimension d'au moins une partie des points de ladite distribution de points étant du même ordre de grandeur que la moyenne de la valeur absolue de ladite variation imprévisible.

On permet ainsi d'exploiter les caractéristiques géométriques individuelles des points marqués, et de mesurer les variations des caractéristiques de ces points afin de les intégrer dans une métrique (c'est-à-dire de déterminer s'ils satisfont au moins un critère appliqué à une mesure) permettant de discerner les originaux des copies ou des impressions non-légitimes.

Préférentiellement, pour la distribution de points, plus de la moitié des points ne touchent aucun autre point de ladite distribution. Ainsi, contrairement aux matrices d'information sécurisées et aux motifs de détection de copie, et comme les MSMA et les filigranes numériques, on permet d'insérer des marques invisibles ou discrètes. De plus, ces marques sont plus faciles à intégrer que les filigranes numériques ou les MSMA. Elles permettent la détection de copie d'une manière plus fiable que les filigranes numériques, et elles peuvent être caractérisées unitairement dans un processus d'impression statique, ce qui permet l'identification unique de chaque document.

Dans des modes de réalisation, on produit des points dont au moins une caractéristique géométrique est variable, l'amplitude géométrique de la variation générée étant de l'ordre de grandeur de la dimension moyenne d'au moins une partie des points. On permet ainsi de générer et d'utiliser de manière optimale des images de motifs de points à caractéristiques variables, aussi appelées par la suite « MPCV », conçus pour rendre plus difficile, voire impossible, la copie par reconstitution à l'identique.

Selon les modes de réalisation, la variation générée correspond à :

- une variation de position de points, dans au moins une direction, par rapport à une position où les centres des points sont alignés sur des lignes parallèles perpendiculaires à ladite direction et éloignées d'au moins une dimension desdits points dans cette direction ; on permet ainsi d'exploiter les caractéristiques de positionnement précis des points, et de mesurer les variations très limitées dans le positionnement précis des points afin de les intégrer dans une métrique permettant de discerner les originaux des copies ;
- une variation d'au moins une dimension de points, dans au moins une direction, par rapport à une dimension moyenne desdits points, dans cette direction ;
- une variation de forme des points, par rapport à une forme moyenne desdits points, dans cette direction.

La distribution de points peut être représentative d'une information codée, permettant ainsi de stocker ou véhiculer de l'information dans la distribution de points à caractéristiques variables. A quantité d'information contenue égale, les distributions de points peuvent couvrir une surface significativement plus faible que les MSMA, par exemple quelques millimètres carrés, ce qui permet leur capture à haute résolution par des outils de capture portable, et par conséquent une grande précision dans la lecture.

On décrit, ci-dessous comment, en mesurant la quantité d'erreur du message, on peut prendre une décision sur l'authenticité du document en fonction de ladite quantité d'erreur. Pour cela, il est, en principe, nécessaire de décoder ledit message, car si le message est illisible, on ne peut pas déterminer les erreurs dont il est affecté. Cependant, si le marquage a fortement dégradé le message (ce qui est notamment le cas des copies), ou si la quantité d'information véhiculée est élevée, il est possible que le message ne soit pas lisible, auquel cas on ne peut mesurer un taux d'erreur. Il serait souhaitable de pouvoir mesurer la quantité d'erreur sans avoir à décoder ledit message.

D'autre part, l'étape de décodage du message met en oeuvre des algorithmes qui peuvent se révéler coûteux. Si on ne souhaite pas lire le message mais seulement authentifier, l'opération de décodage n'est faite que dans le but de mesurer le taux d'erreur : on préférerait éliminer cette étape. De plus, si on souhaite faire une analyse plus fine du taux d'erreur, on doit reconstruire le message répliqué. Cette reconstruction du message répliqué d'origine peut s'avérer coûteuse, et il serait préférable de l'éviter.

Or, à l'origine d'un des aspects de la présente invention il a été découvert que, dans le but de mesurer une quantité d'erreurs, il n'est, paradoxalement, pas nécessaire de reconstituer le message répliqué d'origine, ni même de décoder le message. On peut en effet mesurer la quantité d'erreur d'un message en exploitant certaines propriétés du message lui-même, au moment de l'estimation du message encodé.

Prenons le cas d'un message binaire. Le message encodé est composé, d'une série de bits, qui sont répliqués, puis brouillés, et le message brouillé sert à constituer la MIS. Le brouillage comprend en règle générale une permutation, et optionnellement l'application d'une fonction 'ou-exclusif', est dépend en général d'une ou plusieurs clés. Ainsi, chaque bit du message peut se trouver représenté plusieurs fois dans la matrice. Dans l'exemple donné en regard des figures 1 à 5B, un bit se retrouve répété 35 ou 36 fois. Lors de l'étape d'accumulation estimation du message encodé, on accumule l'ensemble des indicateurs de la valeur de chaque bit ou élément du message. L'incertitude statistique sur la valeur du bit est généralement significativement réduite par cette opération. Ainsi, on peut utiliser cet estimé, que l'on considère comme la valeur correcte du bit, afin de mesurer la quantité d'erreur. En effet, si la matrice marquée comporte relativement peu d'erreurs, celles-ci seront essentiellement toutes corrigées lors de l'étape d'accumulation, et ainsi il n'est pas nécessaire de reconstruire le message encodé dont on a déjà une version sans erreur. De plus, si quelques bits du message encodé ont été mal estimés, en général les bits mal estimés auront un impact réduit sur la mesure de la quantité d'erreur.

On donne, ci-dessous, un algorithme d'étapes de mesure de quantité d'erreurs sans décodage du message, pour des données binaires.

- pour chaque bit du message encodé, accumuler les valeurs des indicateurs,
- déterminer par seuillage la valeur (la plus probable) du bit (« 1 » ou « 0 ») ; on obtient l'estimé le plus probable du message encodé et
- dénombrer le nombre d'indicateurs (pour chaque cellule, il s'agit de la densité, ou valeur de luminance normalisée) qui correspondent à l'estimé du bit du message encodé correspondant. On peut ainsi mesurer un nombre entier d'erreurs, ou un taux ou pourcentage de bits erronés.

Alternativement à cette dernière étape, on peut conserver la valeur de l'indicateur et mesurer un indice de similarité global entre les valeurs des indicateurs et les bits estimés correspondant du message encodé. Un indice de similarité pourrait être le coefficient de corrélation, par exemple.

En variante, on peut associer un poids ou coefficient indiquant la probabilité que chaque bit estimé du message encodé soit correctement estimé. Ce poids est utilisé pour pondérer les contributions de chaque indicateur en fonction de la probabilité que le bit associé soit correctement estimé. Une façon simple d'implémenter cette approche consiste à ne pas seuiller les accumulations correspondant à chaque bit du message encodé.

On note que, plus le message est bruité, plus il y a de risque que le bit estimé du message encodé soit erroné. Ceci entraîne un biais tel que la mesure de la quantité d'erreur sous-estime la quantité d'erreur réelle. Ce biais peut être estimé statistiquement et corrigé lors de la mesure de la quantité d'erreur.

Il est intéressant de remarquer qu'avec cette nouvelle approche à la mesure de la quantité d'erreur, une MIS peut être authentifiée sans qu'il soit nécessaire de connaître, directement ou indirectement, les messages nécessaires à sa conception. Il faut simplement connaître les groupements de cellules qui partagent des propriétés communes.

En variantes, on obtient plusieurs ensembles d'indicateurs, provenant de différents pré-traitements appliqués à l'image (par exemple, une transformation d'histogramme), ou de lecture à des positions différentes de la MIS ; on calcule une quantité d'erreurs pour chaque ensemble d'indicateurs, et on retient le plus faible taux d'erreur ; pour accélérer les calculs, on peut ne faire l'estimation du message encodé qu'une seule fois (cette estimation ayant peu de chance de changer pour chaque ensemble d'indicateurs).

On peut considérer que l'on génère des images (ou matrices) dont des sous-parties partagent des propriétés communes. Dans le cas le plus simple, des sous-groupes de cellules ou pixels ont la même valeur, et ils sont répartis pseudo-aléatoirement dans l'image en fonction d'une clé. La propriété en question n'a pas besoin d'être connue. A la lecture, on n'a pas besoin de connaître cette propriété, puisqu'on peut l'estimer. Ainsi, la mesure d'un score permettant d'indiquer l'authenticité ne nécessite pas de référence à l'image d'origine, ni de détermination d'un message. Ainsi, dans des modes de réalisation, on met en oeuvre les étapes suivantes, pour réaliser une authentification de document :

- une étape de réception d'un ensemble de sous-groupe d'éléments d'image (par exemple, des valeurs de pixels), chaque sous-groupe d'éléments d'images partageant la même caractéristique, lesdites caractéristiques n'étant pas nécessairement connues,
- une étape de capture d'image,
- une étape de mesure des caractéristiques de chaque élément d'image,
- une étape d'estimation des caractéristiques communes à chaque sous-groupe d'éléments d'image,
- une étape de mesure de correspondance entre lesdites estimations des caractéristiques communes à chaque sous-groupe, et lesdites caractéristiques mesurées de chacun des éléments d'image et
- une étape de décision de l'authenticité, en fonction de ladite mesure de correspondance.

Dans d'autres modes de réalisation, qui vont maintenant être décrits, pour authentifier un CNA, il n'est pas nécessaire de connaître ou reconstruire l'image d'origine, ni de décoder le message qu'il comporte. En fait, il suffit, à la création, de créer une image composée de sous-ensemble de pixels qui ont la même valeur. A la détection, il suffit de connaître les positions des pixels qui appartiennent à chacun des sous-ensembles. La propriété, par exemple la valeur des pixels appartenant au même sous-ensemble, ne doit pas être connue: elle peut être retrouvée lors de la lecture sans qu'un décodage de message soit nécessaire. Même si la propriété n'est pas retrouvée correctement, le CNA peut quand même être authentifié. Pour la suite, nous appelons « motif aléatoire authentifiant » (« MAA ») ce nouveau type de CNA. Le mot 'aléatoire' signifie que, à l'intérieur d'un ensemble donné de valeurs possibles, le MAA peut prendre n'importe laquelle de ses valeurs, sans que la valeur soit conservée après la création d'image.

Par exemple, supposons que l'on a un CNA composé de 12.100 pixels, soit un carré de 110 x 110 pixels. On peut diviser ces 12.100 pixels en 110 sous-ensembles faisant 110 pixels chacun, de telle sorte que chaque pixel se trouve dans exactement un sous-ensemble. La division des pixels en sous-ensembles se fait de manière pseudo-aléatoire, préférentiellement à l'aide d'une clé cryptographique, de telle sorte qu'il n'est pas possible sans la clé de connaître les positions des différents pixels appartenant à un sous-ensemble.

Une fois les 110 sous-ensembles déterminés, on attribue une valeur aléatoire ou pseudo-aléatoire aux pixels de chaque sous-ensemble. Par exemple, pour des valeurs binaires de pixel, on peut attribuer la valeur « 1 » ou la valeur « 0 » aux pixels de chaque sous-ensemble, pour un total de 110 valeurs. Dans le cas de valeurs déterminées aléatoirement, on génère 110 bits avec un générateur aléatoire, ces 110 bits pouvant être ou ne pas être stockés par la suite. On note qu'il existe $2^{110}$ MAA possibles pour une division en sous-ensembles donnée. Dans le cas de valeurs générées pseudo-aléatoirement, on fait appel à un générateur de nombres pseudo-aléatoires auquel on fournit une clé cryptographique, généralement stockée par la suite. On remarque que pour un tel générateur basé sur la fonction de hachage SHA1, la clé fait 160 bits, alors qu'il ne faut générer que 110 bits dans notre exemple. Ainsi, l'utilisation du générateur peut avoir une utilité limitée.

Connaissant la valeur de chacun des pixels, on peut alors assembler une image, dans notre cas de 110 x 110 pixels. L'image peut être un simple carré, augmenté d'une bordure noire facilitant sa détection, ou peut avoir une forme arbitraire, contenir du microtexte, etc. Des groupes de pixels aux valeurs connues servant à un alignement d'image précis peuvent aussi être utilisés.

L'image est marquée de façon à optimiser son degré de dégradation, en fonction de la qualité de marquage, elle-même tributaire de la qualité du substrat, de la précision de la machine de marquage et de ses réglages. Des méthodes sont données ci-dessus à cet effet.

La détection à partir d'une image captée d'un MAA se produit comme suit. Des méthodes de traitement et reconnaissance d'images connues de l'homme du métier sont appliquées, afin de repérer avec précision le motif dans l'image captée. Puis, les valeurs de chaque pixel du MAA sont mesurées (souvent sur une échelle de 256 niveaux de gris). Pour la commodité et l'uniformité des calculs, elles peuvent être normalisées, par exemple sur une échelle de -1 à +1. Elles sont ensuite regroupées par sous-ensemble correspondant, dans notre exemple, à des sous-ensembles de 110 pixels.

Ainsi, pour un sous-ensemble de pixels ayant, à l'origine, une valeur donnée, on aura 110 valeurs. Si la valeur des pixels d'origine (sur une échelle binaire) était « 0 », les valeurs négatives (sur une échelle de -1 à +1) devraient dominer, alors que les valeurs positives devraient dominer si la valeur était « 1 ». On pourra alors assigner aux 110 pixels une valeur de « 1 » ou « 0 », et ceci pour chacun des 110 sous-ensembles.

Pour chacun des 12.100 pixels, nous avons une valeur mesurée dans l'image, possiblement normalisée, et une valeur estimée d'origine. On peut alors mesurer une quantité d'erreur, par exemple en dénombrant la quantité de pixels qui coïncident avec leur valeur estimée (c'est-à-dire, si les valeurs sont normalisées sur -1 à +1, une valeur négative, respectivement positive, coïncide avec « 0 », respectivement « 1 »). On peut aussi mesurer un indice de corrélation, etc.

Le score (« score » signifiant à la fois un taux d'erreur ou une similitude) trouvé est alors comparé à un seuil afin de déterminer si l'image captée correspond à un original ou une copie. Des méthodes standard de statistique peuvent être utilisées pour déterminer ce seuil.

On note que la procédure décrite n'utilise pas de données extérieures à l'image, outre la composition des sous-ensembles, pour déterminer un score. Ainsi, on peut exprimer le dénombrement de la quantité d'erreur ainsi.

La quantité d'erreur est égale à la somme, sur les sous ensembles, des

$$(\text{Somme}(\text{Signe}(z_{ij}) == f(z_{i1}, .., z_{iM}))).$$

où $z_{ij}$ est la valeur (possiblement normalisée) du i-ième pixel du j-ième sous-ensemble comportant M éléments et f est une fonction estimant une valeur de pixel pour le sous-ensemble, par exemple

$$f(z_{i1}, \ldots, z_{iM}) = \text{Signe}(z_{i1} + .. + z_{iM}).$$

Plusieurs variantes sont possibles :

- une clé cryptographique est utilisée pour brouiller les valeurs des pixels d'un même sous-ensemble, afin qu'ils n'aient pas tous la même valeur. La fonction de brouillage peut être le « Ou exclusif »,
- la fonction de calcul d'un score peut estimer et intégrer une probabilité que la valeur du pixel soit « 1 », respectivement « 0 » (pour des valeurs de pixel binaires),
- la méthode décrite peut être appliquée à d'autres types de CNA si la construction de ceux-ci s'y prête (en particulier pour les MIS, avec les avantages mentionnés précédemment),
- la méthode décrite peut s'étendre à des valeurs de pixel non-binaires et/ou
- les valeurs des pixels d'un sous-ensemble peuvent être déterminées de façon à véhiculer un message (sans que celui n'ait forcément à être nécessairement décodé à la lecture).

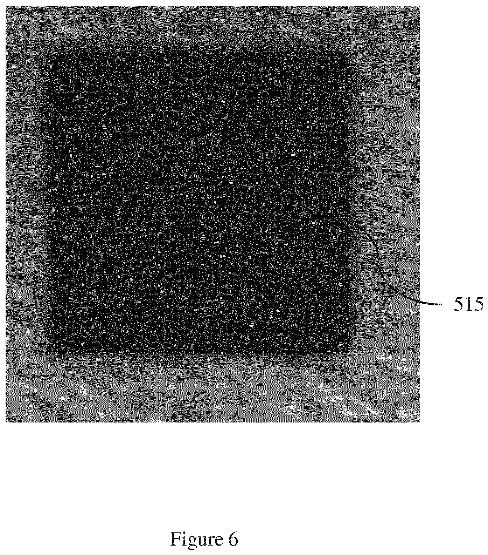

La lecture d'un CNA nécessite un positionnement précis de ce dernier dans l'image captée, afin que la valeur de chacune des cellules qui le composent soit restituée avec la plus grande fidélité possible compte tenu des dégradations causées par l'impression et éventuellement par la capture. Or, les images captées contiennent souvent des symboles qui peuvent interférer avec l'étape de positionnement. Evidemment, plus la surface relative occupée par la MIS est faible, plus les chances sont grandes que d'autres symboles ou motifs interfèrent dans l'étape de positionnement. Par exemple, une saisie de la taille d'une page A4, par exemple d'un étui contenant un MIS contiendra une foule d'autres éléments. Cependant, même des captures de relativement petite taille, par exemple, environ 1,5 par 1,1 cm, peuvent contenir des symboles qui peuvent être confondus avec une MIS, tel qu'un carré noir, un DataMatrix, etc. (voir figure 6).

La localisation d'une MIS peut être rendue plus difficile par les conditions de capture (mauvais éclairage, flou, etc.), ainsi que par l'orientation arbitraire de positionnement, sur 360 degrés.

Contrairement à d'autres symboles de type code à barres 2D qui varient relativement peu sur différents types d'impression, les caractéristiques (par exemple de texture) des CNA sont extrêmement variables. Ainsi, les méthodes de l'art antérieur, telles que celle présentée dans le document US 6,775,409 ne sont pas applicables. En effet, cette dernière méthode est basée sur la directionnalité du gradient de luminance pour la détection des codes ; or pour les MIS le gradient ne possède pas de direction particulière.

Certaines méthodes de localisation des CNA peuvent bénéficier du fait que ces derniers apparaissent sous forme carrée ou rectangulaire, ce qui engendre un contraste marqué sur des segments continus, qui peuvent être détectés et utilisés par des méthodes standard de traitement d'image. Or dans certains cas ces méthodes échouent, et, d'autre part, on souhaite pouvoir utiliser des CNA qui ne soient pas forcément (ou ne s'inscrivent pas forcément dans) un carré ou rectangle.

D'une manière générale, la surface imprimée d'un CNA contient une densité d'encre élevée. Or, si l'exploitation de la mesure de densité d'encre est utile, elle ne peut être le seul critère : en effet, les Datamatrix ou autres codes à barres souvent adjacents aux CNA ont une densité d'encre encore plus élevée. Ce seul critère n'est donc pas suffisant.

Il a été suggéré, dans le document EP 1 801 692, d'exploiter l'entropie élevée des MDC afin de déterminer les portions d'images appartenant aux MDC. Or, si les MDC, avant impression, ont une entropie effectivement élevée, cette entropie peut être fortement altérée par l'impression, la capture, et par la méthode de calcul utilisée. Par exemple, une simple mesure d'entropie basée sur l'étalement d'histogramme des valeurs de pixels de chaque zone peut parfois mener à des indices plus élevés sur des régions peu riches en contenu, qui à priori devraient avoir une faible entropie : cela peut être dû, par exemple, à des artefacts de compression JPEG, ou encore à la texture du papier qui est préservée dans la capture d'image, ou encore à des effets de réflexion du substrat. On voit donc que le critère d'entropie est également insuffisant.

Plus généralement, les méthodes de mesure ou de caractérisation de textures paraissent plus appropriées, afin de caractériser à la fois les propriétés d'intensité ou les relations spatiales spécifiques aux textures des CNA. Par exemple, dans « Statistical and structural approaches to texture », incorporé ici par référence, Haralick décrit de nombreuses mesures de caractérisation de textures, qui peuvent être combinées de façon à décrire de manière unique un grand nombre de textures.

Cependant, les CNA peuvent avoir des textures qui varient énormément selon le type d'impression ou de capture, et il n'est en général pas possible, ou du moins peu pratique, de fournir les caractéristiques de texture au module de localisation des CNA, d'autant plus que celles-ci devront être ajustées en fonction des effets spécifiques à l'outil de capture sur les mesures de texture.

Il semble donc que pour localiser un CNA de manière fiable, une multiplicité de critères doivent être intégrés de manière non rigide. En particulier, les critères suivant sont appropriés :

- la texture CNA : les CNA seront en général plus chargés d'encre et plus contrastés que leur environnement. Notons que ce seul critère peut ne pas être suffisamment distinctif : par exemple certains CNA saturés d'encre peuvent être peu contrastés,
- les CNA ont un fort contraste à leur extrémité: en général une zone de silence non-marquée entoure le CNA, qui lui-même peut-être entouré d'une bordure afin de maximiser l'effet de contraste (à noter que certains CNA ne possèdent pas de bordure, ou encore seulement une bordure partielle),
- les CNA ont souvent une forme spécifique : carré, rectangulaire, circulaire, ou autre, qui peut servir à la localisation et
- dans leur structure interne, les CNA possèdent souvent des ensembles de données fixés, connus à condition de posséder la ou les clés cryptographiques ayant servi à les générer, servant généralement à la synchronisation fine. Si ces ensembles de données ne sont pas détectés, cela indique soit que la MIS n'a pas été localisée correctement, soit que les ensembles de données de synchronisation ne sont pas connus.

Ces quatre critères qui sont les caractéristiques globales de texture des CNA, les caractéristiques aux extrémités des CNA, la forme générale, et la structure interne peuvent permettre, s'ils sont adéquatement combinés, de localiser avec une très grande fiabilité les CNA dans des environnements dits « hostiles » (présence d'autres codes bidimensionnels, mauvaise qualité de capture, caractéristiques d'images localement variables, etc.)

La méthode suivante est proposée afin de localiser les CNA. On reconnaîtra que de nombreuses variantes sont possibles sans de départir de l'esprit de la méthode... Elle s'applique aux CNA carrés ou rectangulaires, mais peut se généraliser à d'autres types de formes :

- diviser l'image en zones de même taille, la taille des zones étant de sorte que la surface du CNA corresponde à un nombre suffisant de zones ;
- mesurer pour chaque zone, un indice de texture. L'indice peut être multidimensionnel, et comprend préférablement une quantité indiquant la charge d'encre et une quantité indiquant la dynamique locale ;
- éventuellement, calculer pour chaque zone un indice global de texture, par exemple sous forme d'une somme pondérée de chaque indice mesuré pour la zone ;
- déterminer un ou plusieurs seuils de détection, selon que l'on ait conservé un seul ou plusieurs indices par zone. Généralement, une valeur supérieure au seuil suggérant que la zone correspondante fait partie du CNA. Pour les images présentant des dérives d'éclairement une valeur de seuil variable peut être appliquée. Lorsque plusieurs indices sont conservés, on peut exiger que tous les indices soient supérieurs à leur seuil respectif pour que la zone soit considérée comme faisant partie du CNA, ou encore qu'un seul des indices soit supérieur à a son seuil respectif ;
- déterminer les zones qui appartiennent au CNA, appelées « zones positives » (et inversement « zones négatives »). On obtient une image binaire. En option, appliquer un nettoyage par application successive de dilatation et érosion, par exemple en suivant les méthodes décrites au chapitre 9 du livre « Digital Image Processing using matlab » de Gonzales, Woods et Eddin ;
- déterminer les amas continus de zones positives, de taille supérieure à une zone minimale. Si aucun amas continu n'est détecté, revenir à la deuxième étape de cet algorithme et abaisser le seuil jusqu'à ce qu'au moins un amas continu de taille minimale soit détecté. En variante, faire varier les critères de sélection des zones si chaque zone a plusieurs indices de texture. Déterminer les zones traçant le contour de l'amas, qui sont en bordure du CNA, caractérisées par le fait qu'elles ont un moins une zone voisine négative ;
- pour la détection d'un carré, déterminer les deux couples de points formés des points les plus éloignés. Si les deux segments correspondants sont de même longueur, et s'ils forment un angle de 90 degrés, on déduit qu'ils forment un carré. En variante, appliquer la transformée de Hough ;
- en variante, appliquer à l'image d'origine ou à une version réduite de celle-ci, un filtre de détection de limites. (voir chapitre 10 du même livre pour des exemples de filtres) et
- déterminer un seuil, puis les positions des pixels ayant une réponse au filtre supérieure au seuil. Ces pixels qui indiquent les limites des objets, notamment les limites de la zone du MIS. Vérifier que les zones en bordures du CNA déterminées en quatre contiennent un nombre minimal de pixels indiquant les limites d'objet.

En ce qui concerne l'étape de division de l'image en zones, la taille des zones a une influence qui peut être importante sur le résultat de la localisation. Si les zones sont trop petites, les indices mesurés seront imprécis et/ou fortement bruités, ce qui rend difficile la détection des zones appartenant au CNA. Si par contre elles sont trop grandes, la localisation du CNA sera imprécise, et il sera difficile de déterminer la forme d'un CNA inférée correspond à la forme recherchée (par exemple un carré). De surcroît, la taille des zones devrait être ajustée en fonction de la surface du CNA dans l'image captée, qui peut être connue mais ne l'est pas nécessairement. Pour certains outils de capture, les images seront de taille fixe, par exemple 640 x 480 pixels est un format fréquemment rencontré. La résolution de capture sera alors, en principe, peu variable. Certains outils de capture pourront supporter plus d'un format d'image, par exemple 640 x 480 et 1.280 x 1.024. Il conviendra alors d'ajouter la taille de la zone en fonction de la résolution. Par exemple, pour un outil de capture produisant des images de format 640 x 480, à la résolution de capture équivalente à 1.200 dpi (points par pouce), on pourra alors diviser l'image en zones de 10 x 10 pixels, pour un total de 64 x 48 zones. Si le même outil supporte également un format 1.280 x 1.024, ce qui a pour effet de doubler la résolution de capture à 2.400 dpi, on doublera également la taille des zone à 20 x 20 pixels (on pourra laisser de côté les pixels sur les bords ne format par une zone complète). Pour les images issues de scanner, dont la résolution n'est parfois pas connue, on pourra faire l'hypothèse d'une résolution de capture de 1.200 dpi, ou la déterminer d'après les méta-données.

On note qu'il est possible d'utiliser des zones de la taille d'un pixel, à condition dans les étapes qui suivent d'éliminer ou maîtriser les risques de bruit plus élevés.

En ce qui concerne la mesure d'un indice de texture, comme on l'a décrit plus haut, la texture des CNA pouvant varier fortement, il n'existe pas de mesure d'indice de texture idéal. Néanmoins, les CNA se caractérisent généralement par une forte charge d'encre et/ou de fortes variations. Si l'encre utilisée est noire ou sombre, et que les pixels ont des valeurs qui s'échelonnent de 0 à 255, on pourra prendre $y_i=255-x_i$ comme valeur pour le $i$-ième pixel d'une zone. L'indice de charge d'encre de la zone peut alors être la moyenne des $y_i$. Cependant, on peut également prendre la médiane, la valeur la plus basse, ou encore un pourcentile (dans un histogramme, la position/valeur dans l'histogramme qui correspond à un pourcentage donné des échantillons) de l'échantillon de valeurs. Ces dernières valeurs peuvent être plus stable, ou encore plus représentatives, qu'une simple moyenne.

Comme indice de variations, on peut mesurer le gradient en chaque point, et en conserver la valeur absolue.

Comme indice combiné de texture, on peut ajouter, à proportion égale ou non, l'indice de charge d'encre et l'indice de variations. Comme ces indices ne sont pas à la même échelle, on pourra dans un premier temps calculer les indices de charge d'encre et de variations de l'ensemble des zones de l'image, les normaliser afin que chaque indice ait les mêmes maximas/minimas, puis les additionner pour obtenir les indices combinés de texture.

En ce qui concerne la détermination du seuil de détection, on note qu'elle est très délicate. En effet, si ce seuil est trop élevé, de nombreuses zones appartenant au CNA ne sont pas détectées comme telle. A l'inverse, un seuil trop bas entraînera la fausse détection d'un nombre important de zones n'appartenant pas à un CNA.

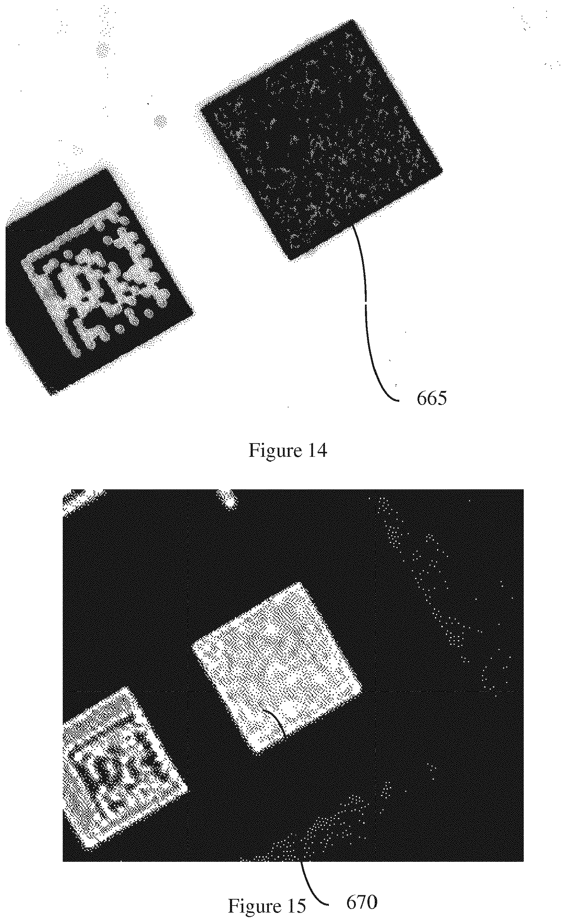

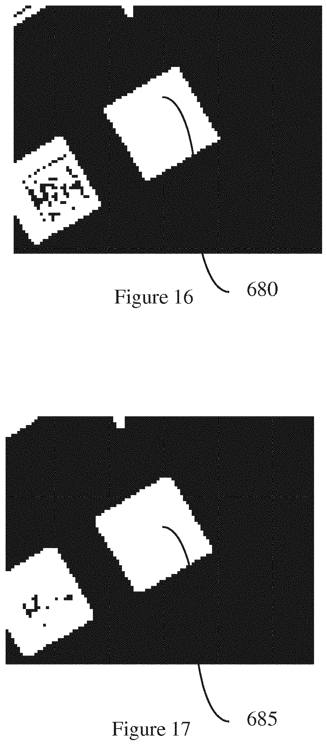

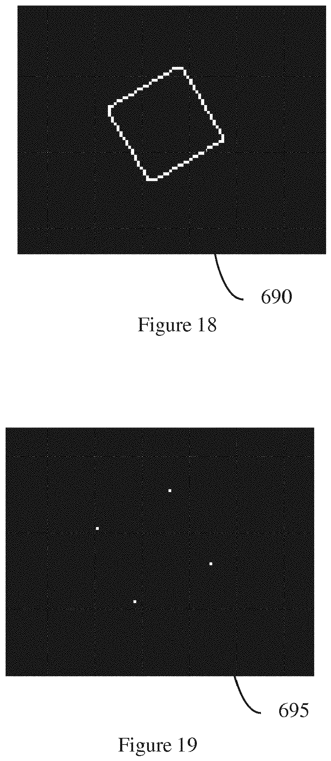

La figure 14 représente une matrice d'information 665 capturée avec un angle d'environ 30 degrés et une résolution d'environ 2.000 dpi. La figure 15 représente une mesure 670 d'un indice combiné de texture (106x85) réalisée sur l'image de la figure 14. La figure 16 représente l'image de la figure 15, après seuillage, c'est-à-dire comparaison avec une valeur seuil, formant l'image 680. La figure 17 représente l'image de la figure 16 après application d'au moins une dilatation et une érosion, formant l'image 685. La figure 18 représente un contour 690 de matrice d'information, contour déterminé par traitement de l'image de la figure 17. La figure 19 représente des coins 695 du contour illustré en figure 18, déterminés par traitement de l'image de la figure 18.

Ce qui rend difficile la détermination du seuil, c'est que les propriétés des images varient fortement. De plus, les images peuvent avoir des propriétés de texture qui changent localement. Par exemple, à cause des conditions d'éclairage le côté droit de l'image pourra être plus sombre que son côté gauche, et un même seuil appliqué aux deux côtés résultera en de nombreuses erreurs de détection.

L'algorithme suivant offre une certaine robustesse aux variations de texture, en divisant l'image en quatre zones et en adaptant les seuils de détection aux quatre zones.

Déterminer le 10ème et le 90ème pourcentiles (ou premier et dernier déciles) de l'indice pour l'ensemble de l'image. Par exemple, 44 et 176. Déterminer un premier seuil à la moitié de ces deux seuils : (176+44)/2=110. En divisant la matrice des zones en quatre régions de taille égale (par exemple, 32 x 24 pour une taille de 64 x 48), Calculer le 10ème pourcentile pour chacune des quatre zones, par exemple 42, 46, 43 et 57.

On décrit, ci-après, une méthode de segmentation locale (« seuillage adaptatif »). Certains CNA capturés ont un faible contraste aux frontières, ou encore présentent des dérives d'éclairement qui peuvent être telles que certaines parties du CNA peuvent être plus claires que le fond (ce qui en principe ne doit pas être le cas pour un CNA imprimé en couleur noire sur fond blanc). Dans ce cas, il n'existe tout simplement pas de seuil global qui permette une segmentation correcte, ou du moins celui-ci n'est pas déterminable par les méthodes classiques.

Pour résoudre ce type de problème, on a recours à l'algorithme suivant permettant de déterminer les zones présentant une homogénéité de score prédéfinie. Par exemple, on détermine la zone à segmenter en partant d'un point (ou d'une zone) de départ, puis en sélectionnant itérativement toutes les zones adjacentes présentant un critère de similitude. Souvent, ce point de départ sera sélectionnée parce qu'il contient une valeur extrême, par exemple le score le plus bas de l'image. Par exemple, si la zone de départ a un score (minimal) de X, et que le critère de similitude consiste à avoir toutes les zones comprises dans un intervalle X à X+A, A étant une valeur positive pré-calculée, par exemple en fonction de mesures de la dynamique de l'image, on sélectionne itérativement l'ensemble des cellules adjacentes qui satisfassent ce critère.

SI cette méthode échoue, une méthode alternative consiste à déterminer les zones ne présentant pas de transition brutale. La méthode consiste également à trouver un point de départ de score X, puis à sélectionner un point adjacent Pa si son score Y est inférieur à X+B (B étant également une valeur prédéterminée). Puis, si ce point adjacent Pa est sélectionné, le critère de sélection pour les points adjacentes à Pa est modifié à Y+B.

On note que ces algorithmes peuvent être appliqués plusieurs fois à l'image, par exemple en prenant des points de départ différents à chaque itération. On peut obtenir ainsi plusieurs zones candidates, dont certaines peuvent se chevaucher.

En ce qui concerne le classement des zones en fonction du seuil calculé, des approches similaires peuvent être utilisées pour la détermination d'un seuil global, telle que la méthode itérative décrite aux page 405 à 407 du livre « Digital Image Processing using matlab » (Gonzales, Woods et Eddin).

En ce qui concerne l'affinage des zones appartenant au CNA, la détermination des zones bordures peut se faire en sélectionnant les zones dont au moins une zone adjacente ne répond pas au critère des zones (indice de texture supérieur à seuil de détection).

Lorsqu'on a déterminé une ou plusieurs zones candidates, il faut encore déterminer si les zones ou une forme correspondant à celle recherchée. Par exemple, de nombreux CNA ont des formes carrée, mais celle-ci peut être rectangulaire, circulaire, etc. On peut alors déterminer une « signature » de la forme recherchée, en déterminant le barycentre de la forme d'origine, puis on calculant la distance entre le barycentre et l'extrémité la plus éloignée de la forme selon chaque degré d'angle, en balayant les angles de 0 à 360 degrés. Ainsi, la signature correspond à la courbe représentant une distance normalisée en fonction de l'angle : cette courbe est constante pour un cercle, comporte quatre extrémas de même valeur pour un carré, etc.

Pour une zone candidate, on calcule également la signature. Puis, on apparie cette signature à la signature d'origine, en mesurant par exemple le pic d'autocorrélation (afin de tenir compte d'une rotation possible). Un ré-échantillonnage de la signature d'origine ou calculée peut être nécessaire. Si la valeur de similitude calculée est supérieure à un seuil prédéterminé, on conserve la zone, sinon on la rejette. Si on recherche des zones comportant des extrémas, par exemple un carré, il peut être utile pour la suite de déterminer à partir des points associés aux extrémas les coins du carré.

Les étapes mises en oeuvre peuvent être les suivantes :

- recevoir une signature d'origine, et une représentation de donnée décrivant une zone candidate,
- calculer la signature de la zone candidate,
- mesurer la valeur de similitude maximale entre la signature candidate et la signature d'origine et
- conserver la zone candidate si cette valeur de similitude est supérieure à un seuil, et en option, déterminer les points correspondants aux extrémas de la signature candidate

On va maintenant décrire une méthodes pour concevoir des MIS peu sensibles à la charge d'encre. Comme on l'a vu, la charge d'encre excessive de la MIS peut diminuer significativement sa lisibilité, voire même sa capacité à être distinguée des copies. Or, si des moyens existent afin de contrôler autant que possible la charge d'encre à l'impression, ils peuvent être difficiles, voire impossibles, à mettre en oeuvre. Il serait préférable d'avoir des MIS robustes à une gamme étendue de charge d'encre.

Il s'avère que les MIS sont en général plus sensibles à une charge d'encre élevée qu'à une charge d'encre faible. En effet, lorsque la charge d'encre est faible, les cellules noires (ou contenant de la couleur) sont en général toujours imprimées, et ainsi la lecture de la matrice s'en trouve peu affectée. Par contre, comme le montre l'image 515 de la Figure 6, lorsque la charge d'encre est trop élevée, l'encre tend à saturer le substrat, et les zones blanches se trouvent en quelque sorte « inondées » par l'encre des zones noires environnantes. Un effet similaire est observable pour des marques par percussion, gravure laser, etc.

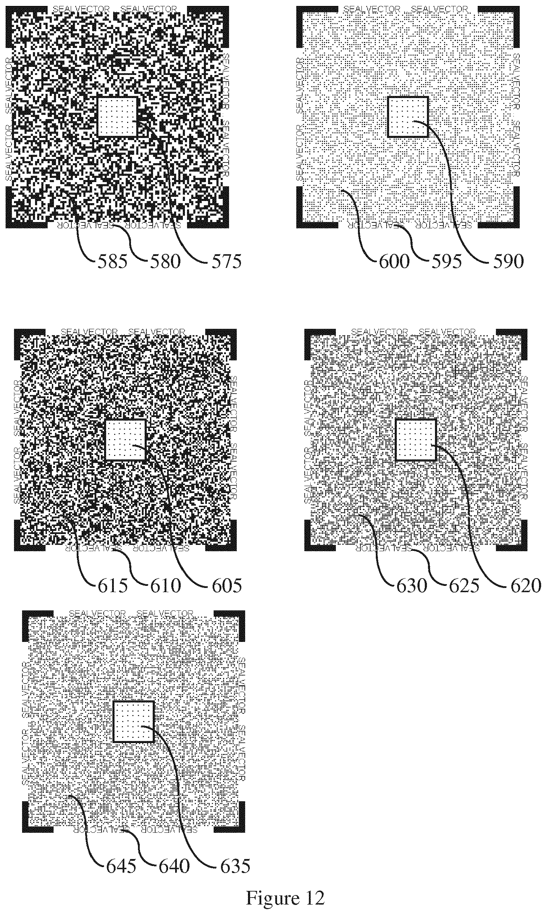

L'asymétrie entre l'effet pénalisant d'une charge d'encre excessive par rapport à l'effet d'une charge d'encre insuffisante, conduit à penser que des MIS contenant une proportion plus faible de pixels marqués seront plus robustes aux variations de charge d'encre. Or, les valeurs des cellules sont en général équiprobables, ceci étant causé par les algorithmes de chiffrement et brouillage qui maximisent l'entropie de la matrice. Pour des matrices binaires contenant des cellules noires ou blanches, on peut toutefois diminuer le nombre de pixels noirs qui constituent une cellule noire. Par exemple, si la cellule fait 4 x 4 pixels, on peut choisir d'en imprimer qu'un sous-ensemble carré de 3 x 3 pixels, ou de 2 x 2 pixels. On diminue alors la densité d'encre par un rapport de 9/16 resp. ¼ (on note que les cellules blanches ne sont pas affectées). D'autres configurations sont possibles. Par exemple, comme illustré dans la figure 12. En figure 12, on observe :

- une MIS 585 dont les cellules font 4 x 4 pixels et la zone imprimée de chaque cellule fait 4 x 4 pixels, entourant une MPCV 575 et entourée de microtexte 580,
- une MIS 600 dont les cellules font 4 x 4 pixels et la zone imprimée de chaque cellule fait 3 x 3 pixels, entourant une MPCV 590 et entourée de microtexte 595,
- une MIS 615 dont les cellules font 3 x 3 pixels et la zone imprimée de chaque cellule fait 3 x 3 pixels, entourant une MPCV 605 et entourée de microtexte 610,
- une MIS 630 dont les cellules font 3 x 3 pixels et la zone imprimée de chaque cellule forme une croix de 5 pixels, entourant une MPCV 620 et entourée de microtexte 625 et
- une MIS 645 dont les cellules font 3 x 3 pixels et la zone imprimée de chaque cellule fait 2 x 2 pixels, entourant une MPCV 635 et entourée de microtexte 640.

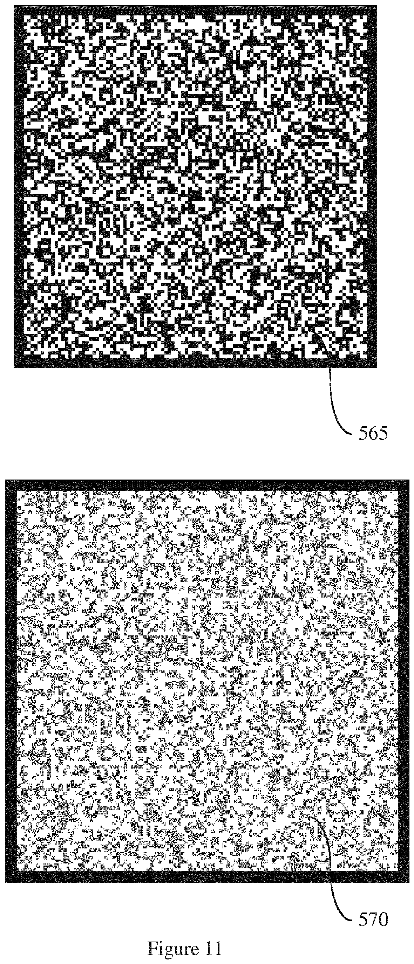

On pourrait aussi imprimer des zones de 2 x 2 ou 1 x 1 pixels sur des cellules dont les côtés font 4 ou 2 pixels, par exemple. Evidemment, des configurations asymétriques ou variables sont également possibles, dans laquelle la variabilité peut remplir d'autres fonctions tel que stockage d'un message ou référence à des fins d'authentification, comme illustré en figure 11, en bas.

Dans ce dernier cas, le message ajouté peut être protégé contre les erreurs et sécurisé d'une façon semblable aux autres messages insérés dans les MIS. Seulement, la modulation différera. Prenons un exemple : un MIS contenant 10.000 cellules, porteuse de message aura en moyenne 5000 cellules noires. Cependant, le nombre exact différera pour chaque message ou clés de chiffrement et brouillage. Il faut donc d'abord générer la MIS comme on le ferait avec des cellules pleines, afin de connaître le nombre exact de pixels à disposition (ce qui, on le rappelle, a un impact direct sur la permutation qui sera appliquée). Ainsi, supposons que dans un cas précis, la MIS compte 4980 cellules noires. Si les cellules font 4x4 pixels, il y aura 4.980*16=79.680 pixels à disposition. Si on souhaite insérer un message de 8 octets, qui totaliserait 176 bits une fois transformé en code convolutionnel avec un taux de 2 et une mémoire de 8, le message peut être répliqué 452 fois (et, partiellement, une 453ème fois). Le message répliqué sera brouillé (soit permuté et passé par une fonction « OU-exclusif »). Afin de minimiser le coût de permutation, une méthode est présentée plus bas. Le message brouillé sera modulé dans les cellules noires du MIS.

La Figure 11 montre, en bas, un exemple de résultat 570 de cette modulation, comparé avec une MIS 565 aux cellules noires qui sont « pleines », en haut de la figure 11.

On note qu'avec cette méthode, on a, statistiquement, 50 % des pixels des cellules noires qui seront chargés d'encre, et donc une diminution de la charge d'encre par un facteur ½. Il serait aisé de varier ce taux de diminution de la charge, par exemple en réservant un certain nombre de pixels par cellules qui auront une valeur prédéterminée, noire ou blanche. Avec un nombre minimum de couleur noire, on évite qu'accidentellement une cellule « noire » n'ait aucun pixel noir.

Ce deuxième niveau de message est très avantageux. Comme il est à plus haute résolution, il comporte un plus grand nombre d'erreurs, mais la redondance plus élevée (de l'ordre de 8 fois plus pour des cellules de 4 x 4 pixels), permet de compenser ce plus grand nombre d'erreurs. Il est beaucoup plus difficile à copier, car il est à très haute résolution, et sa présence même peut être indétectable. Le ou les messages contenus peuvent être chiffrés et brouillés avec des clés différentes, ce qui permet de gérer un plus grand nombre de niveaux de sécurité.

De multiples autres variantes sont possibles, par exemple de diviser une cellule 4 x 4 en quatre zones 2 x 2 : la charge d'encre sera statistiquement la même, par contre la résolution sera moins élevée et le message comportera moins d'erreur, mais aura également une moins grande redondance.

Une MIS peut également contenir plusieurs zones où les densités des cellules varient, de façon à ce qu'au moins une des densités soit adéquate par rapport à la charge d'encre à l'impression. Dans ce cas, la lecture peut se faire en privilégiant les zones ayant la charge d'encre la plus adéquate.

On décrit, ci-après, une méthode d'optimisation conjointe de la taille des cellules et de la densité de charge d'encre des cellules : on teste avec plusieurs couples taille/encrage, on sélectionne, par exemple, ceux qui entrent dans l'intervalle 19-27 % d'erreur. Si plusieurs couples sont sélectionnés, on sélectionne celui qui concerne la résolution la plus élevée.

En ce qui concerne le taux, ou proportion, d'erreurs, il peut être défini par Taux d'erreur = (1-corr)/2, où corr est une mesure correspondant à la corrélation entre le message reçu et le message d'origine, sur une échelle de -1 à 1 (en pratique les valeurs négatives sont très peu probables). Ainsi, pour corr = 0,75 on a aura un taux d'erreur de 0,125 ou 12.5%. On note qu'ici le terme de « corrélation » signifie « ayant la même valeur ». On note aussi que le terme d'erreur utilisé ici est relatif aux erreurs d'impression, aux erreurs dues à la dégradation de la matrice d'information au cours de la vie du document et aux erreurs de lecture de la valeur des cellules de la matrice et, le cas échéant, aux erreurs de copie. Pour minimiser troisième terme (erreurs de lecture), préférentiellement, on effectue plusieurs lectures successives et on retient celle qui présente le plus faible taux d'erreur.

Autrement, pour mesurer le taux d'erreur on peut seuiller l'image de manière adaptative, les valeurs supérieures/inférieures au seuil étant seuillées à blanc/noir. Un seuillage adaptatif permet de préserver davantage d'information, l'image seuillée présentant en général plus de variabilité que si elle est seuillée globalement. Pour appliquer un seuillage adaptatif, on peut, par exemple, calculer un seuil moyen pour l'image, et appliquer un biais local en fonction de la moyenne de luminance d'un entourage de 10 x 10 pixels par exemple. On peut alternativement appliquer un filtrage passe-haut à l'image, puis un filtrage global, pour un effet. Pour déterminer le taux d'erreur dans le cas où l'image a été seuillée, on dénombre simplement le nombre de cellules dont la valeur seuillée ne correspond pas à la valeur attendue.

Dans le cas où la génération, l'impression et/ou la lecture sont effectués en tenant compte des niveaux de gris, chaque cellule possède un taux d'erreur individuel et la corrélation met en oeuvre ce taux d'erreur individuel des cellules.

On rappelle que, pour maximiser la probabilité de détection des copies, les MIS doivent être imprimées à la résolution d'impression aussi proche que possible de l'optimum de dégradation. Or ce dernier est différent selon que la contrainte utilisée dans le modèle est une taille physique fixe ou un nombre de cellules fixe. Or pour une résolution ou taille de cellule donnée, la densité des cellules peut avoir un fort impact sur le taux de dégradation. Ainsi on privilégie la densité de cellule donnant le taux d'erreur le plus faible pour une taille de cellule donnée, même s'il existe une densité donnant un taux d'erreur plus proche de l'optimum. En effet, concernant la densité d'encrage, il est préférentiel de se placer dans les conditions d'impression donnant la meilleure qualité d'impression, de façon à ce que si le contrefacteur utilise le même procédé d'impression, il ne puisse pas imprimer les copies avec une qualité supérieure aux originaux.

Dans l'exemple suivant, nous avons créé six MIS de nombre de cellules identiques (donc avec des tailles physiques différentes), avec six jeux de valeurs taille cellule/densité . Les MIS ont été imprimées en offset pour une résolution de plaque 2.400 ppi, puis lus avec un scanner « flatbed » à 2.400 dpi, donnant une image de bonne qualité afin de minimiser les erreurs de lecture causées par la capture d'image. Le tableau suivant résume les taux d'erreurs moyens obtenus pour les différents paramètres, le taux d'erreur minimal obtenu (MIN) pour chaque taille de cellule, la densité correspondant DMIN, et la différence DIFF entre cette valeur MIN et le taux d'erreur optimum théorique de 19% pour le critère de nombre de cellules fixes. On note que les cases non remplies correspondent à des combinaisons de paramètres impossibles, soit une densité supérieure à la taille de cellule. On note également que la densité « 1 », c'est-à-dire un seul pixel étant imprimé dans chaque cellule, n'a pas été testée, même si celle-ci peut parfois donner de bons résultats.

Le tableau suivant résume les résultats, les nombres indiqués dans les lignes et les colonnes étant des dimensions de côtés de cellule (colonnes) et de zones carrées encrées à l'intérieur des cellules (en lignes) ; ainsi le croisement de la ligne « 3 » avec la colonne « 4 » correspond au cas où seul un carré de 3 x 3 pixels est imprimé dans les cellules de 4 x 4 pixels à encrer :

| Densité/taille cellule | 2 (1200 ppi) | 3 (800 ppi) | 4 (600 ppi) |
|---|---|---|---|
| 2 | 34% | 22% | 12% |
| 3 | - | 26% | 11% |
| 4 | - | - | 22% |
| MIN | 34% | 22% | 11% |
| DMIN | 2 | 2 | 3 |
| DIFF | 15% | 3% | 8% |

On constate que la taille de cellule 3 (colonne « 3 ») avec densité 2 (ligne « 2 ») donne la valeur de taux d'erreur la plus proche de l'optimum de 19%. On remarque que le taux d'erreur pour la densité 4 et taille de cellule 4 est également à 3% de l'optimum, mais comme des taux d'erreurs nettement plus faibles sont obtenus avec les densités de 2 et 3 (comme observé dans les intersection des lignes « 2 » et « 3 » et de la colonne « 4 »), il ne serait pas avantageux de choisir ces paramètres d'impression.

Les étapes suivantes peuvent être mises en oeuvre :

- créer une MIS pour chaque couple taille de cellule/densité candidat
- imprimer, au moins une fois, chaque MIS créé, avec les conditions d'impression qui seront utilisés ultérieurement, pour l'impression du document, par exemple trois fois,
- faire au moins une capture d'au moins une impression de chaque MIS créé, par exemple trois captures,
- calculer le taux d'erreur moyen obtenu pour chaque MIS capturé,
- déterminer le taux d'erreur moyen minimal obtenu MIN pour les différents MIS créés correspondant à une taille de cellule, et sélectionner la densité associée DMIN,
- pour chaque MIN, calculer la différence DIFF en valeur absolue avec l'optimum et
- sélectionner la taille de cellule T obtenant la valeur DIFF la plus faible, et la densité associée DMIN.

En variantes, la taille de cellule étant fixée, la densité pouvant varier OU la densité de cellule étant fixée, taille pouvant varier, on peut utiliser le même algorithme qui se simplifie,

Préférentiellement, si elles sont connues, les caractéristiques d'impression telles que le moyen d'impression, le substrat utilisé, et d'autres paramètres d'impression (tels que la taille de la trame en offset) peuvent être inclus dans un messages porté par la MIS. Ces informations peuvent être utilisées pour une interprétation humaine ou automatique.

Par exemple, quelques bits suffisent en général afin de spécifier si le substrat est du papier, du carton, de l'aluminium, du PVC, du verre, etc. De même, quelques bits suffisent en général pour spécifier si le moyen d'impression est en offset, en typographie, sérigraphie, héliographie, etc. Ainsi, si le moyen d'impression consiste en une technique d'héliographie sur de l'aluminium, on stocke cette information dans la MIS. Au cas où une copie de haute qualité aurait été imprimée sur du bon papier en offset, ce qui pourrait permettre à la copie d'être détectée comme originale car elle est fortement avantagée du point de vue de la qualité d'impression, un opérateur informé du substrat attendu lors de la lecture du MIS peut ainsi constater que le substrat attendu ne correspond pas.

Il existe des méthodes de détermination automatique de la nature de l'impression : par exemple, l'impression offset ou laser laissent des traces spécifiques qui peuvent permettre de déterminer la nature de l'impression de façon automatique sur la base d'une capture et d'un traitement d'image(s). Le résultat de l'application d'une telle méthode peut être comparé de façon automatique aux paramètres de l'impression tels que stockés dans la MIS, et le résultat peut être intégré à la prise de décision sur l'authentification du document.

On décrit, ci-après, des étapes pour la génération et pour la lecture/l'exploitation des informations en question, les « caractéristiques d'impression » pouvant comprendre une mesure de la charge d'encre, ou encore la densité des cellules de la MIS (ces étapes s'appliquent à tous les types de CNA) :

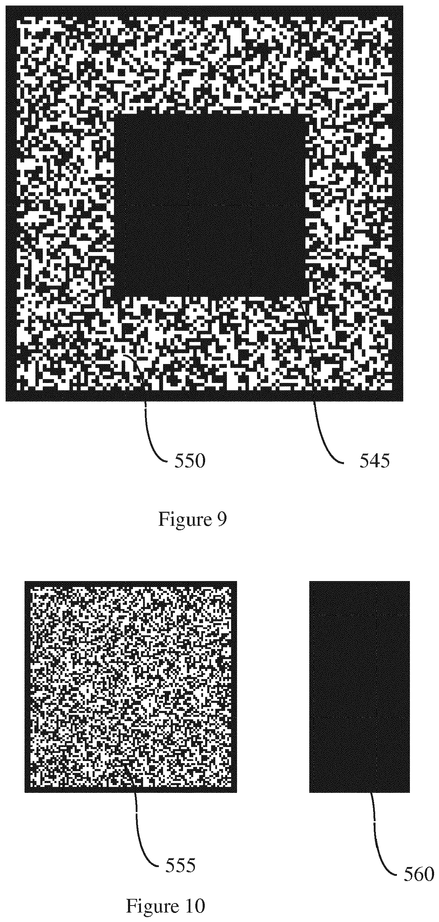

- mesurer automatiquement, sur un CNA ou sur une zone témoin (voir figures 9 et 10), par traitement d'image ou utilisation de signal de sortie d'un densitomètre, par exemple, ou, en variante, faire inscrire par un opérateur, les caractéristiques d'impression,
- recevoir des caractéristiques d'impression d'un CNA,
- coder les caractéristiques d'impression, par exemple en format binaire ou alphanumérique,

- insérer les caractéristiques codées dans le message du CNA et/ou dans le microtexte et
- générer le CNA selon un algorithme connu.

Pour l'exploitation des caractéristiques d'impression :

- mesurer automatiquement sur un CNA ou sur une zone témoin (voir figures 9 et 10), par traitement d'image ou utilisation de signal de sortie d'un densitomètre, par exemple, ou, en variante, faire inscrire par un opérateur, les caractéristiques d'impression,
- recevoir les caractéristiques d'impression d'un CNA,
- lire le CNA,
- extraire les caractéristiques d'impression du message du CNA lu et
- comparer les caractéristiques extraites et les caractéristiques reçues, et prendre une décision sur la nature du document sur la base de cette comparaison.

En variante, l'algorithme ci-dessus n'est appliqué que si le CNA est un déterminé comme original, de manière automatique ou manuelle.

En ce qui concerne la mesure des caractéristiques d'impression, hormis l'encrage, elles ne sont généralement pas variables sur la chaîne d'impression. La mesure peut donc être réalisée sur des témoins non incorporés au documents mais mis en oeuvre pendant une phase de tests et de calibration de la chaîne d'impression.

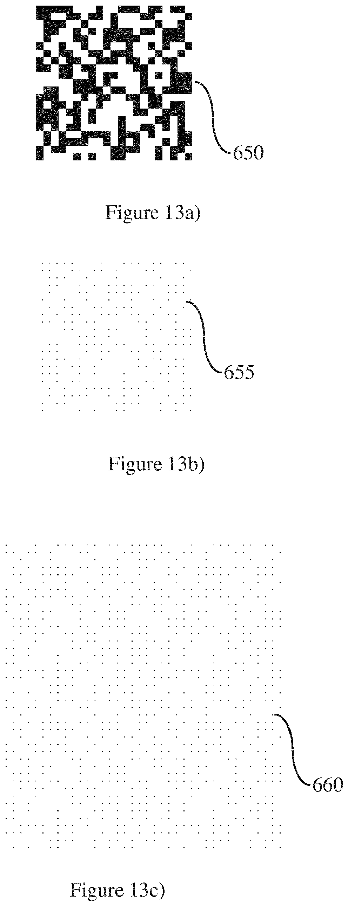

La figure 13a) représente une MIS 650 comportant 21 x 21 cellules représentative d'un message. La figure 13b) représente une MIS 655 de 21 x 21 cellules représentative du même message. La figure 13c) représente la MIS de la figure 13b) tuilée quatre fois pour former une MIS 660.

On va maintenant décrire un mode de réalisation préférentiel des matrices d'informations dans lesquelles on insert une référence de densité d'encre. Les imprimeurs utilisent en général un densitomètre afin de mesurer la densité ou la charge d'encre. Le densitomètre est généralement appliqué sur des rectangles de référence ayant la quantité d'encre maximale, qui sont apposés sur les bordures des feuilles imprimées qui sont écartés à la découpe des documents. Souvent, pour un document (ou produit, emballage, etc.) à imprimer, l'imprimeur reçoit les valeurs limites de densité d'encre : les impressions dont la valeur de densité d'encre est en dehors de la fenêtre permise ne sont pas valables, et l'imprimeur doit en principe les imprimer à nouveau. Si ce n'est pas le cas, c'est-à-dire si l'imprimeur a imprimé les documents sans respecter pour tous les échantillons la fenêtre de densité d'encre, il est fortement souhaitable que cela puisse être détecté sur les documents en circulation : en effet, la lecture peut être corrompue (par exemple, un original peut être détecté comme copie) si la densité d'encre est trop élevée ou trop faible, et le détenteur de droits doit pouvoir être informé qu'il y a un problème de densité d'encre qui est probablement la cause de cette fausse lecture. Cela évite ainsi les conséquences néfastes d'une fausse détection, et peut permettre de tenir pour responsable l'imprimeur qui n'a pas respecté les paramètres d'impression. Cependant, comme dit précédemment les rectangles de référence ont été généralement éliminés lors de la découpe.

Pour mesurer adéquatement la densité d'encre, il faut en général une surface d'approximativement quatre mm$^2$, le diamètre de capture du densitomètre étant d'environ 1,5 mm$^2$. Il est avantageux d'apposer une zone de cette surface à l'intérieur ou à côté du MIS, imprimée avec la couleur utilisée pour la MIS, de façon à pouvoir vérifier si la densité d'encre est adéquate dans l'hypothèse où une lecture de MIS ne donnerait pas le résultat attendu (par exemple une copie). La figure 9 montre une MIS 550 combinée à une zone d'encre pleine 545 est à l'intérieur de la MIS. La figure 10 montre une MIS 555 combinée à une zone d'encre 560 adjacente à la MIS.

Pour la lecture, on peut mettre en oeuvre les étapes suivantes :

- recevoir des bornes inférieure et supérieure de densité d'encres,
- si nécessaire, convertir ces bornes en niveaux de gris correspondants pour les conditions de capture donnée,
- saisir une image de zone de référence de densité d'encre,
- sur l'image, déterminer la valeur de niveau de gris de ladite zone et
- vérifier si ladite valeur est comprise entre lesdites bornes : si oui, retourner un message positif, sinon un message négatif.

On va maintenant décrire une méthodes pour générer des matrices d'information comportant des motifs géométriques, ici des cercles. Une image contenant différent motifs géométriques est générée, préférentiellement en utilisant une clé, et éventuellement un message. Les motifs géométriques et leurs paramètres sont déterminés à partir de la clé.

Pour la création de ces matrices d'information à motifs géométriques, on peut mettre en oeuvre les étapes suivantes :

- générer un ensemble de nombres pseudo-aléatoires à partir de la clé,

- générer une image vide,
- en fonction des nombres générés, déterminer un ensemble de formes géométrique et leur paramètres associés,
- pour chacune des formes géométriques déterminées, insérer les formes géométriques dans l'image vide,

Pour la détection des motifs géométriques, on peut mettre en oeuvre les étapes suivantes :

- générer un ensemble de nombres pseudo-aléatoires à partir de la clé,
- en fonction des nombres générés, déterminer un ensemble de formes géométrique et leurs paramètres associés, dits « paramètres d'origine »,
- pour chacune des formes déterminées, estimer les paramètres de la forme dans l'image et
- mesurer une distance dans une métrique donnée entre les paramètres estimés et les paramètres d'origine de la forme.

On décrit, ci-après, une méthodes pour intégrer des motifs de points à caractéristiques variables.

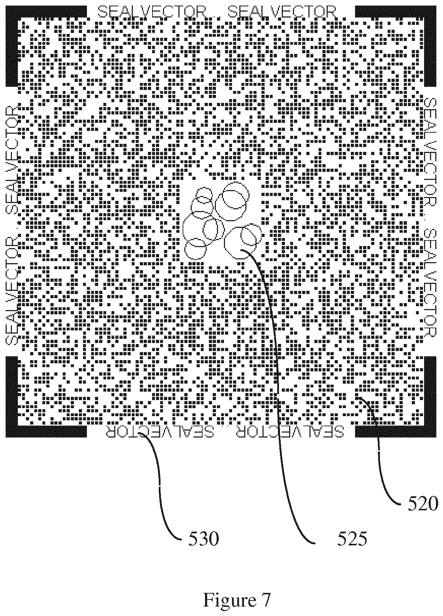

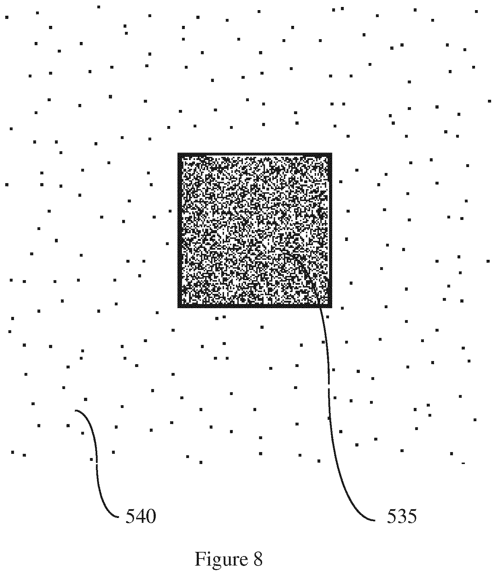

Comme dit précédemment, les MPCV peuvent être utilisés pour la détection de copie, le stockage d'information sécurisée, ainsi que pour l'identification unitaire d'une même image source. Ils offrent notamment un moyen avantageux et complémentaire de sécurisation des documents. La Figure 7 montre une MIS 520 qui comporte une zone centrale dans laquelle est inséré un MPCV 525 mettant en oeuvre des formes géométriques, ici des cercles et des microtextes 530. La figure 8 montre une MIS 535 qui est entouré d'une MPCV 540. On note que dans ce cas, les éléments permettant de localiser le CNA, par exemple ses coins, peuvent être utilisés afin de localiser et déterminer les positions approximatives des points du MPCV. Les figures 12 représentent des MPCV et des MIS combinés.

L'intégration d'un MPCV à une MIS peut également élever le niveau de sécurité, car le contrefacteur devra à la fois vaincre les barrières de sécurité contre la copie de la MIS et du MPCV. Le MIS et le MPCV peuvent être créés par des clés cryptographiques différentes, ainsi la compromission d'une clé n'est pas suffisante pour compromettre l'ensemble du graphique. Par contre les informations contenues peuvent être corrélées, de telle sorte que le MPCV et la MIS sont intrinsèquement liés. Voici un algorithme possible :

- recevoir un message, une clé cryptographique A pour le MPCV, et une clé B pour la MIS,
- créer la MIS à partir du message et de la clé A en réservant un espace prédéterminé pour le MPCV,
- déterminer un second message à partir du message reçu, par exemple un sous-ensemble de celui-ci,
- créer un MPCV à partir du second message et de la clé B et
- insérer le MPCV créé dans la MIS.

Dans un mode de réalisation particulier dans lequel on n'imprime pas toute la surface des cellules, par exemple pour des raisons de densité d'encrage, comme exposé par ailleurs, on module la position de la partie encrée dans la cellule en fonction d'un message, éventuellement aléatoire, comme dans un MPCV. Par exemple une zone encrée représentée par un carré de 3 x 3 pixels, dans une cellule de 4 x 4 pixels, peut prendre quatre positions différentes. On peut ainsi augmenter la capacité de détection de copies et/ou embarquer de l'information supplémentaire dans la matrice.

On va maintenant décrire l'utilisation d'une matrice d'information pour une identification unitaire par l'analyse de la matière. Les méthodes d'identification et d'authentification des documents basées sur la caractérisation de la matière offrent un haut niveau de sécurité. Cependant, ces méthodes peuvent être difficiles à mettre en oeuvre, car sans des marques indiquant la zone du document qui a servi à constituer l'empreinte, il peut être difficile de placer l'outil de lecture correctement de façon à ce qu'une partie correspondante du document soit captée. Or les MIS constituent une référence facilement repérable afin de positionner l'outil de lecture. Ainsi, la zone située au centre de la MIS, dont la position peut être connue avec une grande précision grâce aux motifs de référence de la MIS, peut être utilisée afin de constituer une empreinte de la matière. Ceci peut se faire tout en conservant cette zone pour l'insertion d'un MPCV.

On va maintenant décrire l'intégration de microtexte ou de texte dans une matrice d'information. Le microtexte est généralement représenté sous forme vectorielle. Or les MIS sont des images pixellisées. Par conséquent le microtexte doit être pixellisé afin d'être incorporé aux MIS. Afin de conserver autant que possible la précision du texte, il est préférable de représenter le MIS à la résolution maximale possible. Par exemple, un MIS de 110 x 110 pixels destiné à être imprimé à 600 ppi, devrait, si le moyen d'impression le permet, être redimensionné à 4 fois sa taille (440 x 440 pixels), afin d'être imprimé à 2.400 ppi.

Les MIS sont souvent munis d'un cadre de couleur noire ou offrant un contraste avec l'environnement immédiat de la matrice, facilitant leur détection dans l'image captée. Or il s'avère que, si les coins du cadre sont très utiles en pratique (la détermination des positions de chacun des coins permettant la localisation précise de la MIS), les parties centrales du cadre sont peu utiles. Elles peuvent être avantageusement remplacées par du microtexte. Par exemple, si la bordure fait 3 pixels pour une impression à 600 ppi, et donc 12 pixels pour une impression à 2.400 ppi, le microtexte peut faire jusqu'à 11 pixels de haut (on laisse préférablement un pixel pour la marge avec l'intérieur de la matrice).

Dans le cas d'une MIS carrée ou rectangulaire, et si le microtexte inscrit sur les quatre côtés est identique (par exemple le nom du détenteur de droit, du produit, etc.), il peut être avantageux d'orienter le texte de telle façon que quelque soit l'orientation dans laquelle la MIS est observée ou capturée, la lecture du texte peut se faire normalement. Les Figures 7 et 12 illustrent une telle matrice.

Des zones à l'intérieur de la matrice peuvent également être réservées pour l'insertion du microtexte. Dans ce cas, les unités de création et de lecture des MIS doivent être informées des zones contenant du microtexte, afin d'ajuster la modulation et la démodulation du ou des messages de manière appropriée.

Dans le cas où le moyen d'impression permet de faire varier l'image et donc la MIS imprimée à chaque impression (ce qui est notamment possible pour les moyens d'impression numérique), le microtexte peut être modifié à chaque impression. Dans ce cas, le microtexte peut, par exemple, contenir un identifiant, un numéro de série, un numéro unique, ou tout autre texte, notamment un texte permettant de relier la MIS au reste du document. Si le document est une carte d'identité, le microtexte peut, par exemple, contenir le nom de son détenteur. Si le document est un emballage, le microtexte peut contenir la date de péremption, le numéro de lot, le nom de la marque et du produit, etc.

On décrit, ci-dessous, des étapes pour l'intégration de microtexte variable dans une MIS :

- recevoir un message, une clé cryptographique, éventuellement une fonte, des zones réservées au microtexte avec orientation associée du texte,
- créer une image de MIS en fonction du message reçu et de la clé, des zones réservées,
- générer une image microtexte en fonction du message reçu et
- insérer l'image contenant le microtexte dans chaque zone réservée, éventuellement en appliquant une rotation multiple de 90 degrés en fonction de l'orientation associée du texte.

En option, le message utilisé pour le microtexte est un sous-ensemble du message reçu. En autre option, le message est chiffré avec la clé reçue avant de générer le microtexte.

On observe que, en variante, le contenu du microtexte est, à l'impression une fonction du contenu de la matrice d'information ou que, inversement, le contenu de la matrice d'information peut être une fonction du contenu du microtexte. Les fonctions considérées peuvent être des fonctions cryptographiques, par exemple. Par exemple, le contenu du microtexte peut, à la lecture, servir de clé cryptographique pour la détermination du contenu de la matrice d'information.

Le microtexte est, en principe, destiné à être lu et interprété par un humain ; cependant, le microtexte peut également être lu de manière automatique par un moyen de capture d'images et un logiciel de reconnaissance de caractères optiques. Dans ce cas, ce logiciel peut fournir un résultat sous forme textuelle, résultat qui peut être comparé de manière automatique à d'autres type d'informations fournies : données extraites de la MIS, ou d'autres symboles inscrits sur le document, etc.

On va maintenant décrire l'insertion de matrices d'information dans des codes à barres. De façon similaire à l'insertion d'un message réparti dans l'ensemble des cellules d'une MIS, une MIS peut elle-même être inséré dans les cellules d'un code-barre 2D, par exemple un Datamatrix (marque déposée). Comme les MIS ont une charge d'encre élevée, en principe elles ne perturberont pas la lecture du code-barre 2D.

Dans une variante avantageuse, chaque cellule noire d'un Datamatrix contient une MIS. Si les contraintes de l'application le permettent, chaque MIS comporte un message différent, dont, par exemple, une partie est fixe et l'autre partie comporte un indice qui peut être associé à la position de la cellule dans le Datamatrix.

**Revendications**

1. Procédé de sécurisation d'un document, **caractérisé en ce qu'**il comporte :

   - une étape (190) de détermination de conditions d'impression dudit document définies au moins par une résolution native d'un moyen d'impression, la résolution native définissant un pixel,
   - une étape (185, 200, 205) de détermination de caractéristiques physiques de cellules d'une matrice, en fonction des conditions d'impression, de telle manière que la proportion de cellules imprimées avec une erreur d'impression provenant exclusivement des aléas d'impression soit proche d'un taux d'erreurs optimum ; comportant :

     - une étape (200) de définition du taux d'erreurs optimum, une erreur d'impression étant une modification de l'apparence d'une cellule qui modifie l'interprétation de l'information portée par cette cellule, lors d'une analyse, par exemple microscopique, affranchie des erreurs de lecture ou capture par traitement d'image et comparaison de l'information portée par au moins une cellule prédéfinie avant impression et l'information portée par chaque dite cellule après impression, comportant une évaluation d'un indice probabiliste d'écart entre les taux d'erreurs d'originaux et de copies de ces originaux faites dans les mêmes conditions d'impression, normalisé par l'écart-type du nombre d'erreurs des originaux, le taux d'erreurs optimum correspondant à l'optimum de l'indice,
- une étape (205) de mesure, pour une pluralité de matrices comportant des cellules présentant différentes dimensions en pixels et/ou différentes configurations de pixels dans des cellules, de taux d'erreurs d'impression avec lesdites conditions d'impression, comportant

l'impression de la pluralité de matrices, dans lesdites conditions d'impression,
la capture d'image des matrices imprimées et
la mesure, par traitement d'images, du taux d'erreurs dans les images captées,

- une étape (205) de sélection d'une matrice parmi la pluralité de matrices, correspondant à un taux d'erreurs d'impression mesuré parmi les plus proches du taux d'erreurs optimum ;

ledit procédé comportant, en outre :

- une étape (210 à 240) de représentation d'une information en faisant varier l'apparence de cellules de la matrice sélectionnée (405, 410, 505, 520, 535, 550, 555, 565, 570, 585, 600, 615, 630, 645, 650, 655, 660, 665), et
- une étape (245) d'impression de ladite matrice représentant l'information en mettant en oeuvre lesdites conditions d'impression, ladite matrice imprimée étant adaptée à permettre la détection d'une copie modifiant l'apparence d'une pluralité desdites cellules.

2. Procédé selon la revendication 1, **caractérisé en ce que**, au cours de l'étape de détermination (185, 200, 205) des caractéristiques physiques de cellules, on détermine la dimension des cellules à imprimer.

3. Procédé selon l'une quelconque des revendications 1 ou 2, **caractérisé en ce que**, au cours de l'étape de détermination (185, 200, 205) des caractéristiques physiques de cellules, on détermine une configuration de pixels formant une sous-partie des cellules, sous-partie qui est d'une couleur uniforme et variable pour représenter différentes valeurs d'une information, ladite sous-partie étant strictement inférieure à ladite cellule.

4. Procédé selon la revendication 3, **caractérisé en ce que** le taux d'erreurs optimum correspondant à l'optimum de l'indice est égal à 19,1 %.

5. Procédé selon la revendication 3, **caractérisé en ce que** le taux d'erreurs optimum correspondant à l'optimum de l'indice est égal à 27,1 %.

6. Procédé selon l'une quelconque des revendications 1 à 5, **caractérisé en ce que**, au cours de l'étape d'impression, on imprime, en plus de la matrice d'informations, une marque complémentaire robuste portant un message.

7. Procédé selon l'une quelconque des revendications 1 à 6, **caractérisé en ce que** l'étape (210 à 240) de représentation comporte une étape de génération d'une matrice d'informations numérique représentative d'un message comportant des codes de détection d'erreurs en proportion suffisante pour permettre la détection d'une proportion d'erreurs supérieure au taux d'erreurs optimum.

8. Procédé selon l'une quelconque des revendications 1 à 7, **caractérisé en ce que** l'étape (210 à 240) de représentation comporte une étape de génération d'une matrice d'informations numérique représentative d'un message comportant des codes de correction d'erreurs en proportion suffisante pour permettre la correction d'une proportion d'erreurs supérieure au taux d'erreurs optimum.

9. Procédé selon l'une quelconque des revendications 1 à 8, **caractérisé en ce que** l'étape (210 à 240) de représentation comporte une étape de génération d'une matrice d'informations au cours de laquelle on chiffre un message avec une clé de chiffrement.

10. Procédé selon l'une quelconque des revendications 7 à 9, **caractérisé en ce que**, au cours de l'étape de génération de la matrice d'informations, on permute des positions d'éléments de représentation dudit message en fonction d'une clé secrète.

11. Procédé selon l'une quelconque des revendications 7 à 10, **caractérisé en ce que**, au cours de l'étape de génération de la matrice d'informations, on applique, à au moins une partie des éléments d'une représentation dudit message, une fonction de substitution de valeur dépendant, d'une part, de la valeur de l'élément et, d'autre part, de la valeur d'un élément d'une clé secrète.

12. Procédé selon l'une quelconque des revendications 7 à 11, **caractérisé en ce que**, au cours de l'étape de génération de la matrice d'informations, on met en oeuvre au moins une clé de chiffrement différente de la clé de déchiffrement associée nécessaire pour récupérer le message.

13. Procédé selon l'une quelconque des revendications 7 à 12, **caractérisé en ce que**, au cours de l'étape de génération de la matrice d'informations, on génère une matrice d'information numérique représentative d'au moins deux messages dotés de moyens de sécurité différents.

14. Procédé selon la revendication 13, **caractérisé en ce que** l'un desdits messages représente des informations nécessaires pour, à la lecture de la matrice d'informations, déterminer l'autre message et/ou détecter les erreurs de l'autre message.

15. Dispositif de sécurisation d'un document, **caractérisé en ce qu'**il comporte :

- un moyen de détermination de conditions d'impression dudit document définies au moins par une résolution native d'un moyen d'impression, la résolution native définissant un pixel,
- un moyen de détermination de caractéristiques physiques de cellules d'une matrice, en fonction des conditions d'impression, de telle manière que la proportion de cellules imprimées avec une erreur d'impression provenant exclusivement des aléas d'impression soit proche d'un taux d'erreurs optimum ; comportant :

- un moyen de définition du taux d'erreurs optimum, une erreur d'impression étant une modification de l'apparence d'une cellule qui modifie l'interprétation de l'information portée par cette cellule, lors d'une analyse, par exemple microscopique, affranchie des erreurs de lecture ou capture par traitement d'image et comparaison de l'information portée par au moins une cellule prédéfinie avant impression et l'information portée par chaque dite cellule après impression, comportant une évaluation d'un indice probabiliste d'écart entre les taux d'erreurs d'originaux et de copies de ces originaux faites dans les mêmes conditions d'impression, normalisé par l'écart-type du nombre d'erreurs des originaux, le taux d'erreurs optimum correspondant à l'optimum de l'indice,
- un moyen de mesure, pour une pluralité de matrices comportant des cellules présentant différentes dimensions en pixels et/ou différentes configurations de pixels dans des cellules, de taux d'erreurs d'impression avec lesdites conditions d'impression, comportant

l'impression de la pluralité de matrices, dans lesdites conditions d'impression,
la capture d'image des matrices imprimées et
la mesure, par traitement d'images, du taux d'erreurs dans les images captées,

- un moyen de sélection d'une matrice parmi la pluralité de matrices, correspondant à un taux d'erreurs d'impression mesuré parmi les plus proches du taux d'erreurs optimum ;

ledit dispositif comportant, en outre :

- un moyen de représentation d'une information en faisant varier l'apparence de cellules de la matrice sélectionnée, et
- un moyen d'impression de ladite matrice représentant l'information en mettant en oeuvre lesdites conditions d'impression, ladite matrice imprimée étant adaptée à permettre la détection d'une copie modifiant l'apparence d'une pluralité desdites cellules.

**Patentansprüche**

1. Sicherungsverfahren eines Dokuments, **dadurch gekennzeichnet, dass** es umfasst:

- einen Schritt (190) zur Bestimmung von Druckbedingungen des genannten Dokuments, die wenigstens durch eine native Auflösung eines Druckmittels definiert sind, wobei die native Auflösung ein Pixel definiert,
- einen Schritt (185, 200, 205) zur Bestimmung von physischen Merkmalen von Zellen einer Matrix in Abhängigkeit von den Druckbedingungen derart, dass der Anteil von Zellen, die mit einem Druckfehler bedruckt sind, der ausschließlich aus den Unwägbarkeiten des Drucks stammt, einer optimalen Fehlerrate nahe kommt; umfassend:

- einen Schritt (200) zur Definition der optimalen Fehlerrate, wobei ein Druckfehler eine Änderung des Erscheinungsbildes einer Zelle ist, die die Interpretation der von dieser Zelle vermittelten Information ändert, bei einer Analyse, z. B. per Mikroskopie, die um Lese- oder Erfassungsfehler per Bildbearbeitung bereinigt ist, und Vergleich der von wenigstens einer vordefinierten Zelle vermittelten Information vor und der von jeder genannten Zelle vermittelten Information nach dem Druck, umfassend eine Beurteilung eines Wahrscheinlichkeitsindexes der Abweichung zwischen den ursprünglichen Fehlerraten und den Kopien dieser Originale, die unter denselben Druckbedingungen hergestellt sind, normalisiert durch die typischen Abweichung der Fehleranzahl der Originale, wobei die optimale Fehlerrate dem Optimum des Indexes entspricht,
- einen Schritt (205) zur Messung für eine Vielzahl von Matrizen, umfassend Zellen, die unterschiedliche Abmessungen in Pixel und / oder unterschiedliche Pixelkonfigurationen in Zellen, Druckfehlersätzen mit den genannten Druckbedingungen aufweisen, umfassend

den Druck der Vielzahl von Matrizen unter den genannten Druckbedingungen,
die Bilderfassung der bedruckten Matrizen und
die Messung der Fehlerrate in den erfassten Bildern per Bildbearbeitung,

- einen Schritt (205) zur Auswahl einer Matrix aus der Vielzahl von Matrizen, die einer gemessenen Druckfehlerrate aus den nächsten optimalen Fehlerraten entspricht;

wobei das genannte Verfahren darüber hinaus umfasst:
- einen Schritt (210 bis 240) zur Darstellung einer Information per Variieren des Erscheinungsbildes von Zellen der ausgewählten Matrix (405, 410, 505, 520, 535, 550, 555, 565, 570, 585, 600, 615, 630, 645, 650, 655, 660, 665), und
- einen Schritt (245) zum Drucken der die Information darstellenden Matrix darstellt, durch Umsetzen der genannten Druckbedingungen, wobei die genannte bedruckte Matrix geeignet ist, um die Detektion einer Kopie zu erlauben, die das Erscheinungsbild einer Vielzahl der genannten Zellen ändert.

2. Verfahren gemäß Anspruch 1, **dadurch gekennzeichnet, dass** im Verlauf des Schritts zur Bestimmung (185, 200, 205) der physischen Merkmale von Zellen die Abmessung der zu druckenden Zellen bestimmt wird.

3. Verfahren gemäß irgendeinem der Ansprüche 1 oder 2, **dadurch gekennzeichnet, dass** im Verlauf des Schritts zur Bestimmung (185, 200, 205) der physischen Merkmale von Zellen eine Pixelkonfiguration bestimmt wird, die einen Unterteil der Zellen bildet, wobei der Unterteil eine einheitliche und variable Farbe aufweist, um unterschiedliche Werte einer Information darzustellen, wobei der genannte Unterteil strikt unter der genannten Zelle ist.

4. Verfahren gemäß Anspruch 3, **dadurch gekennzeichnet, dass** die optimale Fehlerrate, die dem Optimum des Indexes entspricht, gleich 19,1 % ist.

5. Verfahren gemäß Anspruch 3, **dadurch gekennzeichnet, dass** die optimale Fehlerrate, die dem Optimum des Indexes entspricht, gleich 27,1 % ist.

6. Verfahren gemäß irgendeinem der Ansprüche 1 bis 5, **dadurch gekennzeichnet, dass** im Verlauf des Druckschritts zusätzlich zu der Informationsmatrix eine solide, komplementäre Marke gedruckt wird, die eine Nachricht trägt.

7. Verfahren gemäß irgendeinem der Ansprüche 1 bis 6, **dadurch gekennzeichnet, dass** der Schritt (210 bis 240) zur Darstellung einen Schritt zum Erzeugen einer digitalen Informationsmatrix umfasst, die eine Nachricht darstellt, die Fehlerdetektionscodes in ausreichendem Maß umfasst, um die Detektion eines Fehleranteils zu erlauben, der höher ist als die optimale Fehlerrate.

8. Verfahren gemäß irgendeinem der Ansprüche 1 bis 7, **dadurch gekennzeichnet, dass** der Schritt (210 bis 240) zur Darstellung einen Schritt zum Erzeugen einer digitalen Informationsmatrix umfasst, die eine Nachricht darstellt, die Fehlerdetektionscodes in ausreichendem Maß umfasst, um die Detektion eines Fehleranteils zu erlauben, der höher ist als die optimale Fehlerrate.

**9.** Verfahren gemäß irgendeinem der Ansprüche 1 bis 8, **dadurch gekennzeichnet, dass** der Schritt (210 bis 240) zur Darstellung einen Schritt zum Erzeugen einer Informationsmatrix umfasst, in deren Verlauf eine Nachricht mit einem Verschlüsselungsschlüssel beziffert wird.

**10.** Verfahren gemäß irgendeinem der Ansprüche 7 bis 9, **dadurch gekennzeichnet, dass** im Verlauf des Schritts zum Erzeugen der Informationsmatrix die Positionen von Darstellungselementen der genannten Nachricht in Abhängigkeit von einem geheimen Schlüssel vertauscht werden.

**11.** Verfahren gemäß irgendeinem der Ansprüche 7 bis 10, **dadurch gekennzeichnet, dass** im Verlauf des Schritts zum Erzeugen der Informationsmatrix auf wenigstens einen Teil der Elemente einer Darstellung der genannten Nachricht eine Wertsubstitutionsfunktion angewendet wird, die einerseits von dem Wert des Elements und andererseits von dem Wert eines Elements eines geheimen Schlüssels abhängt.

**12.** Verfahren gemäß irgendeinem der Ansprüche 7 bis 11, **dadurch gekennzeichnet, dass** im Verlauf des Schritts zum Erzeugen der Informationsmatrix wenigstens ein Verschlüsselungsschlüssel umgesetzt wird, der von dem zugeordneten Verschlüsselungsschlüssel unterschiedlich ist, der zum Abrufen der Nachricht notwendig ist.

**13.** Verfahren gemäß irgendeinem der Ansprüche 7 bis 12, **dadurch gekennzeichnet, dass** im Verlauf des Schritts zum Erzeugen der Informationsmatrix eine digitale Informationsmatrix erzeugt wird, die wenigstens zwei Nachrichten darstellt, die mit unterschiedlichen Sicherheitsmitteln versehen sind.

**14.** Verfahren gemäß Anspruch 13, **dadurch gekennzeichnet, dass** eine der genannten Nachrichten Informationen darstellt, die notwendig sind, um beim Lesen der Informationsmatrix die andere Nachricht zu bestimmen und / oder die Fehler der anderen Nachricht zu detektieren.

**15.** Sicherungsvorrichtung eines Dokuments, **dadurch gekennzeichnet, dass** sie umfasst:

- ein Mittel zur Bestimmung von Druckbedingungen des genannten Dokuments, die wenigstens durch eine native Auflösung eines Druckmittels definiert sind, wobei die native Auflösung ein Pixel definiert,
- ein Mittel zur Bestimmung von physischen Merkmalen von Zellen einer Matrix in Abhängigkeit von den Druckbedingungen derart, dass der Anteil von Zellen, die mit einem Druckfehler bedruckt sind, der ausschließlich aus den Unwägbarkeiten des Drucks stammt, einer optimalen Fehlerrate nahe kommt; umfassend:

- ein Mittel zur Definition der optimalen Fehlerrate, wobei ein Druckfehler eine Änderung des Erscheinungsbildes einer Zelle ist, die die Interpretation der von dieser Zelle vermittelten Information ändert, bei einer Analyse, z. B. per Mikroskopie, die um Lese- oder Erfassungsfehler per Bildbearbeitung bereinigt ist, und Vergleich der von wenigstens einer vordefinierten Zelle vermittelten Information vor und der von jeder genannten Zelle vermittelten Information nach dem Druck, umfassend eine Beurteilung eines Wahrscheinlichkeitsindexes der Abweichung zwischen den ursprünglichen Fehlerraten und den Kopien dieser Originale, die unter denselben Druckbedingungen hergestellt sind, normalisiert durch die typische Abweichung der Fehleranzahl der Originale, wobei die optimale Fehlerrate dem Optimum des Indexes entspricht,
- ein Mittel zur Messung für eine Vielzahl von Matrizen, umfassend Zellen, die unterschiedliche Abmessungen in Pixel und / oder unterschiedliche Pixelkonfigurationen in Zellen, Druckfehlersätzen mit den genannten Druckbedingungen aufweisen, umfassend

den Druck der Vielzahl von Matrizen unter den genannten Druckbedingungen,
die Bilderfassung der bedruckten Matrizen und
die Messung der Fehlerrate in den erfassten Bildern per Bildbearbeitung,

- ein Mittel zur Auswahl einer Matrix aus der Vielzahl von Matrizen, die einer gemessenen Druckfehlerrate aus den nächsten optimalen Fehlerraten entspricht; wobei die genannte Vorrichtung darüber hinaus umfasst:

- ein Mittel zur Darstellung einer Information durch Variieren des Erscheinungsbildes von Zellen der ausgewählten Matrix, und
- ein Mittel zum Drucken der die Information darstellenden Matrix, durch Umsetzen der genannten Druckbedingungen, wobei die genannte gedruckte Matrix geeignet ist, um die Detektion einer Kopie zu erlauben, die das Erscheinungsbild einer Vielzahl der genannten Zellen ändert.

**Claims**

1. Method for securing a document, **characterized in that** it comprises:

   - a step (190) of determining print conditions of said document defined at least by a native resolution of a printing means, the native resolution defining one pixel;
   - a step (185, 200, 205) of determining physical characteristics of cells in a matrix, as a function of the print conditions, such that the proportion of cells printed with a print error coming solely from unanticipated unknowns in printing is close to an optimum error rate; comprising:

     - a step (200) of defining an optimum error rate, a print error being an alteration in a cell's appearance that modifies the interpretation of the information borne by this cell, during an analysis, for example microscopic, free from reading errors or capture by image processing and comparison of the information borne by at least one predefined cell before printing and the information borne by each said cell after printing, comprising an evaluation of a probabilistic gap ratio between the error rate of originals and copies of these originals made under the same print conditions, normalized by the standard deviation of the number of errors of the originals, the optimum error rate corresponding to the optimum of the ratio;
     - a step (205) of measuring, for a plurality of matrices comprising cells having different dimensions in pixels and/or different configurations of pixels in cells, print error rates with said print conditions, comprising

       the printing of the plurality of matrices, under said print conditions,
       the image capture of the printed matrices, and
       the measurement, by image processing, of the rate of errors in the images captured,

     - a step (205) of selecting a matrix from the plurality of matrices, corresponding to a measured print error rate among those closest to the optimum error rate; said method further comprising:

     - a step (210 to 240) of representing an item of information by varying the appearance of cells in the selected matrix (405, 410, 505, 520, 535, 550, 555, 565, 570, 585, 600, 615, 630, 645, 650, 655, 660, 665); and
     - a step (245) of printing said matrix representing the item of information by utilizing said print conditions, said printed matrix being designed to enable the detection of a copy altering the appearance of a plurality of said cells.

2. Method according to claim 1, **characterized in that**, during the step (185, 200, 205) of determining the physical characteristics of cells, the dimension of the cells to be printed is determined.

3. Method according to any one of claims 1 or 2, **characterized in that**, during the step (185, 200, 205) of determining the physical characteristics of cells, a sub-section of the cells is determined, which sub-section has a uniform and variable color for representing different values of an item of information, said sub-section being strictly smaller than said cell.

4. Method according to claim 3, **characterized in that** the optimum error rate corresponding to the optimum value of the ratio is equal to 19.1%.

5. Method according to claim 3, **characterized in that** the optimum error rate corresponding to the optimum value of the ratio is equal to 27.1%.

6. Method according to any one of claims 1 to 5, **characterized in that**, during the print step, in addition to the information matrix, a robust additional mark bearing a message is printed.

7. Method according to any one of claims 1 to 6, **characterized in that** the representation step (210 to 240) comprises a step of generating a digital information matrix representative of a message comprising error detection codes in a sufficient proportion to enable the detection of a proportion of errors greater than the optimum error rate.

8. Method according to any one of claims 1 to 7, **characterized in that** the representation step (210 to 240) comprises a step of generating a digital information matrix representative of a message comprising error correction codes in a sufficient proportion to enable the correction of a proportion of errors greater than the optimum error rate.

9. Method according to any one of claims 1 to 8, **characterized in that** the representation step (210 to 240) comprises a step of generating an information matrix during which a message is encrypted with an encryption key.

10. Method according to any one of claims 7 to 9, **characterized in that**, during the information matrix generation step, the positions of elements of representation of said message are swapped according to a secret key.

11. Method according to any one of claims 7 to 10, **characterized in that**, during the information matrix generation step, a value substitution function, dependent firstly on the value of the element and secondly on the value of an element of a secret key, is applied to at least one part of the elements of a representation of said message.

12. Method according to any one of claims 7 to 11, **characterized in that**, during the information matrix generation step, at least one encryption key is utilized, different from the associated decryption key needed to retrieve the message.

13. Method according to any one of claims 7 to 12, **characterized in that**, during the information matrix generation step, a digital information matrix is generated representing at least two messages provided with different means of security.

14. Method according to claim 13, **characterized in that** one of said messages represents information required, on reading the information matrix, to determine the other message and/or detect the other message's errors.

15. Device for securing a document, **characterized in that** it comprises:

- a means for determining print conditions of said document defined at least by a native resolution of a printing means, the native resolution defining one pixel;
- a means for determining physical characteristics of cells of a matrix, as a function of the print conditions, such that the proportion of cells printed with a print error coming solely from unanticipated unknowns in printing is close to an optimum error rate; comprising:

- a means for defining an optimum error rate, a print error being an alteration in a cell's appearance that modifies the interpretation of the information borne by this cell, during an analysis, for example microscopic, free from reading errors or capture by image processing and comparison of the information borne by at least one predefined cell before printing and the information borne by each said cell after printing, comprising an evaluation of a probabilistic gap ratio between the error rate of originals and copies of these originals made under the same print conditions, normalized by the standard deviation of the number of errors of the originals, the optimum error rate corresponding to the optimum of the ratio;
- a means for measuring, for a plurality of matrices comprising cells having different dimensions in pixels and/or different configurations of pixels in cells, print error rates with said print conditions, comprising

the printing of the plurality of matrices, under said print conditions,
the image capture of the printed matrices, and
the measurement, by image processing, of the rate of errors in the images captured,

- a means for selecting a matrix from the plurality of matrices, corresponding to a measured print error rate among those closest to the optimum error rate;

said device further comprising:

- a means for representing an item of information by varying the appearance of cells in the selected matrix; and
- a means for printing said matrix representing the item of information by utilizing said print conditions, said printed matrix being designed to enable the detection of a copy altering the appearance of a plurality of said cells.

Impression 105

Acquisition 110

Détection
d'original

Impression 105

Acquisition 110

Impression 115

125

Acquisition 120

Détection
de copie

Figure 1

```
┌─────────────────────────────────┐
│           Démarrage             │⌐185
└─────────────────────────────────┘
                │
                ▼
┌─────────────────────────────────┐
│      Réception ou mesure de     │
│   caractéristique(s) d'impression│⌐190
└─────────────────────────────────┘
                │
                ▼
┌─────────────────────────────────┐
│   Surface ou nombre de cellule fixé│⌐195
└─────────────────────────────────┘
                │
                ▼
┌─────────────────────────────────┐
│   Détermination de densité d'encrage│⌐200
└─────────────────────────────────┘
                │
                ▼
┌─────────────────────────────────┐
│   Détermination de taille de cellules│⌐205
└─────────────────────────────────┘
                │
                ▼
┌─────────────────────────────────┐
│      Réception du message       │⌐210
└─────────────────────────────────┘
                │
                ▼
┌─────────────────────────────────┐
│        Réception de clé(s)       │⌐215
└─────────────────────────────────┘
                │
                ▼
┌─────────────────────────────────┐
│  Chiffrement du message avec une clé│⌐220
└─────────────────────────────────┘
                │
                ▼
┌─────────────────────────────────┐
│     Encodage du message chiffré  │⌐225
└─────────────────────────────────┘
                │
                ▼
┌─────────────────────────────────┐
│           Réplication           │⌐230
└─────────────────────────────────┘
                │
                ▼
┌─────────────────────────────────┐
│        Permutation avec clé      │⌐235
└─────────────────────────────────┘
                │
                ▼
┌─────────────────────────────────┐
│        Substitution avec clé     │⌐240
└─────────────────────────────────┘
                │
                ▼
┌─────────────────────────────────┐
│ Impression de la matrice d'information│⌐245
└─────────────────────────────────┘
                │
                ▼
┌─────────────────────────────────┐
│              Fin                │
└─────────────────────────────────┘
```

Figure 2

```
┌─────────────────────────────────┐
│           Démarrage             │ ╮─305
└─────────────────────────────────┘
                 │
                 ▼
┌─────────────────────────────────┐
│       Réception de clé(s)        │ ╮─310
└─────────────────────────────────┘
                 │
                 ▼
┌─────────────────────────────────┐
│     Réception d'image captée     │ ╮─315
└─────────────────────────────────┘
                 │
                 ▼
┌─────────────────────────────────┐
│     Localisation de la marque    │ ╮─320
└─────────────────────────────────┘
                 │
                 ▼
┌─────────────────────────────────┐
│     Localisation des cellules    │ ╮─325
└─────────────────────────────────┘
                 │
                 ▼
┌─────────────────────────────────┐
│        Substitution avec clé     │ ╮─330
└─────────────────────────────────┘
                 │
                 ▼
┌─────────────────────────────────┐
│       Permutation avec clé       │ ╮─335
└─────────────────────────────────┘
                 │
                 ▼
┌─────────────────────────────────┐
│      Accumulation de valeurs     │ ╮─340
└─────────────────────────────────┘
                 │
                 ▼
┌─────────────────────────────────┐
│     Décodage avec redondances    │ ╮─345
└─────────────────────────────────┘
                 │
                 ▼
┌─────────────────────────────────┐
│          Déchiffrement           │ ╮─350
└─────────────────────────────────┘
                 │
                 ▼
┌─────────────────────────────────┐
│   Décompte du quantité d'erreurs │ ╮─355
└─────────────────────────────────┘
                 │
                 ▼
┌─────────────────────────────────┐
│   Détermination original/copie   │ ╮─360
└─────────────────────────────────┘
                 │
                 ▼
┌─────────────────────────────────┐
│               Fin               │
└─────────────────────────────────┘
```

Figure 3

Figure 4A

Figure 4B

505

Figure 5A

510

Figure 5B

515

Figure 6

Figure 7

Figure 8

550    545

Figure 9

555    560

Figure 10

565

570

Figure 11

Figure 12

650

Figure 13a)

655

Figure 13b)

660

Figure 13c)

665

Figure 14

Figure 15    670

Figure 16 — 680

Figure 17 — 685

690

Figure 18

695

Figure 19

Figure 20

## RÉFÉRENCES CITÉES DANS LA DESCRIPTION

**Documents brevets cités dans la description**

- US 20030156733 A
- US 6775409 B
- EP 1801692 A
- US 5296690 A

**Littérature non-brevet citée dans la description**

- **LIN ; COSTELLO.** Error Control Coding
- **GONZALES ; WOODS ; EDDIN.** *Digital Image Processing using matlab*